# EUROPEAN PATENT APPLICATION

(11) **EP 0 183 196 A2**
(43) Date of publication of application: **04.06.1986**
(21) Application number: 85114803.1
(22) Date of filing: 21.11.1985
(51) Int. Cl.: G06F 13/36

(54) **Bus system**

(30) Priority: 28.11.1984 US 675800
(71) Applicant: Hewlett-Packard Company, Palo Alto, California 94304 (US)
(72) Inventor: Wheelwright, Lynn M., Santa Rosa California 95404 (US); Harmon, William B., Santa Rosa California 95401 (US); Coffron, James W., Santa Rosa California 95405 (US)
(74) Representative: KOHLER SCHMID + PARTNER

(57) **Abstract**

A bus system is disclosed in which stations having a message to send request access to a parallel bus and an arbitrator responding to the requests connects the transmitters of the stations to the bus in sequence. The words of a message placed on the bus respectively represent the address of the station to which the message is to be delivered, the address of the sending station, and data. A station asserts a signal on one control line in response to its address being on the bus and asserts a signal on another control line if it cannot receive a message. Whether the entire message is placed on the bus or not by the sending station and loaded into the registers of the receiving station depends on whether or not their signals are asserted. An external data transfer means places signals to a station on another parallel bus on an external bus. The external bus is in the form of a loop so that the message eventually returns to the station that sent it. Bits are added to certain of the words in the message when it starts around the loop and the logic level of these bits when they return to the station that sent the message indicates whether the station to which the message was sent exists and, if so, whether or not the message was delivered.

## Description

### Background cf the Invention

There are many situations where it is necessary to set up communication links between any selected pairs of a large number of stations. This has been effected in the prior art by provision of a bus to which all the stations may be connected, and utilizing the bus to carry the information that determines whether the communication can be established, In some prior systems, much time is wasted because the decision as to the sequence with which the communication links are to be set up are made by a programmed computer or microprocessor. Furthermore, once a link is set up, it continues to operate until the message s completed so that other selected pairs may have to wait a long ime before a link between them may be established, and this may be intolerable, e.^{g}., if one of the stations includes a cathode ray tube on which data is displayed, the presentation may be ^{L}nterrupted for long enough periods of time to prevent it from having a real-time appearance. In other words, a minimum data rate is not guaranteed. Anoer disadvantage of some prior systems is that the distances over which they can operate are too short. A further problem is that there is only one chance for a message to be sent, and when it is sent, there is no assurance that it was received.

### Brief Description of the Invention

In accordance with the general aspects of this invention, stations of the same group communicate with each other via an internal bus for the group as follows. Means are provided for ranting the stations access to an internal bus during periods of reset duration in a sequence that preferably, but not necessarily, only includes those stations having a message to send. A complete message includes the address, TO, of the station to which the message is to go, a desired number of words data and preferably the address, FROM, of the station sending he message. When a station is granted access to the internal bus, it places the TO address thereon. If the station with the address is in the group, it asserts a first signal preferably on a separate line, but if it cannot accept a message, it asserts second signal which is also preferably on a separate line.

If the first signal is asserted but the second is not, he delivery of the message to the station having the TO address s completed and the station sending the message is prepared to eceive a new message to send; but if the second signal is also sserted, the message is not delivered and remains in the sending taion until it is granted access to the internal bus during a ucceeding sequence.

The operation thus far described is satisfactory if only group of stations exists and if there is no mistake in the TO ddress. If there is a mistake, the message cannot be delivered and would remain in the sending station indefinitely so as to lock that station up. In order to prevent this from occurring, he FROM address is placed on the internal bus along with extra its whose logic levels can be set to indicate whether the tation is present and, if so, whether or not it can receive a essage. The extra bits and the FROM address are returned to the nternal bus at a later time in the sequence. When the sending tation identifies the FROM address as its own it examines the bits to determine what happened to its message. If they ndicate that no station has the TO address, the sending station s prepared to receive a new message to send. This is also done f the extra bits indicate that the station having the TO address present and able to accept a message, in which event it is assumed that the message has been successfully delivered. owever, if the station having the TO addresss is present but cannot receive a message, the message remains in the sending station until it is given access to the bus at a later time and he message is assumed to have been delivered.

In a situation where there are several groups of stations eans are provided for coupling the entire message and the extra its from the internal bus of a first group to the internal bus f a second group, etc., and the internal bus of the last group is coupled to the internal bus of the first so as to form a loop. s a message initiated by a station in the first group and the its associated therewith pass around the loop, the logic levels of the extra bits are set in each group so as to indicate whether he message has been delivered to a station in that group. When he message returns to the station where it originated, the operations described above are carried out.

In accordance with one aspect of this invention, a message that is generally but not necessarily provided by a rammed processor of a station is temporarily stored in the egisters of the transmitter means of that station and conveyed the registers of the data transfer means of any station via a ommon parallel bus comprised of data lines and control lines. The bus will hereinafter be referred to as an internal bus". When the message is loaded into the registers of a data transfer means, it may be read by a device such as a processor for the station.

Those transmitter means having messages to convey assert a request-to-send signal -RTS on an individual line to an arbitrator which sends a clear-to-send signal -CTS on separate lines to the transmitter means on a sequential basis. The number of transmitter means involved in a sequence depends on the number having messages to send at any one time. After each message is placed on the internal.bus, the process is repeated. Because the messages are short, a number may be required before a station can convey all the information desired; but the sequential rate with which transmitter means have access to the bus is fast enough to give the information conveyed a continuous character.

When a transmitter means is connected to the internal bus, it places the first and second words of the message thereon in sequence. The first word contains the address of the station to which the message is to be conveyed, hereinafter referred to as the TO address, and the second word is the address of the station sending the message, hereinafter referred to as the FROM address. In view of the fact that the data transfer means of all stations are connected to the internal bus, they will all receive the TO address. The station having that address places an acknowledge signal -ACK on an -ACK control line while the FROM address is on the data lines of the internal bus to indicate that it is present. The control line is connected to all transmitter means, data tranfer means and to the arbitrator. If, however, the registers of the data tranfer means of the TO address station are not empty, the data transfer means asserts a busy signal -BSY on a -BSY control line while the FROM address is on the data lines of the internal bus. This control line is also connected to all the transmitter means, data transfer means and the arbitrator.

If -BSY is not asserted while the FROM address is on the internal bus, the transmitter means places a first data word D₁ on the internal bus. All of the data words could be placed on the internal bus in sequence and loaded by the data transfer means into its registers if desired, but provision may be made for a processor to instruct a data transfer means to only receive a message from the same station from which it received its last message. To determine this, the data transfer means of the TO address station compares a copy of the last FROM address received with the FROM address in the current message. If they are not the same, -BSY is asserted on the -BSY control line. This can only occur while the D₁ data word is on the internal bus because the comparison can only be made while the FROM address is on the internal bus.

The message remains in the registers of the transmitter means until it is successfully delivered to the TO address station during another turn on the bus, or until it is aborted by the processor. The assertion of -ACK and the non-assertion of -BSY assures that the message has been successfully delivered and the registers of the transmitter means are prepared to receive a new message from the programmed processor or other means.

In order to prevent the system from being locked up in the event that a station having the TO addresss is not connected to the internal bus, a situation that-might occur from a mistake in the TO address transmitted or by virtue of the fact that a connection is broken, what will be referred to as an "external transmitter means" and "external data transfer means" are provided and one more line is included in the internal bus than is required for the data. The data lines and the additional line are connected to the input of the external data transfer means, and the output of the external data transfer means is connected to the input of the external transmitter means. Its output is connected to the internal bus when it receives a clear-to-send signal from the arbitrator.

By means of the additional line in the internal bus, an additional bit can be added to each word of the message. They do not come from the processor, but are added to each word of the message as it is placed on the internal bus. Initially, two of them respectively added to the FROM address and the D₁ data word have a logic level of "0". The bit added to the FROM address will be made a "1" by the external data transfer means if the TO address station is on the internal bus; and the bit added to the ^{D}ₗ data word will be made a "1" if the TO address station is busy. In the situation where the TO address station is not present, both bits will be "0". Upon seeing this, the transmitter means will prepare its registers to receive a new message and flags will be set to indicate to the processor that no such station exists. If the TO address station is there and its data transfer means can receive a message, the bit added to the FROM address will be "1" and the bit added to the D₁ data word will be "0", but if the data transfer means is busy or cannot receive from the transmitting station, it will be "1".

Time is saved in this bus system because a processor is not involved in making decisions related to the delivery or non- delivery of a message. All these decisions are made by hardwired state machines in the transmitter means, the data transfer means and the arbitrator. Time is also saved by virtue of the fact that the request-to-send and clear-to-send signals are conveyed on individual lines rather than via data lines of the bus.

In accordance with another aspect of this invention, means are provided for sending a message from a station on one internal bus to a station on another internal bus. This may be necessary because of a practicable limit to the number of stations that can be on one internal bus or because it is desired to have a first group of stations on one internal bus at a point that is remote from a second group of stations on another internal bus.

To carry out this kind of transmission, an external bus is connected between the output of the external data transfer means of the first group to a fifo buffer that is connected to the input of the external transmitter means of the second group. In this situation, the external data transfer means determines from the fact that neither -ACK nor -BSY are asserted when the FROM address is on the internal bus that it is to place the ;message on the external bus. If the registers of the external data transfer means are not empty, it asserts -BSY on the control line while the Dₗ data word is on the bus and the transmission is terminated and the message stays in the.registers of the transmitter means to wait for it to have another- turn on the internal bus. If, however, the registers of the external data transfer means are empty, it loads the message into registers selected by a two-bit state code machine.

Before the external data transfer means of the first group loads the external bus, it sends out a signal of enquiry to determine if the fifo in the second group can accept a word of data. If it can, an affirmation signal is sent back indicating this fact and the external data transfer means for the first group loads the external bus. It will have one line for each bit in the message, one line for the additional bit referred to above, two lines for the two bits from the code state machine, one line for the signal of enquiry, and one line for the affirmation signal.

The message, the extra bit for each word and the code state machine bits then bubble up through the fifo. A Transmit Data Register Empty (TDRE) flag is checked to determine if the registers of the external transmitter means are empty. If they are, the message and the extra bit for each word are written into appropriate registers of the external transmitter means as directed by the code state machine bits. After the external transmitter means asserts a request-to-send signal -RTS to the arbitrator for the second group; and when the arbitrator sends back a clear-to-send signal -CTS, the external transmitter means places the TO address and FROM address on the internal bus of the second group.

If the station having the TO address is not in the second group and if the registers of the external data transfer means of the second group are empty, the message and the extra bits in the FROM address and the _{D1} data word are loaded into the registers of the external data transfer means selected by its code state machine; but if the registers are not empty, the message and extra bits remain in the registers of the external transmitter means and the process is repeated until the message is successfully sent.

The message and extra bit are conveyed from the registers of the external data transfer means of the second group to the external transmitter means of a third group in the same manner as they were conveyed from the registers of the external data trasnfer means of the first group to the external transmitter means of the second group.

If the station having the TO address is in the third group, the message and extra bits will remain in the registers of the external transmitter means for the third group if the registers for the external data transfer means for the third group are full; but if the latter registers are empty, the message will be loaded into these registers. In the event that the TO address station cannot receive the message, the extra bit added to the FROM address and the extra bit added to the D₁ data word are both changed to a "1" by the external data transfer means. If, however, the TO address station can accept the message, the extra bit in the FROM address is set at "1" and the bit added to the _{Dl} data word remains at "0".

In order that the transmitter means that originated the message can know what happened to the message it sent, it is necessary that the external bus-eventually return to the input of the external transmitter means of the first group. In other words, the external bus must be in the form of a loop. When this is done, the transmitter means originating the message can tell from the extra bits what happened to the message. If it was delivered, the registers of that transmitter means can be prepared to accept a new message; but if it was not delivered, the message remains in the registers of the transmitter means until it is successfully transmitted or until it is aborted by the associated processor. Then too, if the TO address is not present, the extra bits are "0,0" as previously discussed, a flag is set and the message is automatically aborted.

In the description, words of action have been used, but it will be understood that means could be used in each phrase.

### Brief Description of the Drawings

FIGURE 1 is a simplified block diagram of a bus system incorporating this invention which illustrates the different types of communications involved;
FIGURE 2 is a block diagram of a bus system incorporating this invention;
FIGURE 3A is a simplified block diagram illustrating a communication type wherein a message is sent from a transmitter means in a group to a data transfer means in the same group;

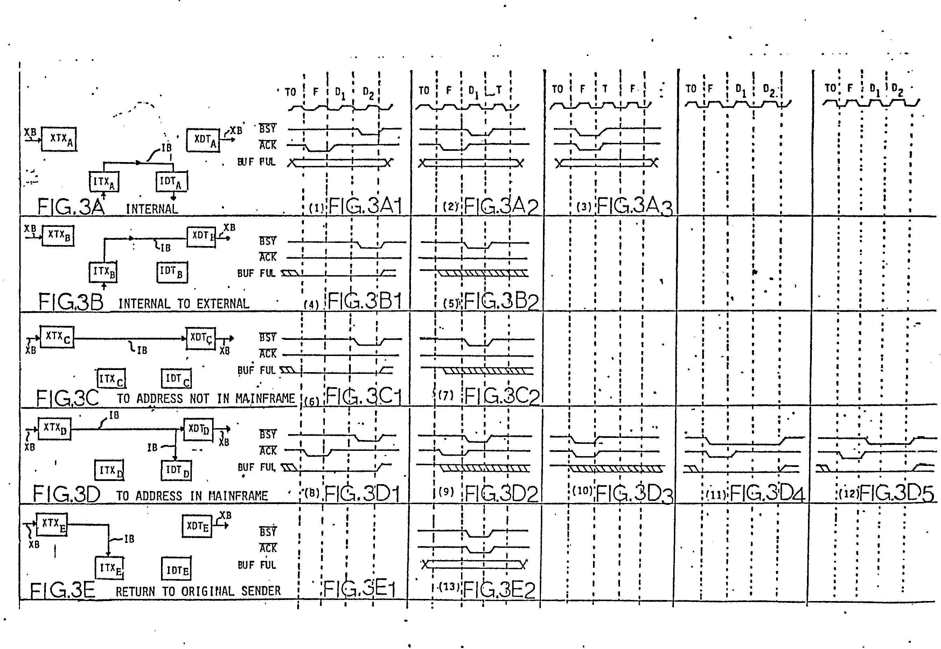

FIGURES 3Aₗ, 3A₂ and ₃A3 are graphical representations of different situations that can exist in the type of communication illustrated in FIGURE 3A;
FIGURE 3B is a simplified block diagram illustrating a communication type wherein a message from a transmitter means in a group is placed on the external bus;
FIGURES 3Bₗ and 3B₂ are graphical representations of different situations that can exist in the type of communication illustrated in FIGURE 3B;
FIGURE 3C is a simplified block diagram illustrating a communication type wherein a message is received by an external transmitter means of a group and intended for a data transfer means in another group;
FIGURES 3C₁ and 3C₂ are graphical representations of different situations that can exist in the type of communication illustrated in FIGURE 3C;
FIGURE 3D is a simplified block diagram illustrating a communication type wherein a message is received by an external transmitter means of a group and is intended for an internal data transfer means;
FIGURES ^{3D}ₗ, 3D₂, 3D₃, 3D₄ and 3D₅ are graphical representations of different situations that can exist in the type of communication illustrated in FIGURE 3D;
FIGURE 3E is a simplified block diagram illustrating a communication type wherein a message is received by an external transmitter means of a group and returned to the internal transmitter means which originally sent the message;
FIGURE 3E₂ is a graphical representation of the type of communication illustrated in FIGURE 3E;

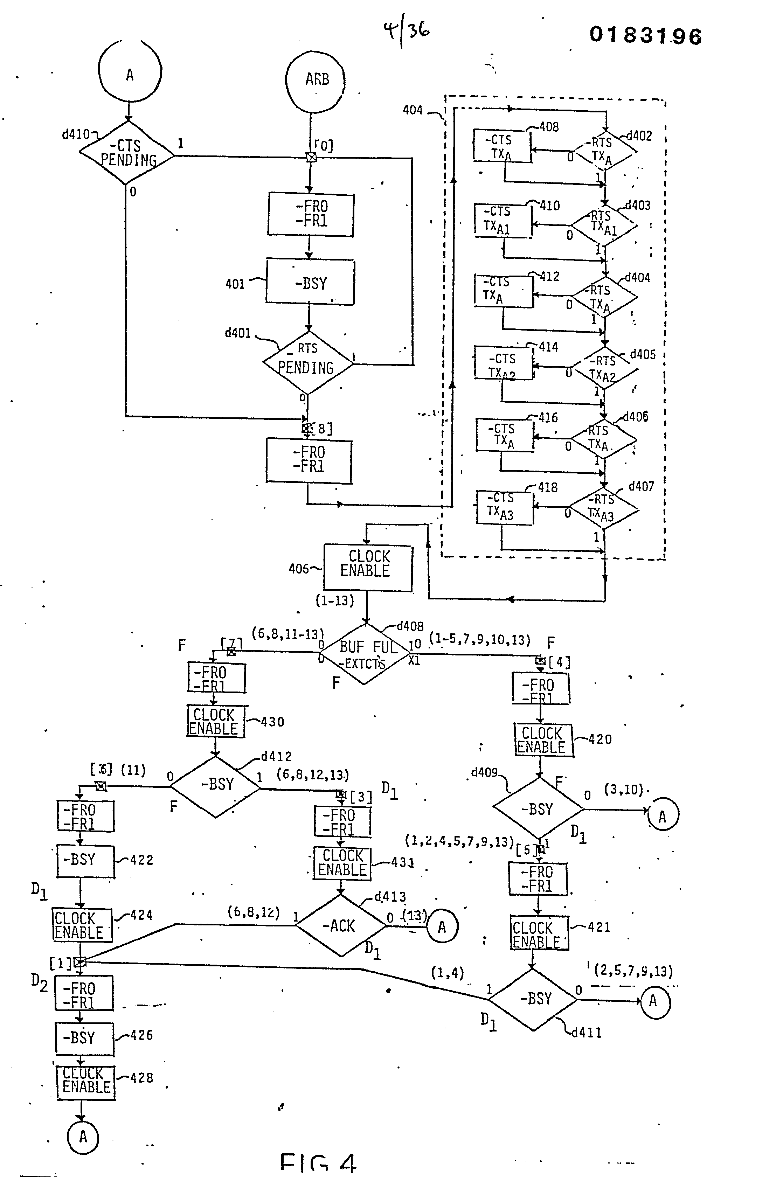

FIGURE 4 is a flow chart for the arbitrator which determines the sequence with which transmitter means will be given access to the internal bus;

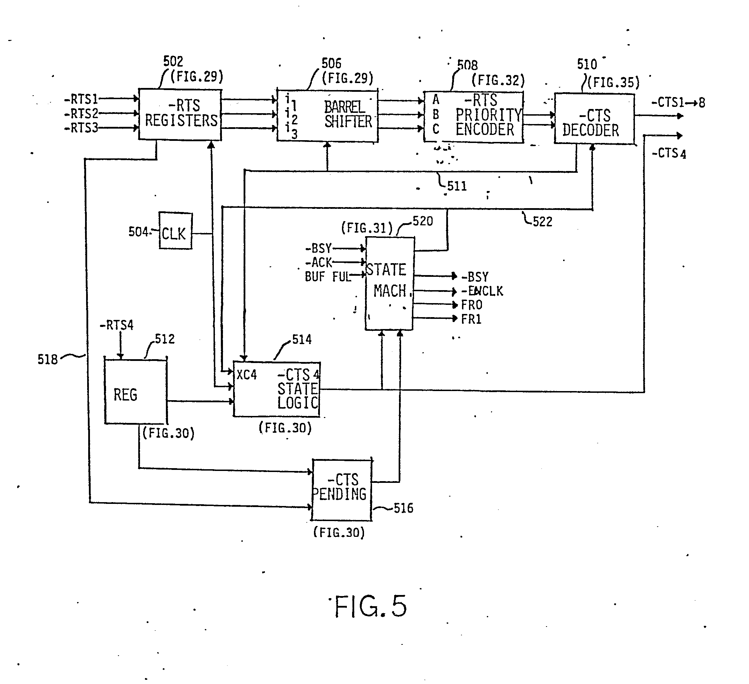

FIGURE 5 is a block diagram of the arbitrator;

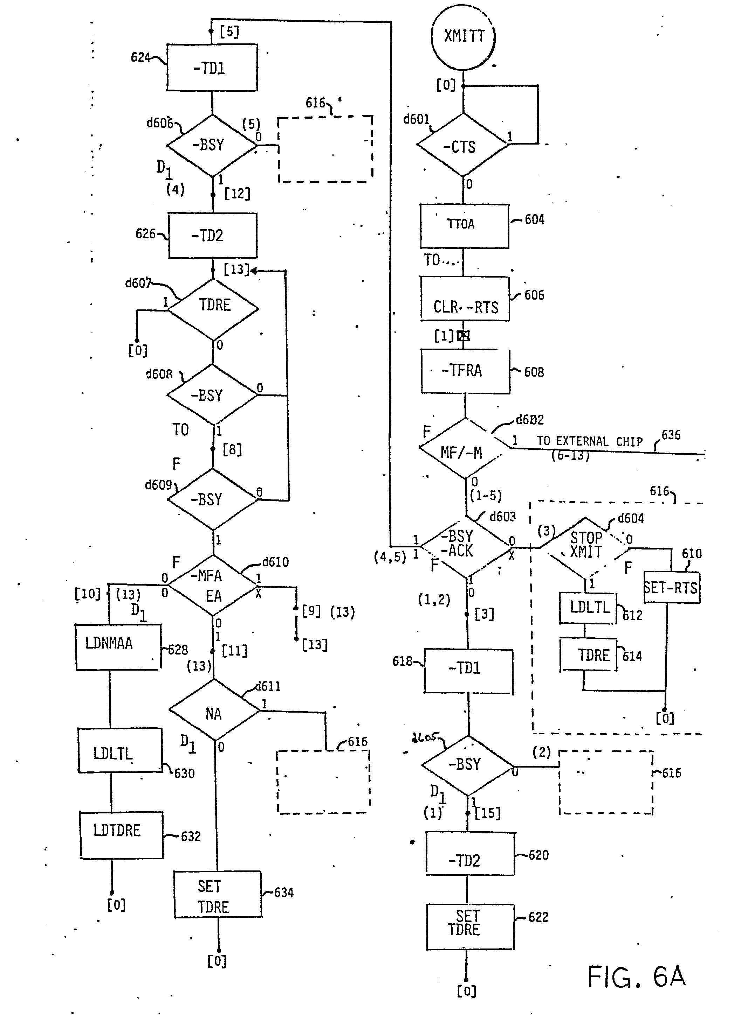

FIGURE 6A is a state machine flow chart, a portion of which is common to internal and external transmitter means and the remainder of which is for an internal transmitter means;

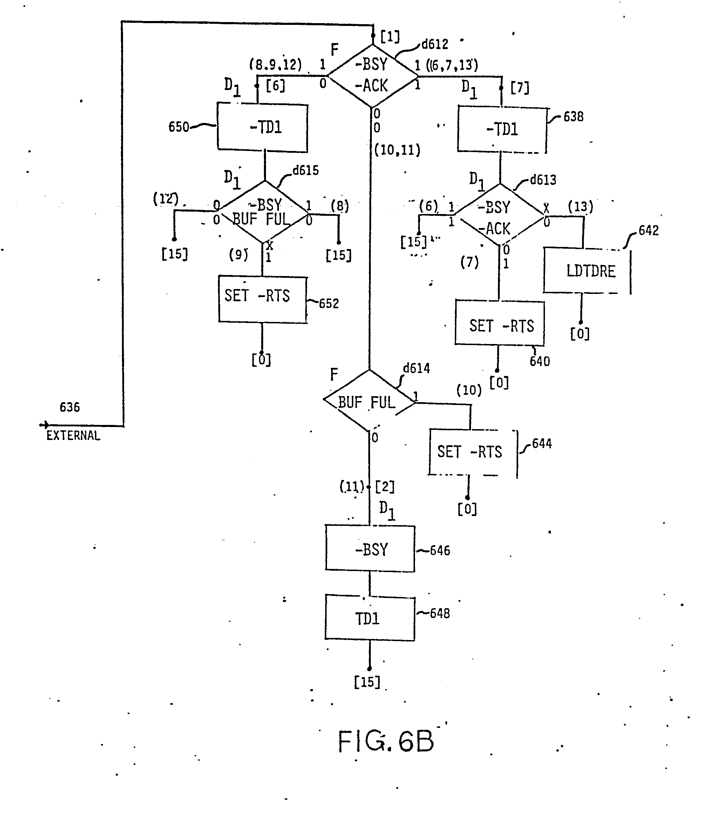

FIGURE 6B is a state machine flow chart for an external transmitter means;

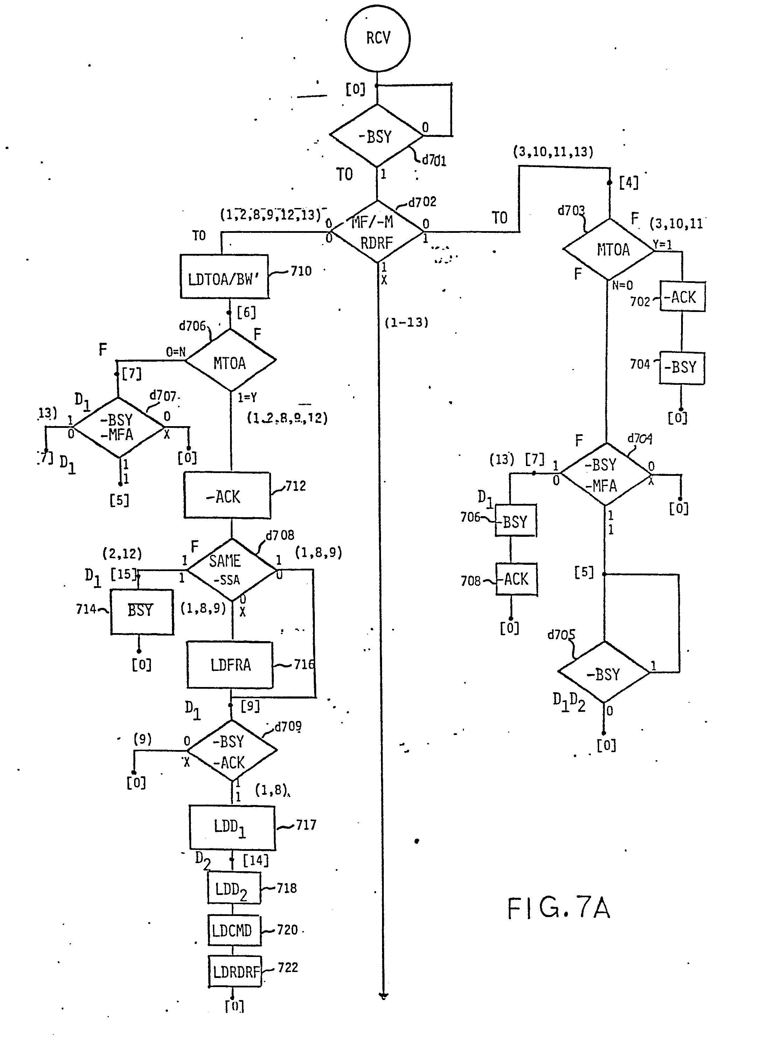

FIGURE 7A is a state machine flow chart, a portion of which is common to internal and external data transfer means and the remainder of which is for an internal data transfer means;

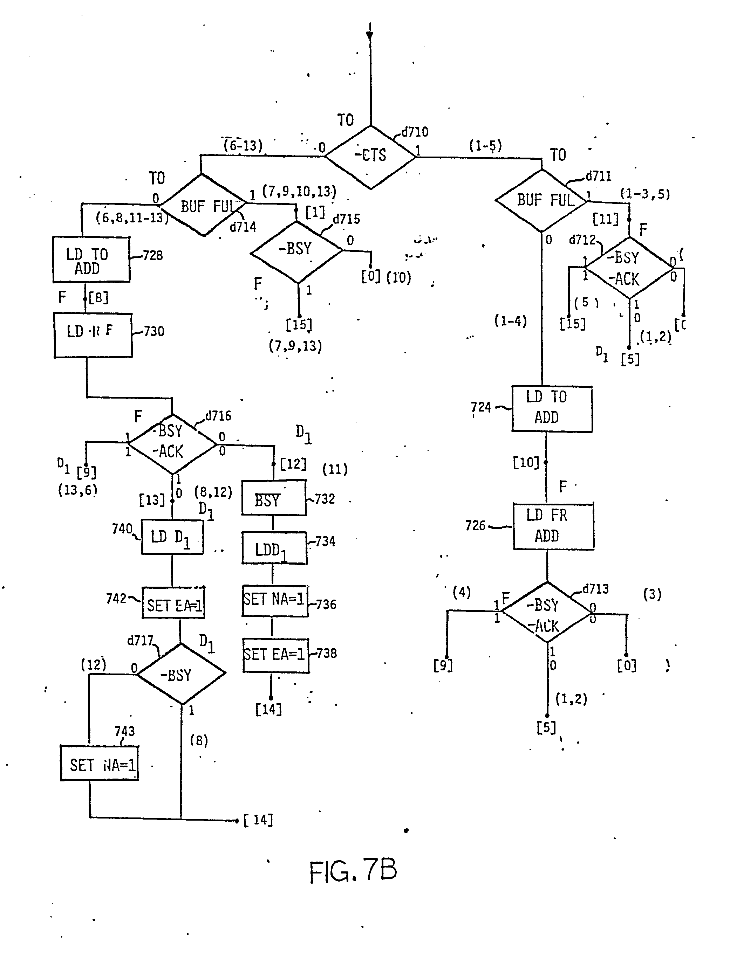

FIGURE 7B is a state machine flow chart for an external data transfer means;

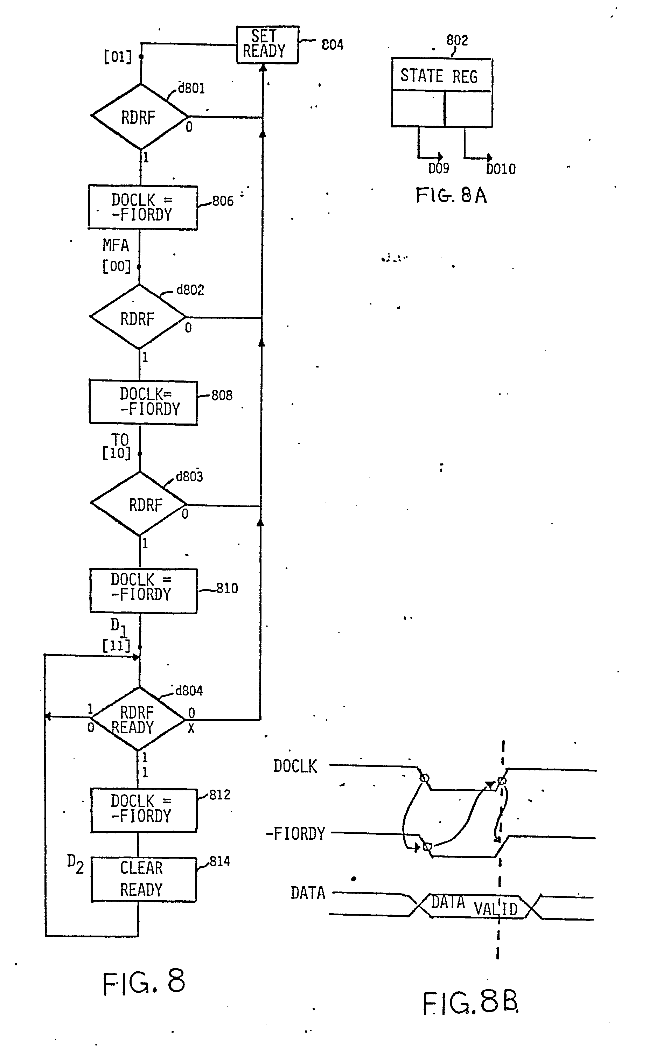

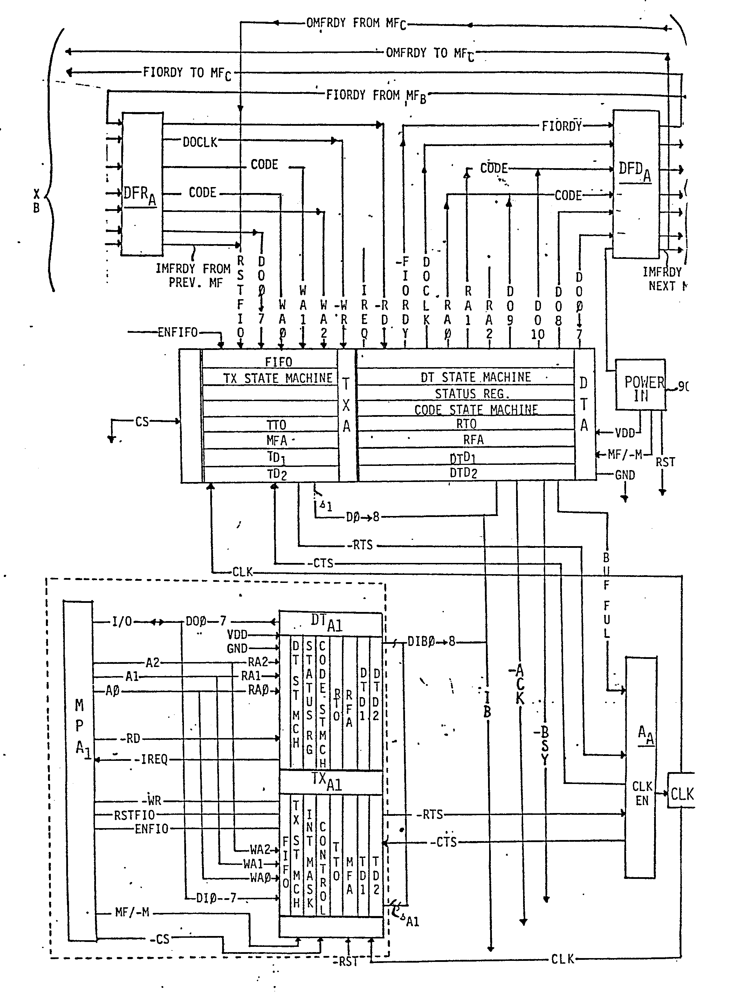

FIGURE 8 is a flow chart for a code state machine that identifies the registers in an external data transfer means;
FIGURE 8A is a state machine register containing the two bits for'each of the states set by the code state machine of FIGURE 8;
FIGURE 8B is a graphical illustration of the operations of FIGURE 8;

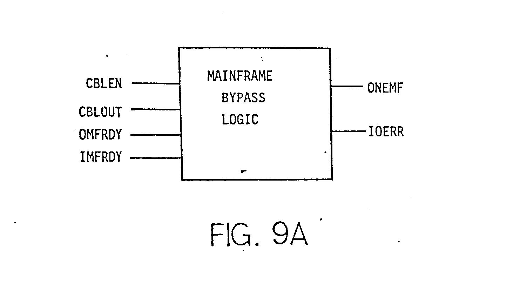

FIGURE 9 is a detailed diagram showing the interconnections between an internal chip and an external chip, the arbitrator and a differential driving system;
FIGURE 9A is a diagram showing interconnection signals that are provided in a single mainframe operation;

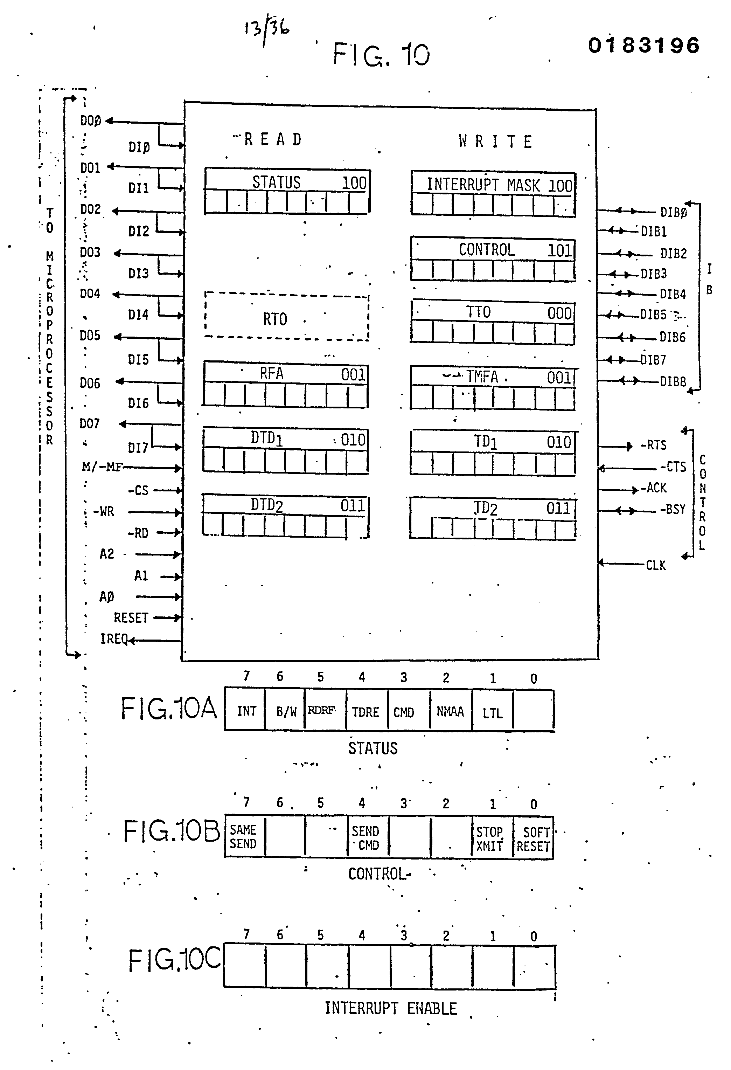

FIGURES 10, 10A, 10B and 10C illustrate the registers of both internal and external chips;
FIGURE li is a block diagram of an internal chip;

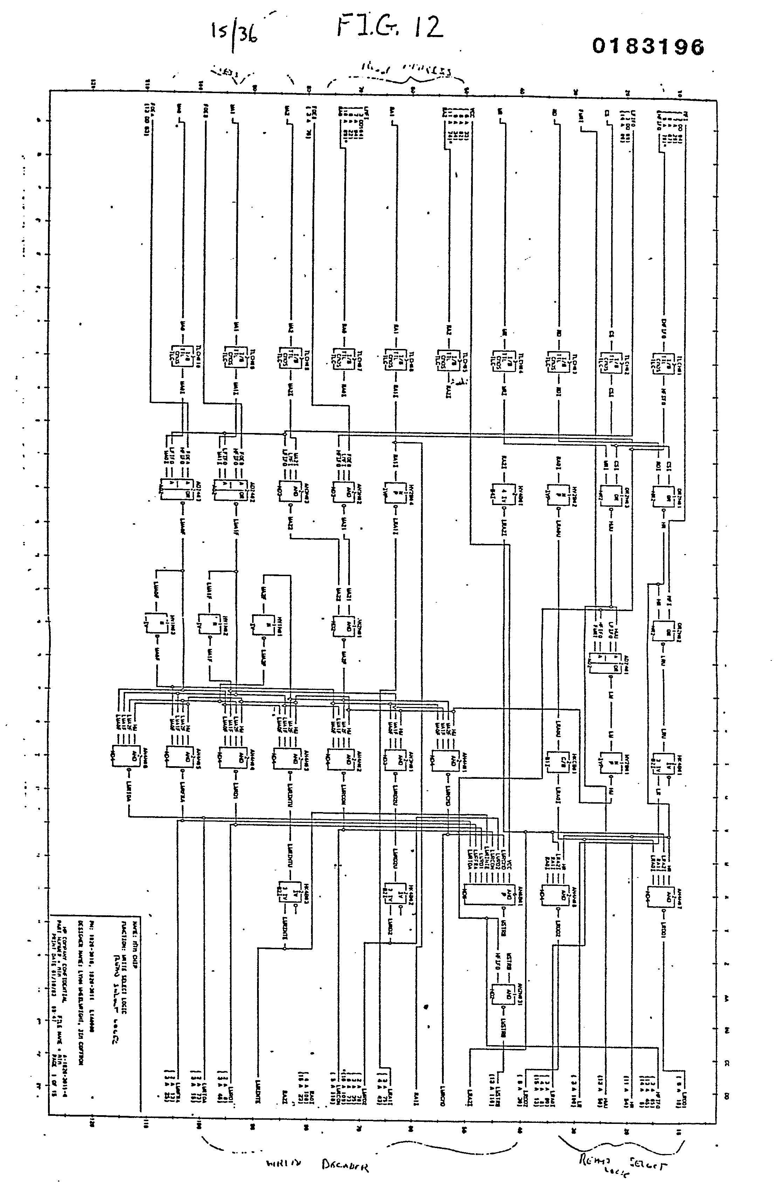

FIGURE 12 is a schematic diagram for the READ, WRITE and SELECT logic of an internal chip;

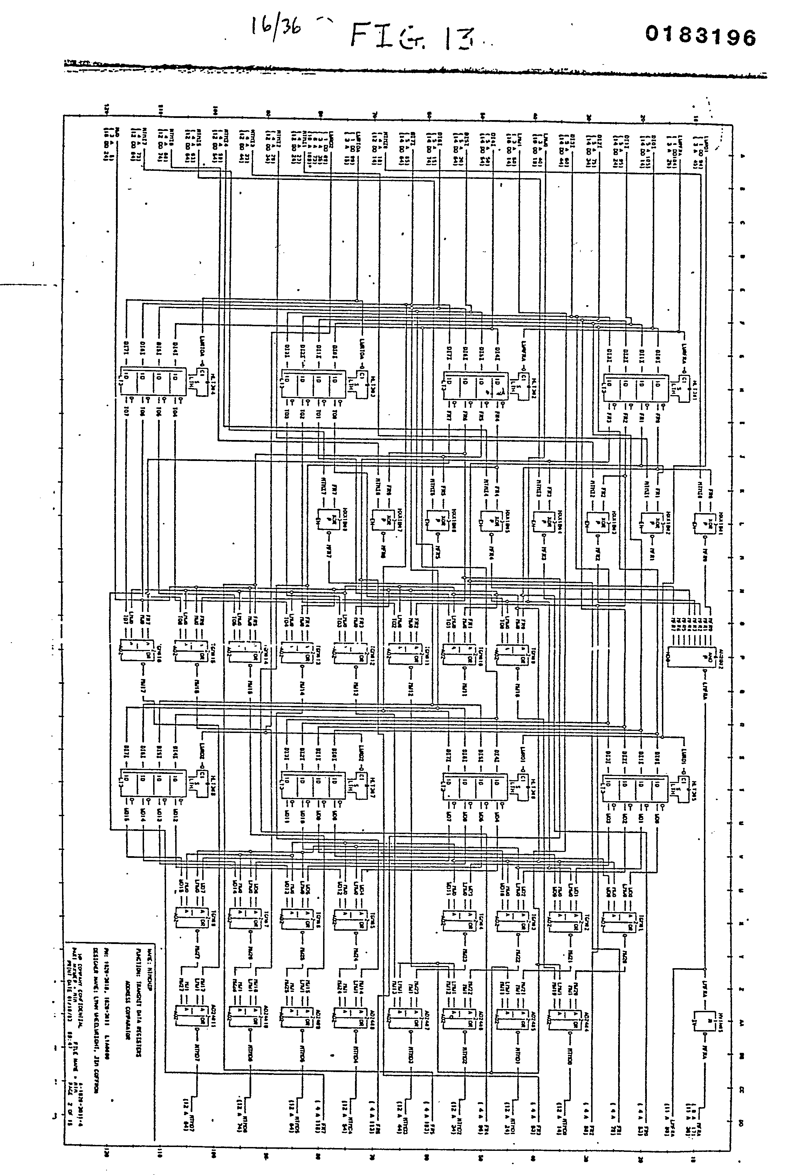

FIGURE 13 is a schematic diagram for a transmitter means multiplexer;

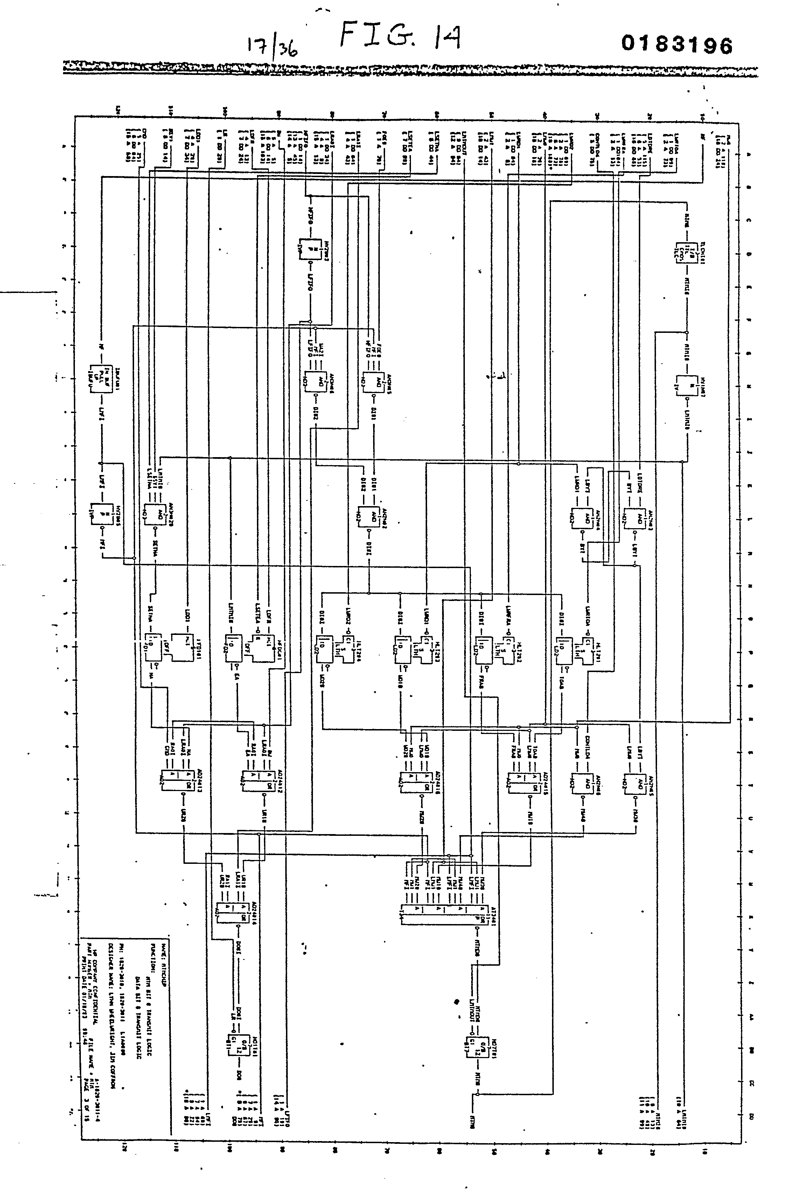

FIGURE 14 is a schematic diagram for a bit-8 transmit logic;

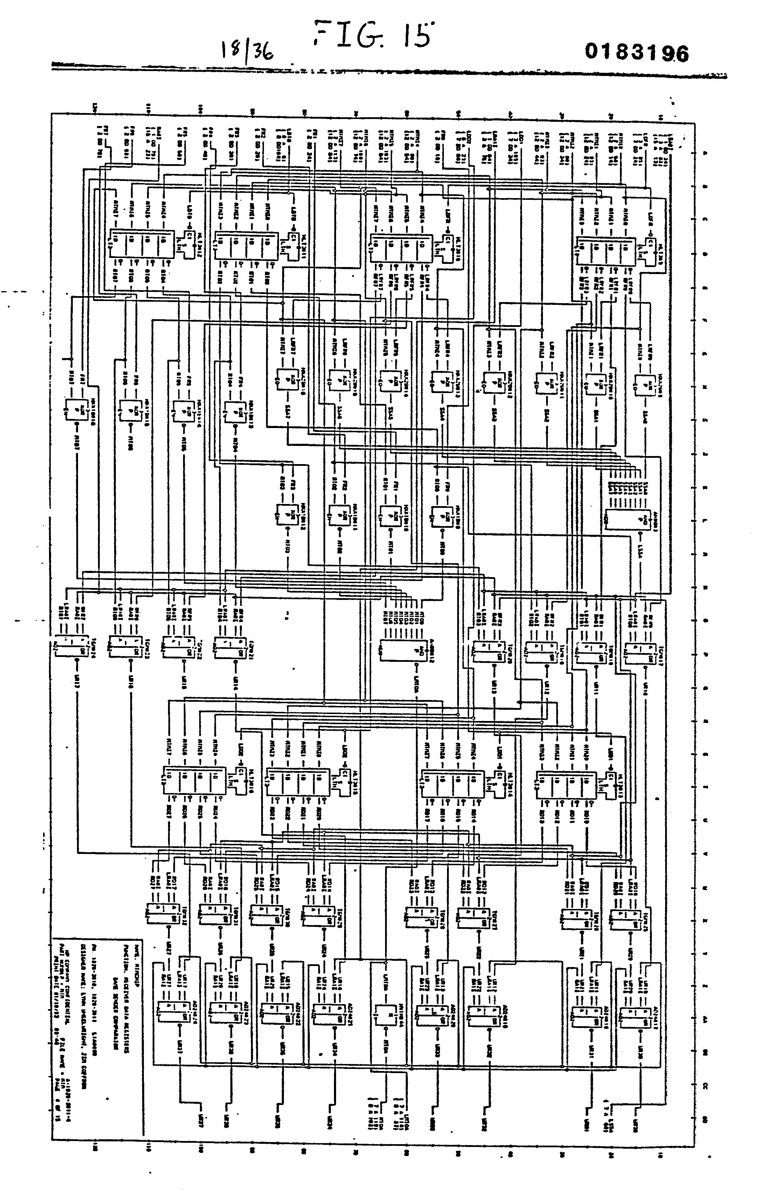

FIGURE 15 is a schematic diagram for receiver data registers and a same sender comparator;

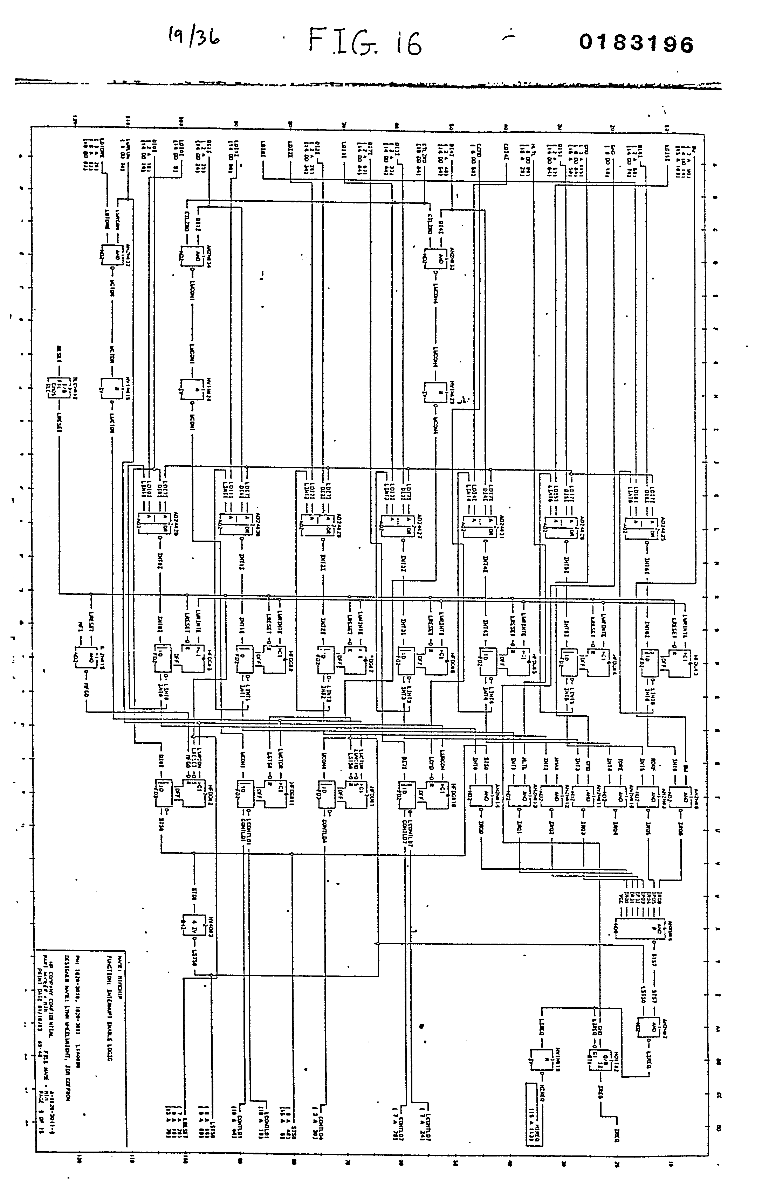

FIGURE 16 is a schematic diagram for the interrupt enable logic;

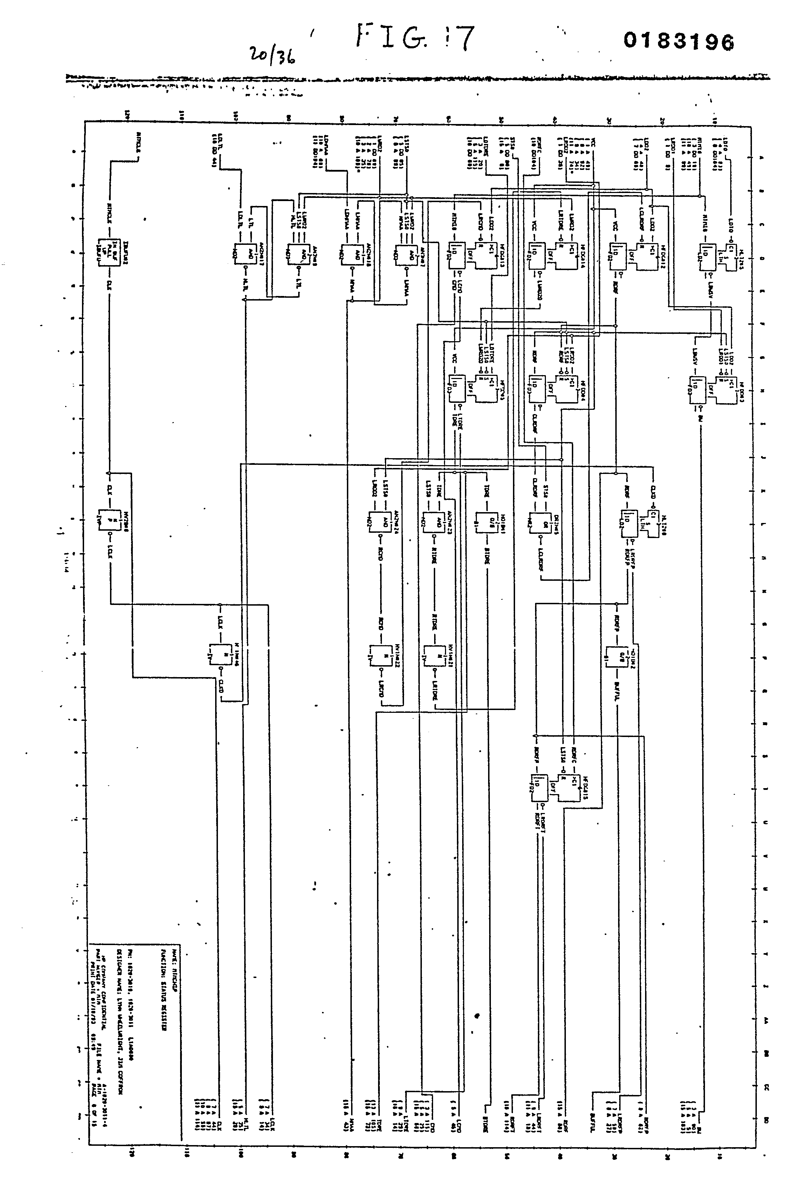

FIGURE 17 is a schematic diagram for the status register;

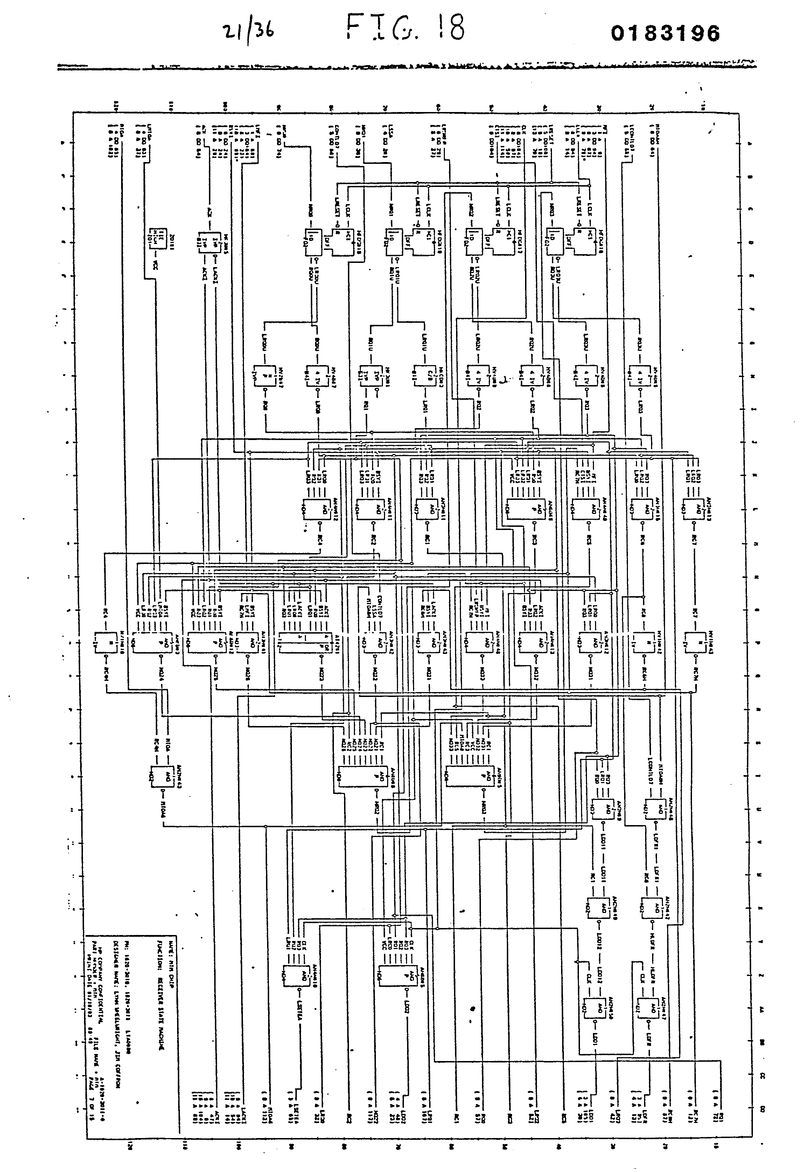

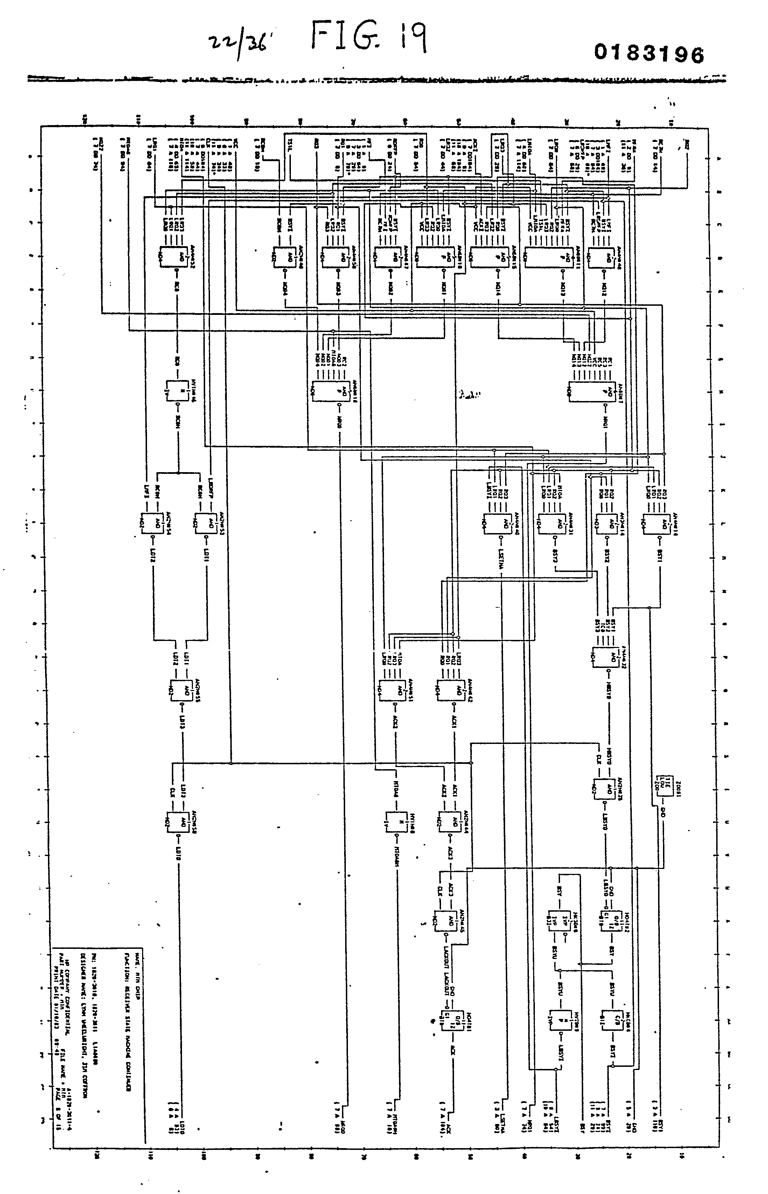

FIGURES 18 and 19 are schematic diagrams for the state machine for the data transfer means;

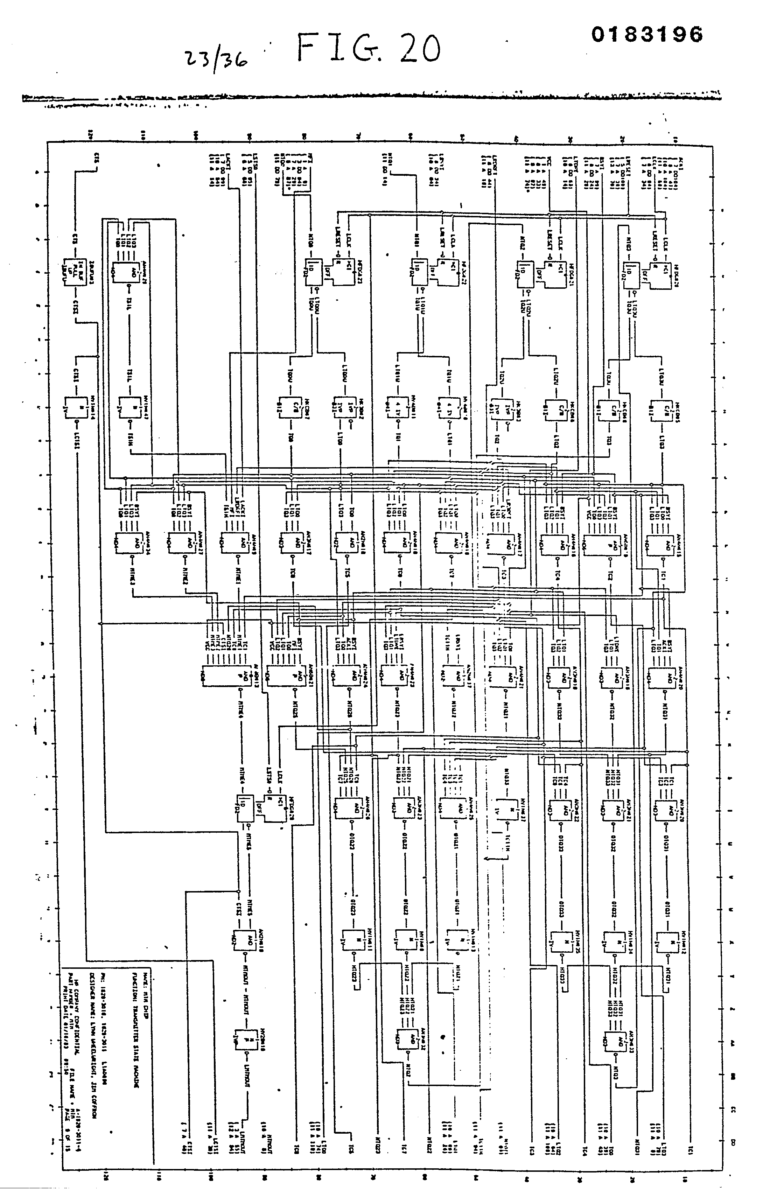

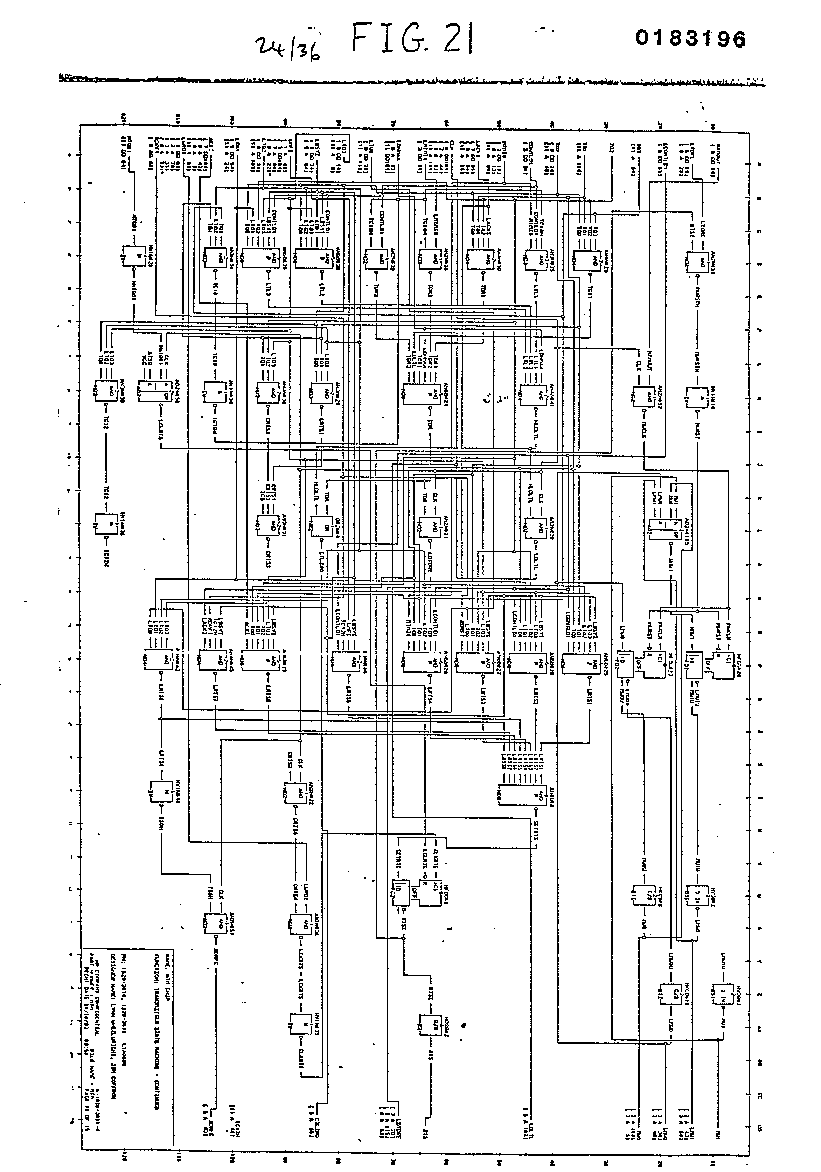

FIGURES 20, 21 and 22 are schematic diagrams for a state machine for the transmitter means;

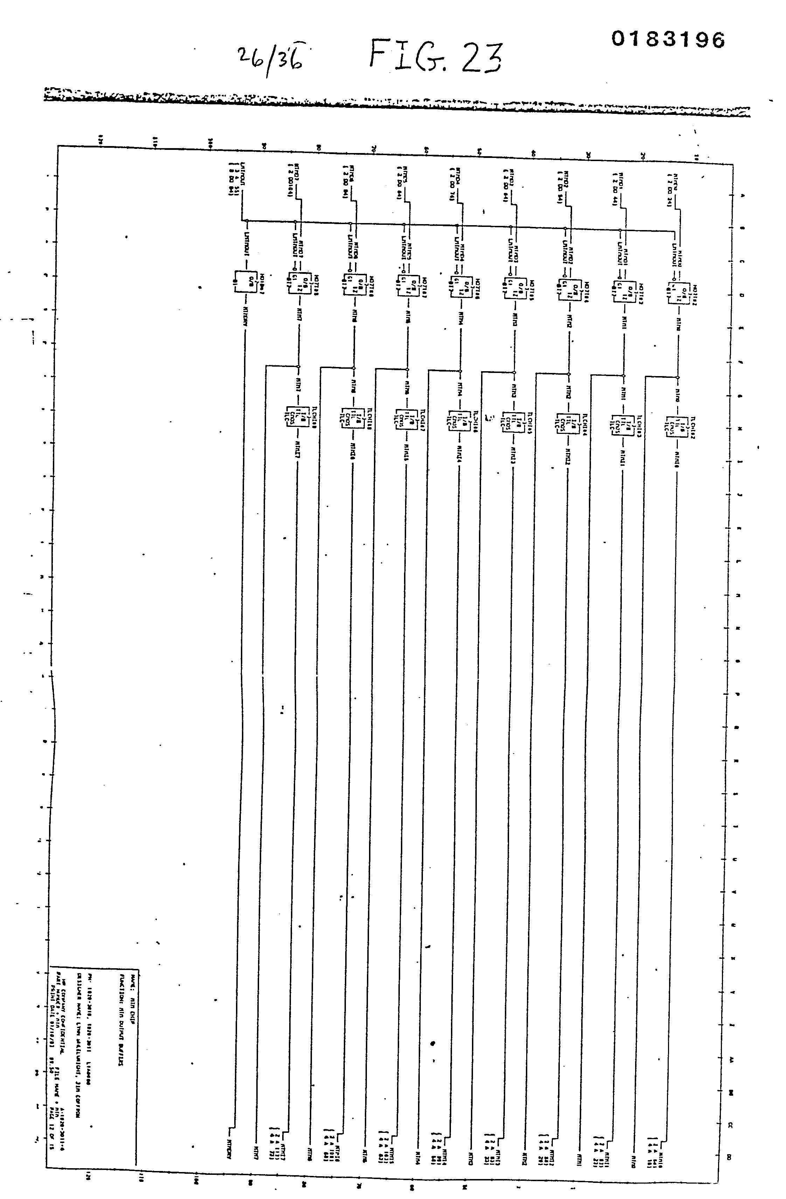

FIGURE 23 is a schematic diagram for a data transfer register and for a transmitter output buffer;

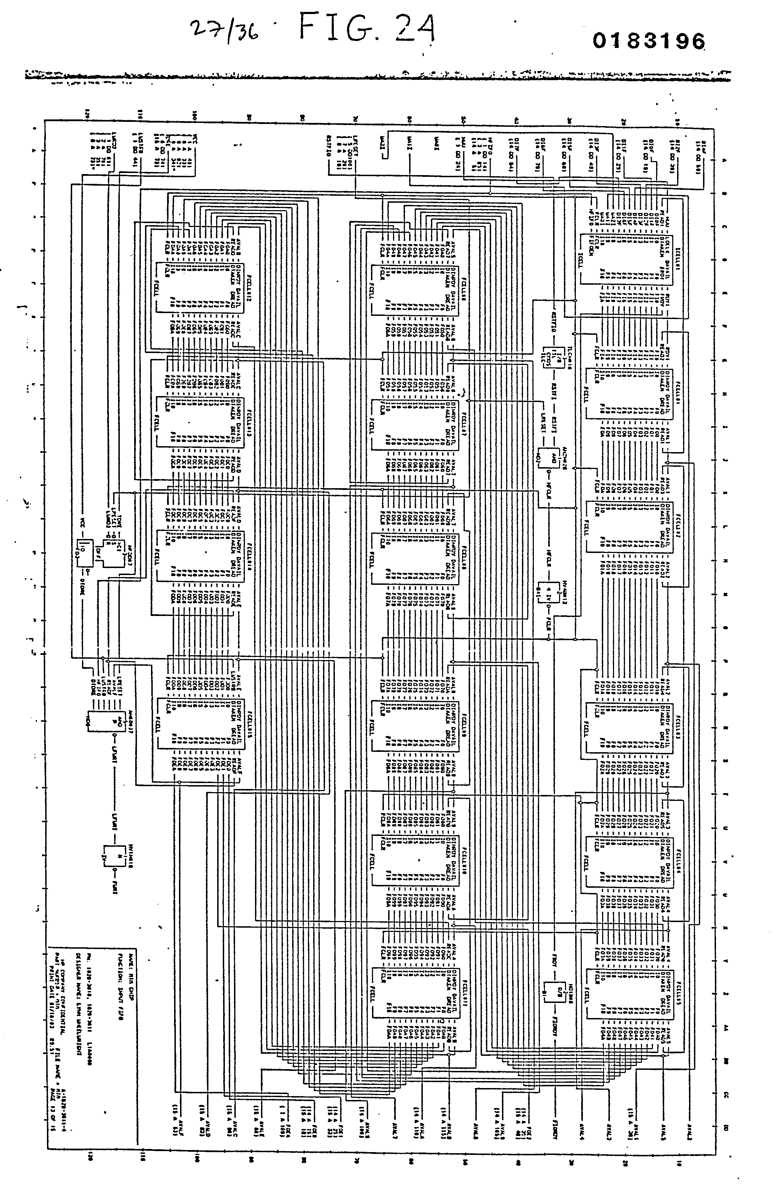

FIGURE 24 is a schematic diagram for a fifo buffer;

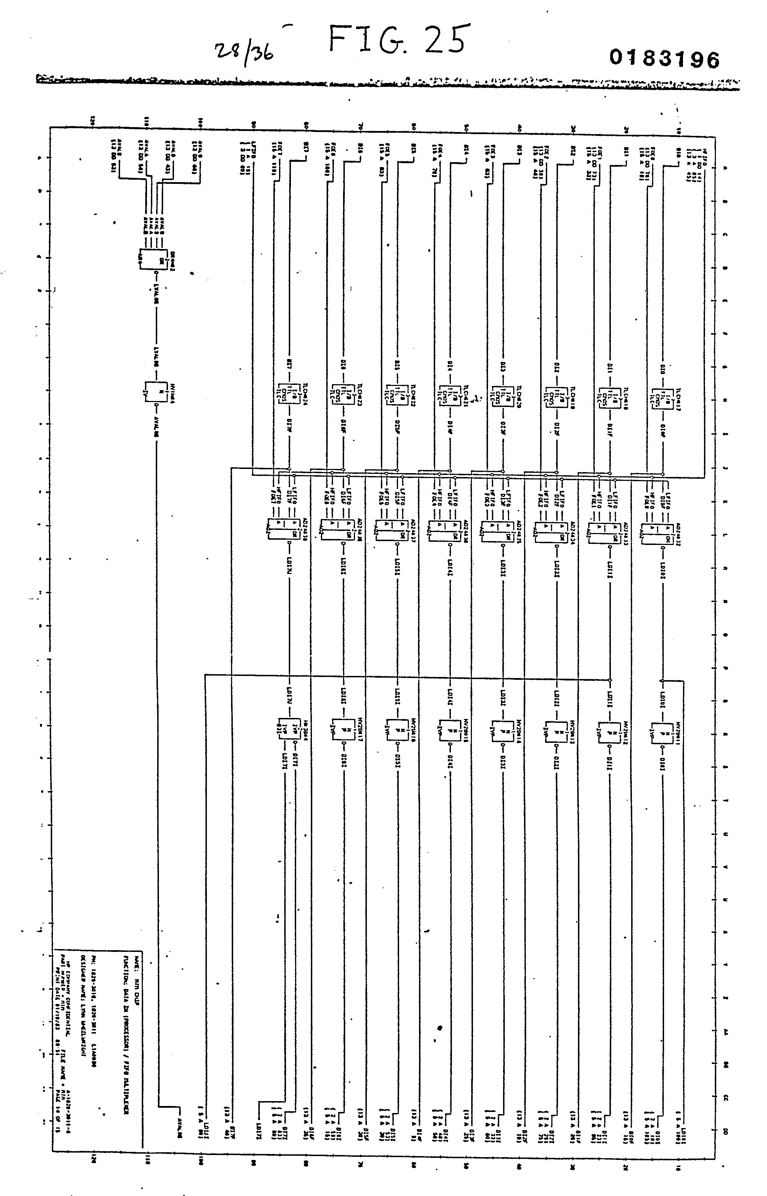

FIGURE 25 is a schematic diagram for a data-in processor and a fifo multiplexer;

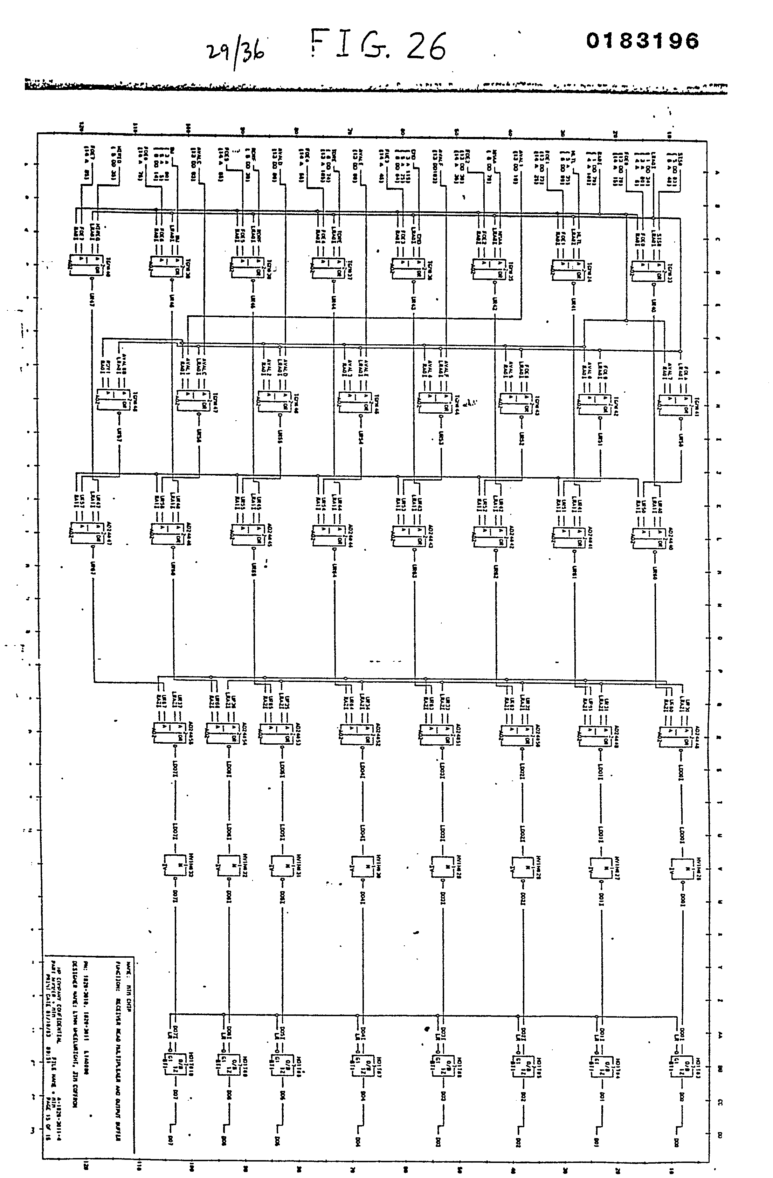

FIGURE 26 is a schematic diagram for a receiver READ multiplexer and an output buffer;

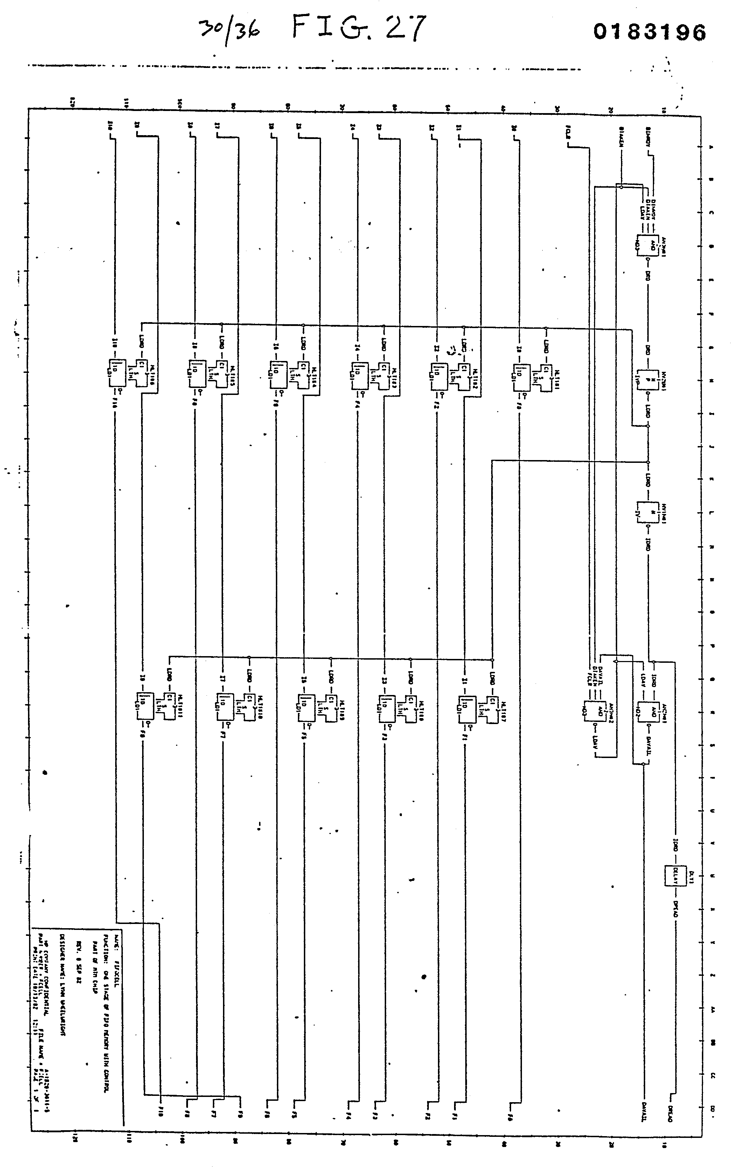

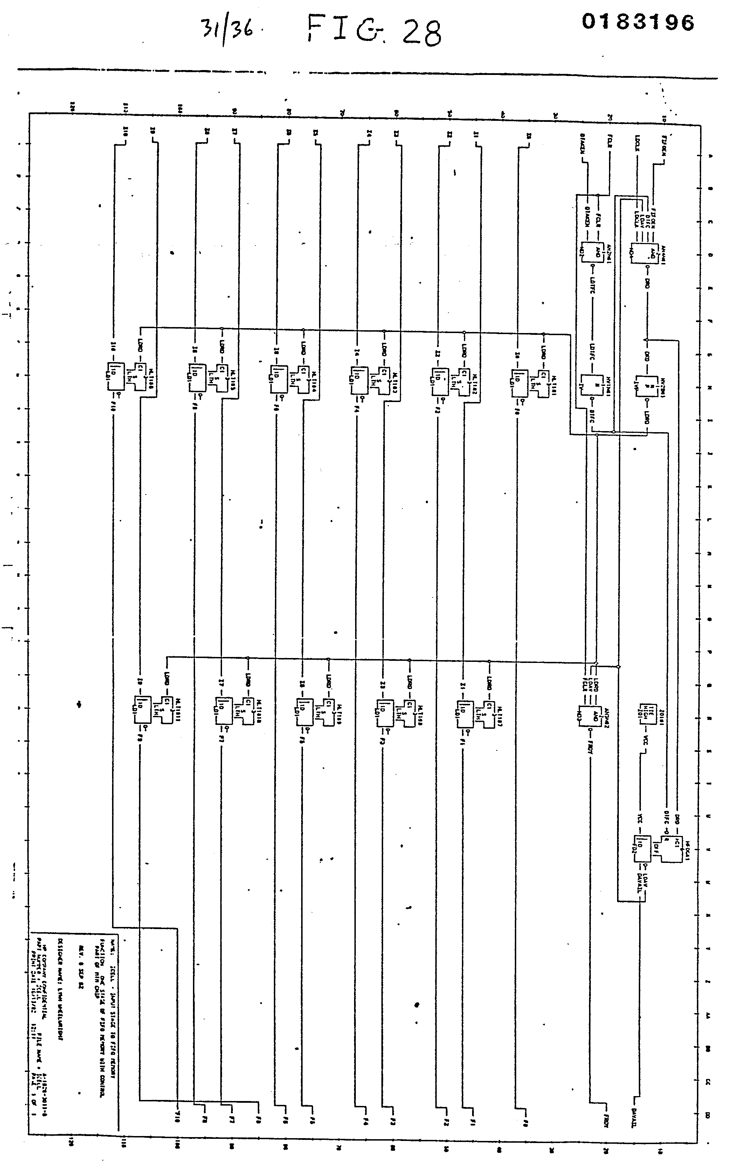

FIGURES 27 and 28 are schematic diagrams for the fifo memory and control;

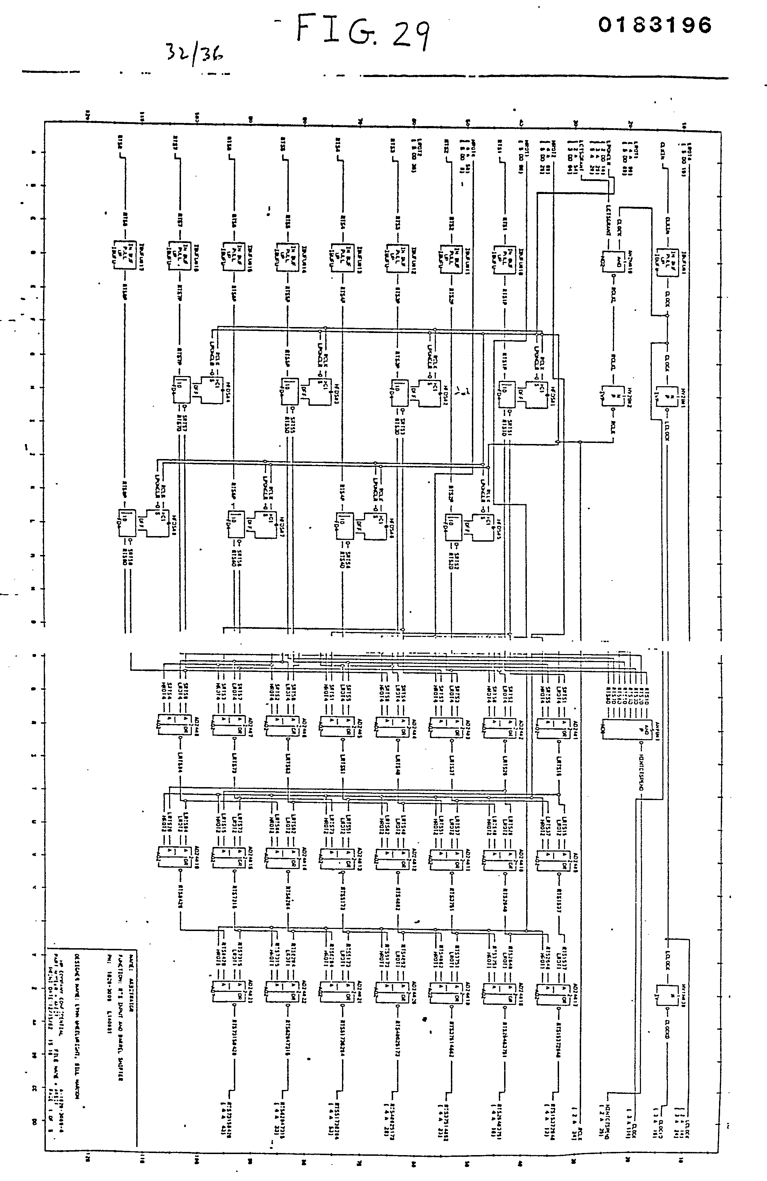

FIGURE 29 is a schematic diagram for the RTS input and barrel shifter of the arbitrator;

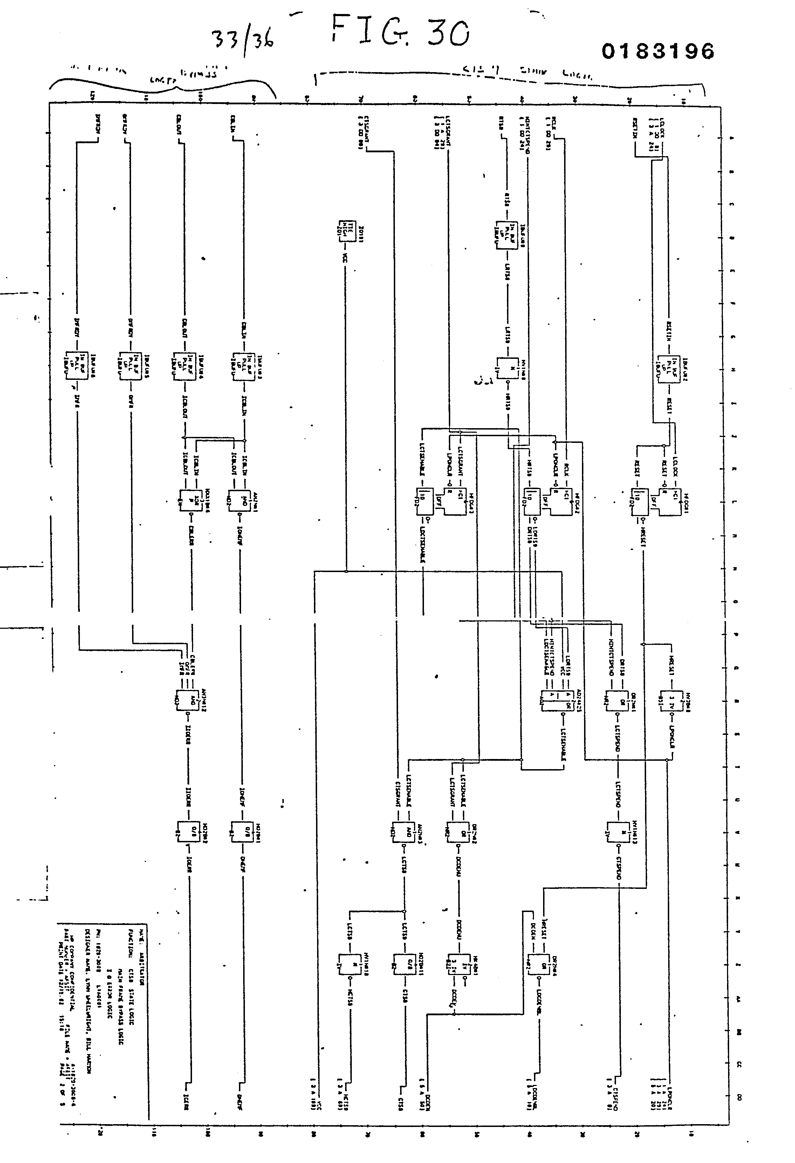

FIGURE 30 is a schematic diagram for the mainframe bypass logic and I/O error logic for the arbitrator;

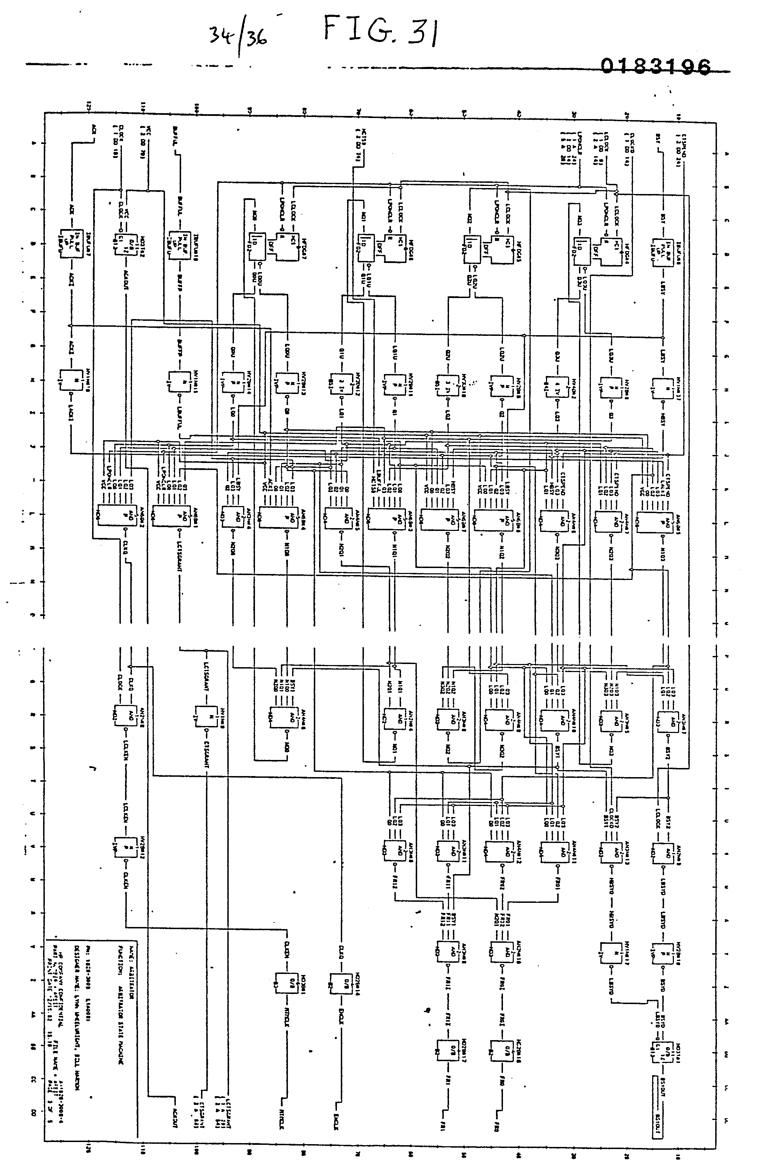

FIGURE 31 is a schematic diagram for the arbitrator state machine;

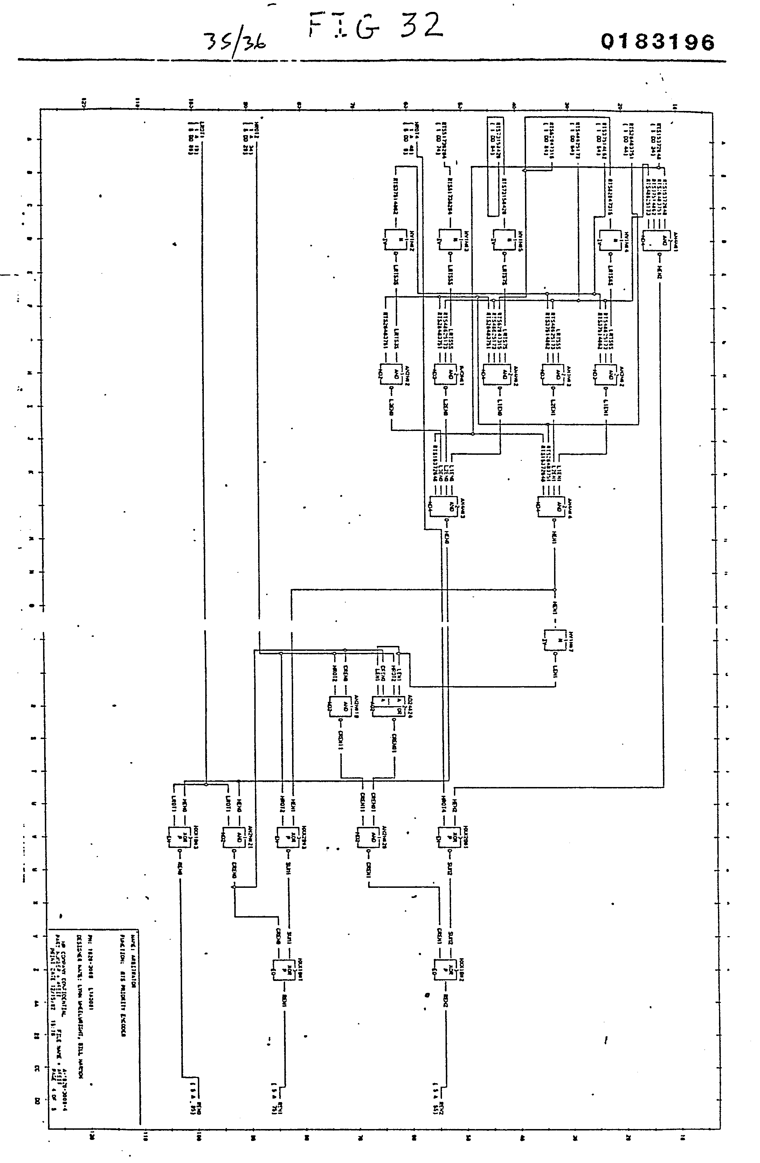

FIGURE 32 is a schematic diagram for the RTS priority encoder; and

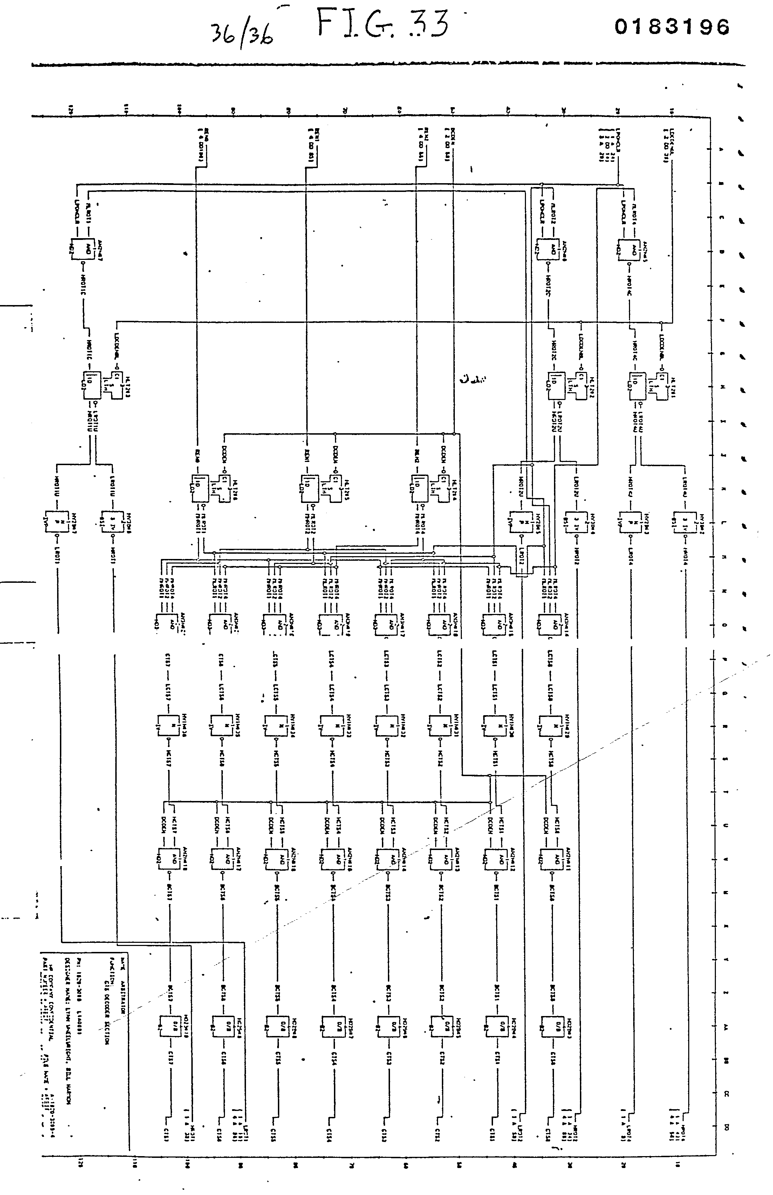

FIGURE 33 is a schematic diagram for the CTS priority decoder.

### Detailed Description of the Invention

### Overview

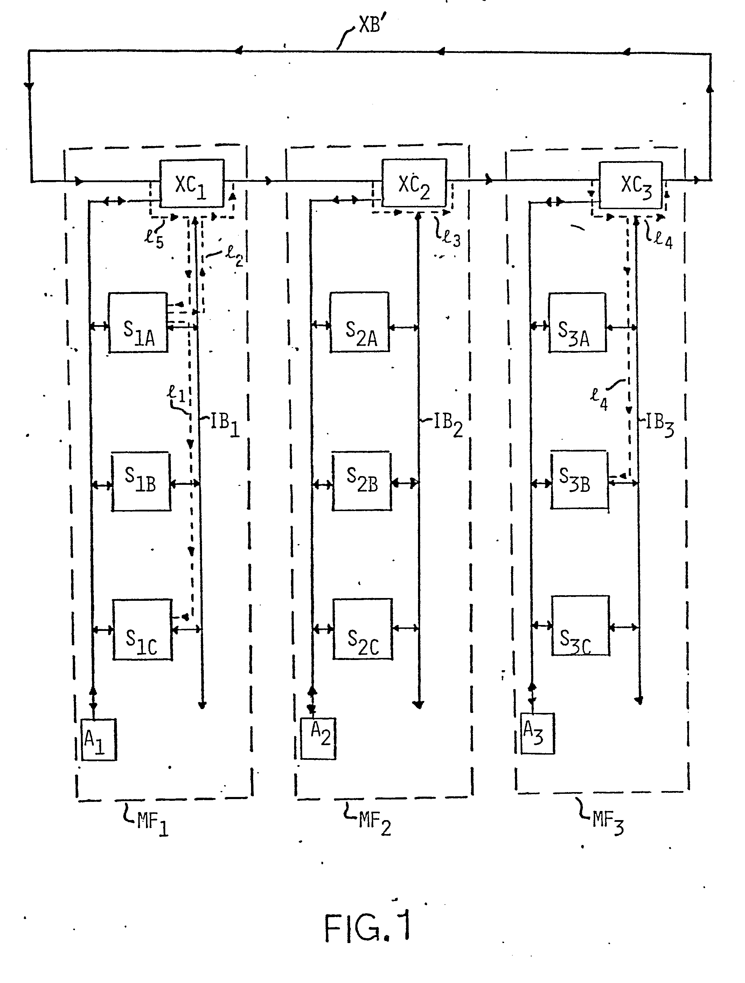

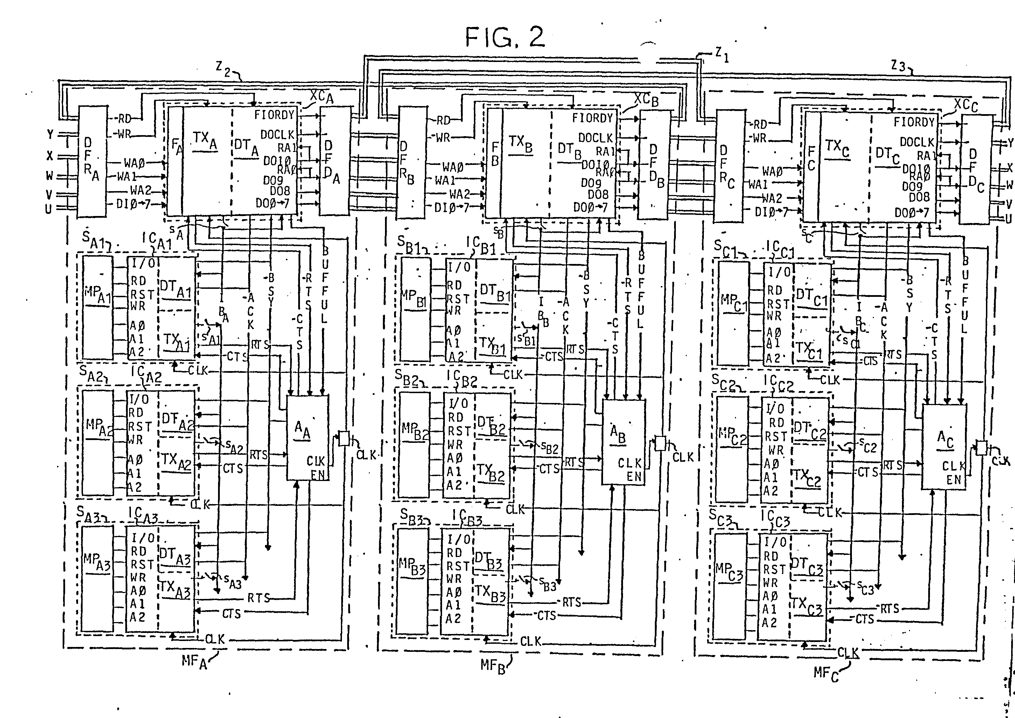

In order to provide a basic understanding of the overall operation of a bus system incorporating this invention, reference is made to FIGURE 1 in which three mainframes MF₁, MF₂ and MF₃ are shown at different points on an external bus XB' which is in the form of a loop. The mainframe MF₁ is comprised of a coupling means XC₁ for transferring signals from the external bus XB' to an internal bus IB₁ and vice-versa; three stations S_{1A}, S_{1B} and S_{1C} that can supply information to and receive information from the internal bus I_{B1} under the control of their respective microprocessors (not shown); and an arbitrator A₁ that determines the sequence in which the coupling means XC₁ and the stations S_{1A}, S_{1B} and S_{1C} have access to the internal bus IB₁. Much time is saved by including the coupling means XC₁ or any station in the sequence only when XC₁ or that station has a message to deliver. Messages placed on the external bus XB' by the coupling means XC₁ flow around the loop formed by the external bus XB' in a counterclockwise direction, as indicated by the arrows. The purpose of the bus system is to deliver messages provided by the microprocessor of a station to a designated station, but the microprocessor is not part of the invention. As will be seen, microprocessors only need provide messages in a given format, but achieving that result is well within the skill of the art. Except for subscripts, the mainframes MF₂ and MF₃ are the same a MF₁.

A bus system incorporating this invention is capable of performing five different types of communications and reacting to different situations that may be encountered in each in a manner explained in detail in connection with FIGURES 3A through 3E. I the description of these five types of communication, the path or paths followed by the message is indicated by a designated dashed line in FIGURE 1.

A first type of communication situation, also illustrate in FIGURE 3A, is from a station such as S_{1A} to a station such as S_{1C} in the same mainframe. As indicated by the dashed line ℓ₁, the message flows from S_{1A} to S_{1C} via the internal bus IB₁. In situation where S_{1C} can receive the message, it is delivered; but in a situation where S_{1C} cannot receive the message or where it can receive the message but is instructed by its microprocessor to only receive a message from another station, the message remains in the sending station S_{1A} until it is given another turn on the internal bus IB₁ and delivers the message or until the microprocessor of S_{lA} aborts the message.

A second type of communication situation, also illustrated in FIGURE 3B, occurs when a message from a station is put onto the external bus XB' for delivery to a station in another mainframe. If, for example, the message originates in S_{1A} of MF₁ and is intended for station S_{3B} in mainframe M_{F3}f it passes via the internal bus IB₁ to the coupling means XC₁ which places it on the external bus XB' as indicated by the dashed line ℓ₂. There are two situations that can be encountered. Either the coupling means XCₗ can make the transfer or it cannot. If it cannot, the message stays in the station S_{lA} to await another turn unless it is aborted.

A third type of communication situation, also illustrated in FIGURE 3C, occurs when a message on the external bus XB' arrives at the coupling means of a mainframe and is not intended for a station in that mainframe. An example is where a message is sent by ^{S}_{lA} in the mainframe MF₁ and intended for station S_{3B} in the mainframe MF₃. As indicated by the dashed line ℓ₃, the coupling means XC₂ of the mainframe M_{F2} is to transfer the message from the portion of the external bus XB' on its left to the portion of the external bus XB' on its right via the internal bus ^{IB}2. In one situation, the coupling means XC₂ can transfer the message from the internal bus IB₂ to the external bus XB'; but in another, it cannot do so, in which event the message is stored in XC₂ to await another turn.

A fourth type of communication situation, also illustrated in FIGURE 3D, occurs when a message on the external bus XB' arrives at a coupling means of a mainframe in which the station for which the message is intended resides, e.g., for the station S_{3B} in the mainframe MF₃. A completely successful communication requires that the message be delivered to the station S_{3B} and also that it be transferred to the external bus XB' so as to eventually arrive at the mainframe from which it came. Thus, as indicated by the dashed line ℓ₄, the coupling means XC₃ transfers the message from the section of the external bus XB' on its left to the internal bus I_{B3} and via the internal bus IB₃ to the station S_{3B}. The coupling means XC₃ also transfers the message from the internal bus IB_{c} to the section of the external bux XB' on its right. In a situation where the station _{S3B} can receive the message and the coupling means XC₃ can transfer the message to the external bus XB', the communication is completely successful; but there are four situations in which it is not. If the station S_{3B} cannot receive the message and the coupling means XC₃ cannot transfer it from the internal bus IB₃ to the external bus XB', the message stays in the part of the couping means XC3 at which it arrived. This also occurs if the coupling means XC₃ cannot transfer the message from the internal bus IB₃ to the external bus XB' even if the station S_{3B} can receive it. There are two situations in which the message is not delivered to the. station S_{3B} and is returned by the external bus XB' to the mainframe from which it came, in which event the station that originated the message will send it again on its next turn on its internal bus, unless the message has been aborted by its microprocessor. In one of these latter situations, the station S_{3B} is busy; and in another, it has been instructed by its microprocessor to only receive a message from a different sending station.

A fifth type of communication situation, also illustrated in FIGURE 3E, occurs when a message is returning to the mainframe containing the station that originated it, as briefly noted above. If, for example, the station S_{1A} originated the message, the coupling means XC₁ transfers it from the external bus XB' to the internal bus IB₁ and it flows along the internal bus IBᵢ to the station S_{1A}, as indicated by the dashed line ℓ₅. The station S_{1A} examines the message to see if it has been successfully delivered. If so, S_{1A} is prepared to receive a new message to transmit; but if not, S_{1A} will retransmit the message when it gets another turn on the internal bus IB₁, unless its microprocessor has aborted the message.

### Block Diagram

The general manner in which a bus system of this invention carries out the five communication types of FIGURES 3A through 3E will now be described by reference to the block diagram of FIGURE 2. The system is shown as being'comprised of three mainframes MF_{A}, MF_{B} and _{MFC} that are contained within separate rectangles formed by dash-dot lines. Since the mainframes are identical except for the letter subscripts employed, only the mainframe MF_{A} will be described.

Although more stations may be used, the mainframe MF_{A} is shown as having three stations S_{A1}, S_{A2} and S_{A3} which may be in the form of modules. The station S_{A1} is comprised of a microprocessor MP_{A1} and an internal chip IC_{A1}. The latter has a transmitter means TX_{A1} for transmitting signals to an internal bus IB_{A} and a data transfer means DT_{A1} for transferring signals from the internal bus IB_{A} to the microprocessor MP_{A1}. Information is passed from the microprocessor MP_{A1} via an eight-bit- wide input/output line I/O of the internal chip ICAl to registers in the transmitter means TX_{A1} selected by the combination of bits applied to the pins A0, Al and A2 when a -WR pin is low. Information is passed from registers in the data transfer means DT_{A1} via I/O to the microprocessor MP_{A1} when a -RD pin is low. The registers of the internal chip IC_{A1} that are to be written into and read from are illustrated in FIGURE. 9 and the combinations of the logic states of A0, Al and A2 for both write and read situations are shown in FIGURE 10. The microprocessor MP_{A1} can also send a signal to a reset input of the internal chip IC_{A1}. Although not shown, the transmitter means TX_{A1} and the data transfer means DT_{A1} each have their own state machine. Except for the numerals in the subscripts, the stations S_{A2} and S_{A3} are identical to the station S_{A1} just described.

The transmitter means TX_{A1}, TX_{A2} and TX_{A3} are respectively connected to the internal bus I_{BA} via normally open switches s_{A1}, s_{A2} and s_{A3}; and all of the data transfer means DT_{A1}, DT_{A2} and D_{TA3} are permanently connected to the internal bus IB_{A}.

An external chip XC_{A} is provided that has a transmitter means TX_{A} that receives data from an external bus XB via a fifo F_{A} and conveys it to the internal bus IB_{A} via a switch s_{A}. The external chip XC_{A} also has a data transfer means DT_{A} that transfers data from the internal bus IB_{A} to the external bus XB. If data is to pass directly from the transmitter means TX_{A} to the data transfer means DT_{A}, it is conveyed by the internal bus IB_{A}. If desired, noise immunity can be enhanced by differentially coupling the external chip XC_{A} to the external bus XB, in which event a differential driver _{DFDA} is coupled between the output of the data transfer means DT_{A} and the external bus XB, and a differential receiver DFR_{A} is coupled between the external bus XB and the input of the transmitter means TX_{A}.

In the manner described above, the mainframe MF_{A} is inserted at one point in the external bus XB. The mainframes MF_{B} and MF_{C} are inserted at successive points along XB by similar connections of their respective external chips XC_{B} and XC_{C}. The external bus XB includes a bundles U, V, W, X and Y. Each of these bundles goes from the differential driver of one mainframe to the differential receiver of the- next mainframe. Because of . space limitations, however, the portions of the pairs between the differential driver DFD_{C} of the mainframe MF_{C} and the differential receiver DFR_{A} are not shown. This part of XB therefore forms a loop. Because data passes through the mainframes MF_{A}, MF_{B} and MF_{C} in sequence, MF_{A} is prior to M_{FB}, MF_{B} is prior to MFC, and MF_{C} is prior to MF_{A}. Another pair of conductors in XB is connected between the differential driver of one mainframe and the differential receiver of the previous mainframe. Thus, a pair Zₗ is connected between DFD_{A} of MF_{A} and DFR_{C} of MF_{C}; a pair Z₂ is connected between DFD_{B} of MF_{B} and DFR_{A} of MF_{A}; and a pair Z₃ is connected between DFD_{C} of MF_{C} and DFR_{B} of MF_{B}.

When any of the transmitter means TX_{A1}, TX_{A2}, TX_{A3} and TX_{A} have a complete message to place on the internal bus IB_{A}, it asserts a signal -RTS (REQUEST TO SEND) on an individual control line between it and an arbitrator _{AA} that will be described in detail at a later point. If the arbitrator A_{A} grants such a request, it asserts a signal -CTS (CLEAR TO SEND) on an individual line between itself and the transmitter means selected so as to effectively close the corresponding one of the switches s_{A1}, s_{A2}, s_{A3} and s_{A}. The arbitrator A_{A} sends a -CTS signal in sequence to all transmitter means TX_{Al}, TX_{A2} and TX_{A3} of the internal chips that have asserted -RTS and places the transmitter just given access to the internal bus IB_{A} at the bottom of the sequence. In between each grant to successive transmitter means of the internal chips, it gives the transmitter means TX_{A} of the external chip XC_{A} an opportunity to have access to the internal bus IB_{A} if TX_{A} has a message to send.

For reasons which will become clear, two control lines -ACK and -BSY are connected to all of the internal chips IC_{A1}, ^{IC}_{A2} and IC_{A3} as well as to the arbitrator A_{A}, and another control line BUF FUL is connected between the data transfer means DT_{A} of the external chip XC_{A} and the arbitrator A_{A}.

The format of any message conveyed from a microprocessor to a transmitter means of one of the internal chips is set forth below.

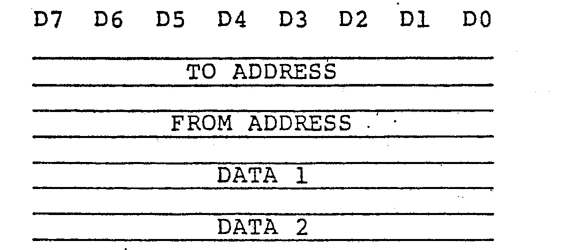

These eight-bit words are respectively written into the registers TTO, MFA, TD₁ and _{TD2} of the transmitter means shown in FIGURE 9 under the control of the bits applied to the pins A0, A1 and A2 as previously mentioned.

The TO address is the address of the station to which the message is to be sent and may or may not be in the same mainframe as the sending station. If two data words are supplied by the microprocessor, they will be written into the registers TD₁ and TD₂; but if only one data word is sent, it will be written into the register TD2. When TD₂ is written into the message is complete and -RTS is asserted.

The FROM address is the address of the sending station. Before operations begin, the FROM address is written into the MFA register while the reset input of the internal chip is set.

At this point, it should be noted that the eight bits of information in the registers of the transmitter means TX_{A1} have a ninth bit associated with them as illustrated below and that all nine bits are conveyed to the internal bus IB_{A}. These words will now be referred to as frames and their designations are to the left. The first eight bits come from the registers indicated at the right, FIGURE 9, and the ninth bit is added.

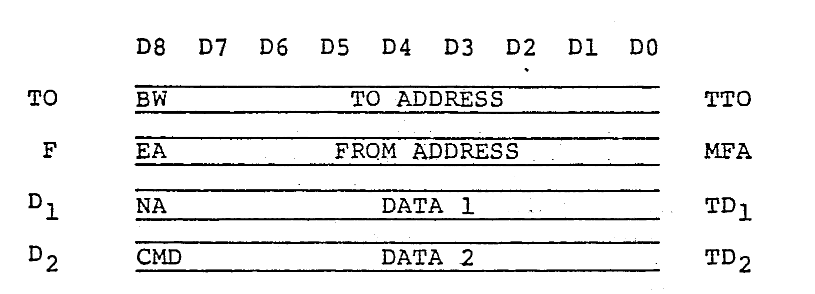

The BW bit in the TO frame will be set high by the transmitter state machine if the register TD₁ as no data and the register TD₂ does, and it will be set low if both TD₁ and TD₂ have data. The bit EA in the F frame and the bit NA in the Dₗ frame will be low at this point. As will be explained, they will be used to indicate the status of transmissions to a station in another mainframe. The CMD bit is not important to this invention, but provides an extra channel of communication that may be useful in certain circumstances. In a manner to be explained, it is set whenever a SEND CMD bit is set in the control register.

In the following description of the manner in which the bus system of FIGURE 2 carries out the five different communication types illustrated in FIGURES 3A through 3E, the situations (1), (2) and (3) that can be encountered in the communication type of FIGURE 3A are respectively illustrated in FIGURES 3Aₗ, 3A₂ and 3A3; the situations (4) and (5) that can be encountered in the communication type of FIGURE 3B are respectively illustrated in FIGURES 3B₁ and 3B₂; the situations (6) and (7) that can be encountered in the communication type of FIGURE 3C are respectively illustrated in FIGURES 3C₁ and 3C₂; the situations (8), (9), (10), (11) and (12) that can be encountered in the communication type of FIGURE 3D are respectively illustrated in FIGURES 3Dₗ, 3D₂, 3D₃, 3D₄ and 3D₅; and the only situation (13) that can be encountered in the communication type of FIGURE 3E is illustrated in FIGURE 3E₂.

The only completely successful communications are those illustrated in FIGURES 3A₁, 3B₁, 3C₁, 3D₁ and 3E₂.

In any communication, the sending transmitter means places the TO and F frames on the internal bus IB_{A} in sequence.

It is helpful to note that a message is terminated whenever -BSY is asserted. The arbitrator does this in the D₂ frame.

### Communication Type FIGURE 3A Situations (1),(2),(3)

In a communication between a station such as S_{A1} and a station such as S_{A3} that are both in the mainframe MF_{A}, the latter asserts a signal -AC:K on the control line of the same designation during the F frame to indicate that it is present; but if the communication is for a station in another mainframe such as S_{C2} in the mainframe MF_{C}, -ACK is not asserted. In either case the TO and F frames are automatically stored in the appropriate registers (shown in FIGURE 9) of the data transfer means DT_{A} of the external chip XC_{A} under the control of DT_{A}'s state machine. This assumes that the registers are empty. What occurs if.the registers of DT_{A} are not empty will be discussed in detail at a later point. If the communication is internal, the storage of the TO and F frames in this manner presents no problem because they can be written over.

In the situation (1), the addressee SA₃ is ready to accept data so that it does not assert -BSY. The absence of -BSY in either the F or D₁ frames permits the transmitter means TX_{A1} of the station SA₁ to complete the transmission through the frame ^{D}₂. The control signal -BSY appearing in the D₂ frame is asserted by the arbitrator _{AA} for synchronization purposes that will be explained when the flow charts are considered.

In the situation (2), the addressee S_{A3} has been instructed by its microprocessor MP_{A3} to receive from the same station that it last received a message from. If S_{A1} is that station, -BSY is not asserted and the transmission is completed; but if S_{A1} is not that station, a fact that cannot be determined until after the F frame, S_{A3} asserts -BSY during the D₁ frame and D₂ is not sent.

In the situation (3), the addressee S_{A3} is busy, i.e., its microprocessor MP_{A3} has not read all the data in its registers, the data transfer means DT_{A3} asserts -BSY during the F frame and the communication is terminated at that point; neither D₁ nor D₂ are placed on the internal bus IB_{A}.

### Communication Type FIGURE 3B Situations (4),(5)

In a communication from a station in one mainframe to a station in another, such as from the station S_{Al} in the mainframe MF_{A} to a station S_{C2} in the mainframe MF_{C}, the control signal -ACK is not asserted during the F frame on the -ACK control line of MF_{A} because the addressee S_{C2} is not in MF_{A} and no station in MF_{A} can assert -BSY because no station in MF_{A} is the addressee.

In situation (4), the registers of the data transfer means DT_{A} of the external chip XC_{A} are empty so that they can receive data, in which event TX_{A1} places all four frames of the message on the internal bus IB_{A} in sequence. The state machine for the data transfer means DT_{A} of the external chip XC_{A} also stores the frames D₁ and D₂ when they are put on the internal bus IB_{A} by the transmitter means TX_{A1} of the station S_{A1}.

When the D₂ frame is stored in its register of DT_{A}, a cede state machine that is not shown in FIGURE 2 but which is part of the data transfer means DT_{A} sends a signal -DOCLK to the -WR pin of the external chip XC_{B} in the next mainframe MF_{B} along the external bus XB. If the fifo F_{B} is ready to receive data, it asserts a signal -FIORDY that is conveyed by differential conductor pair Z₂ back to the code state machine via DFR_{A} and the -RD pin so that the external communication can proceed.

-The code state machine of the data transfer means D_{TA} of the external chip XC_{A} provides four combinations of two bits from its status register that are used to successively select the order in which the data frames TO, F, Dₗ and D₂ are to be read and placed on the external bus XB. These same bits are respectively placed on the output pins D09 and DO10 of the data transfer means D_{TA} so that they are carried along with the rest of the message DO0-DO8 to the fifo F_{B} of the next mainframe. At the output of the fifo F_{B}, the code bits are respectively connected to the WAO and WAl pins of the transmitter means TX_{B} of the external chip XC_{B} so as to place the first nine bits of the frames in the proper registers of TX_{B}. The frames with the added bits appear at the output pins of DT_{A} as illustrated below. Note that the bit positions DO0-DO8 correspond to the bit positions DO-D8 of the words on the internal bus IB_{A}.

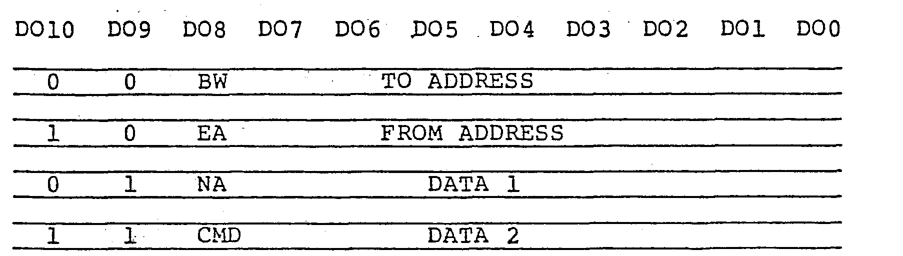

In situation (5), the registers of the data transfer means DT_{A} are not all empty so that DT_{A} cannot receive a message. In this case, the signal BUF FUL is asserted during the TO frame, but the state machine of DT_{A} has to wait until the end of the F frame to see by the assertion or non-assertion of -ACK whether the message is for a station in the mainframe MF_{A} or for a station in another mainframe. If -ACK is asserted in the F frame, the addressee is in the same mainframe and D_{TA} does nothing; but if -ACK is not asserted in the F frame, the addressee is in another mainframe, in which event DT_{A} asserts -BSY during the D₁ frame. At this point, S_{A1} re-asserts RTS and tries to successfully complete its communication when granted CTS by the arbitrator A_{A}.

### Communication Type FIGURE 3C Situations (6) (7)

In a communication from a station S_{A1} in the mainframe MF_{A} to the station S_{C2} in the mainframe MF_{C}, the message passes from the transmitter means TX_{B} of the external chip XC_{B} to its own data transfer means DT_{B} via the internal bus IB_{B}. After the message has bubbled up through the fifo F_{B} and the TD₂ register (FIGURE 9) is full, TX_{B} asserts a request-to-send signal on its -RTS control line to the arbitrator A_{B} for the mainframe MF_{B}. If the arbitrator A_{B} asserts clear-to-send on the -CTS control line between it and TX_{B}, the switch S_{B} is closed to connect the data lines D08-DOO to the internal bus IB_{B}. The state machine of TX_{B} then places the TO frame on the internal bus I_{BB}. Because the TO address is for the station S_{C2} which is not in the mainframe MF_{B}, the signal -ACK will not be asserted.

In the situation (6), BUF FUL is not asserted, the nine- bit frames TO, F, Dₗ and D₂ are conveyed by the internal bus IBB to the appropriate registers in the data transfer means DT_{B} of the external chip XC_{B} and are placed on the external bus XB with the added bits D09 and DO10 the same as before and with the DO8 bits unchanged.

In the situation (7), the registers of DT_{B} are not empty so that it asserts a signal BUF FUL on the line to the arbitrator A_{B} during the TO frame. After waiting until the end of the F frame to see whether.the message is for a station in MF_{B}, a fact that would be indicated by the assertion of -ACK in the F frame, the data transfer means DT_{B} asserts -BSY during the D₁ frame and D₂ is not transmitted. The arbitrator A_{B} then asserts -BSY on the -BSY control line for synchronization purposes and the message remains in ^{TX}_{B} to await another turn on the internal bus I^{B}B_{.}

### Communication Type FIGURE 3D Situations (8) through (12)

In this type of communication, the message arrives at the transmitter means of the external chip for the mainframe containing the TO address station, e.g., the message already described that originated in TX_{A1} of the station S_{A1} in MF_{A} and which is intended for the station S_{C2} in MF_{C}. After the message has bubbled up through the fifo F_{C} and the D₂ frame is stored in the ^{TD}2 register of the transmitter means TX_{C} of the external chip XC_{C} of the mainframe MF_{C}, the state machine of TX_{C} asserts a request-to-send signal on the -RTS control line to the arbitrator A_{C}. If the arbitrator A_{C} asserts'clear-to-send on the -CTS control line to TX_{C}, the switch s_{C} is closed and TX_{C} places the TO and F frames on the internal bus IB_{C} in sequence.

In the situation (8), the station S_{C2} for which the message is intended asserts -ACK on the -ACK control line during the F frame, but because its registers are empty and because it has not been instructed by its microprocessor MP_{C2} to only receive a message from a station other than S_{A1}, it does not assert -BSY during the F frame. The registers of the data transfer means DT_{C} of the external chip XC_{C} of the mainframe MF_{C} are ready to receive data so that BUF FUL is not asserted. In this event, TX_{C} sequentially places the D₁ and D₂ frames on the internal bus IB_{C} and they are stored in registers of the data transfer means D_{TC}. In order to inform the originating station S_{A1} that the message has been delivered, the ninth bit EA is set to unity and NA is left at zero. This is necessary in order to permit the registers TTO, MFA, TD₁ and _{TD2} of the originating transmitter means TX_{A1} to receive another message. Otherwise, the message would be repeatedly transmitted.

In the situation (9), S_{C2} asserts -ACK during the F frame but the data registers of the data transfer means DT_{C} of the external chip XC_{C} are full so that the state machine of DT_{C} asserts BUF FUL, the arbitrator A_{C} asserts -BSY during the Dₗ frame, and the message stays in the registers of DT_{C} regardless of the condition of the TO address of the station S_{C2} and awaits another turn on the internal bus IB_{C}.

In situation (10), the station S_{C2} asserts -ACK during the F frame, but neither it nor the data transfer means DT_{C} are capable of receiving data so that -_{B}SY is asserted during the F frame and the message remains in TX_{C} to await the assignment of another turn on the internal bus XB_{C} by the arbitrator A_{C}. The bits EA and NA remain at zero.

In situation (11), the data registers of the data transfer means DT_{C} of the external chip XC_{C} are empty but the data registers of the address station S_{C2} are full so that it asserts -BSY as well as -ACK during the F frame. The state machine for the data transfer means DT_{C2} tests to see if the transmitter means TX_{C} is sending the message. If so, it asserts ₋BSY during the Dₗ frame. Otherwise, -BSY would be unasserted during the F frame and the communication would terminate as in the situation (10). The arbitrator A_{C} asserts -BSY in the D₂ frame as is required for synchronization, and the state machine for DT_{C2} sets the ninth bit EA of the F frame and NA of the D₁ frame to a logic high. This indicates that the TO station exists but is busy. The Dₗ and _{D2} frames are loaded into the registers of the data transfer means DT_{C} of the external chip XC_{C} and transmitted in the manner previously'described to the fifo F_{A} of the mainframe M_{FA}. Because EA=l and NA=l, the message remains in the registers of the originating transmitter means TX_{A1} waiting for TX_{A1} to have another turn on the internal bus I_{BA}. Unless the message is aborted by the microprocessor MP_{A1}, TX_{A1} cannot send a new message. The reason for passing the message around the loop formed by the external bus XB rather than causing it to remain in the transmitter means _{TXC} is to prevent the external bus XB from being clogged.

In the situation (12), the registers of the data transfer means DT_{C} are ready to receive data, but the station S_{C2} for which the message is intended has been instructed by its microprocessor MP_{C2} to only receive a message from a station other than S_{A1} at which the message originated. In this event, S_{C2} asserts -ACK during the F frame but the state machine for the data transfer means DT_{C1} cannot know until after the F frame where the message is coming from. When it sees that the message is not from the designated station, it asserts -BSY during the D₁ frame. The arbitrator A_{C} asserts -BSY during the D₂ frame, as is usual so that the complete message is placed on the external bus X_{B} even though it has not been delivered to S_{C2}. As in the situation (11), this is done in order to prevent the external bus XB from becoming clogged.

### Communication Type FIGURE 3E Situation (13)

Now assume that the message has been delivered to the TO address station S_{C2} and that it is stored in the registers of the data transfer means DT_{C} of the external chip SC_{C} with EA⁼1 and NA=0. After the handshake performed by -DOCLK and -FIORDY has been successfully performed between the data transfer means ^{DT}_{C} and the fifo F_{A} in the external chip XC_{A} and the message has been delivered via the external bus X_{B} to the fifo _{FA} and bubbled up through it to the registers in the transmitter means TX_{A} as controlled by the additional bits D09 and D010, the transmitter means TX_{A} asserts -RTS. When it receives -CTS, the switch s_{A} is closed and the TO and F frames are put on the internal bus IB_{A}. Since the TO address station S_{C2} is not in the mainframe MF_{A}, neither -ACK nor - BSY are asserted in the F frame. The data transfer state machine of DT_{A1} of the station S_{A1} determines whether or not the address in the F frame of the message is the same as the address of the station S_{A1} that is stored in its MFA register, FIGURE 9. If it is, -ACK and -BSY are asserted during the D₁ frame and the registers of the transmitter. means TX_{A1} are prepared to receive a new message if EA=l and NA=0. But even if the addresses match, TX_{A1} is not prepared to receive a new message if EA=l and NA=l because, although the TO address station is present, it is busy and the message has not been successfully transmitted.

For convenience, the significance of the different combinations of EA and NA are set forth below.

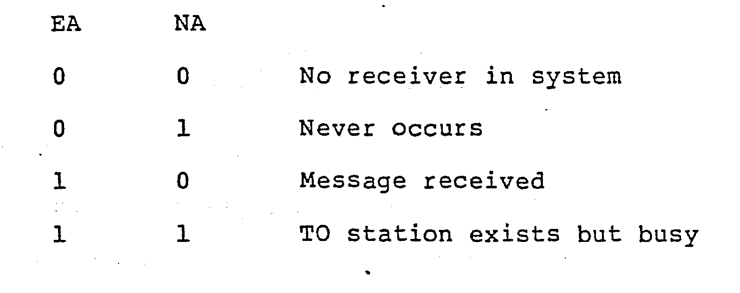

### Communication Types and Situations

Whereas the description of the block diagram of FIGURE 2 explained in a general way the operation of the various components of a bus system incorporating this invention, the following description of FIGURE 3 will explain the operation with reference to the flow charts for the various state machines.

FIGURES 3A, 3B, 3C, 3D and 3E are block diagrams respectively illustrating the paths to be followed by the message in different types of communication, and the graphs in the same respective rows illustrate the signals -BSY, -ACK and BUF FUL that occur in different situations. The blocks with XTX in their identification are transmitter means of an external chip; the blocks with XDT are data transfer means of an external chip; the blocks with ITX are transmitter means of an internal chip; and the blocks with IDT are data transfer means of an internal chip. An internal bus is designated by IB and the external bus is designated by XB.

The graphical figures of the drawing are divided by dashed lines into successive time periods equal to one cycle of the clock pulses that are shown at the top of each column. Each time period is labelled at the top with the frame of the message that is occurring. In the flow charts for the various state machines and in the discussion below, the graphical situations are respectively identified by numbers in parentheses rather than by the figure designations.

A completely successful delivery of the four frames TO, F, D₁ and D₂ of a message occurs only in FIGURES 3A₁, 3B₁, 3C₁ and 3D₁; and preparing a transmitter means for the transmission of a new message after a successful delivery occurs in FIGURE 3^{E}₂, Whereas it might seem that FIGURES 3D₄ and 3D₅ represent a successful delivery of the four frames of a message because the time periods are labelled TO, F, D₁ and D₂, they are situations in which the message is not delivered to the TO station and is sent on around the external bus XB to prevent lock-up.

Although the flow charts for the various state machines are discussed in detail at a later point, they are briefly referred to below. The reader may wish to study their detailed discussion at this point, but it is not thought necessary. In the flow charts, the dots define clock cycles and frames, and the frame in which a decision is made is indicated near the decision block. Communication situations are in parentheses and machine states are in brackets.

It should be kept in mind that -BSY will be asserted by some state machine whenever a message is prematurely terminated and that -BSY is asserted by the arbitrator in the D₂ frame of a complete message. This is done for synchronization purposes. The assertion of -BSY resets all state machines (except the code state machine) to their initial state [0], and -BSY is only unasserted when the arbitrator receives an -RTS signal.

### Communication Situations (1),(2)

Communication situation (1) is a completely successful communication in which the full message is delivered from ITX_{A} to the registers of ID_{TA} that is in the same mainframe and is the same as the situation in FIGURE 2 when, as previously discussed, a message was sent from the transmitter means TX_{A1} of station S_{A1} to the data transfer means DT_{A3} of station S_{A3}.

The internal transmitter means IT_{XA} places the TO and F frames on the internal bus IB as indicated by blocks 604 and 608 of FIGURE 6A. Before placing the D₁ and D₂ frames on the internal bus IB, however, a decision block d603 checks the levels of -BSY and -ACK which are provided by the state machine for the internal data transfer means IDT_{A} shown in FIGURE 7A in a manner described below. In this situation, -BSY is not asserted and -ACK is. The Dₗ frame is placed on the internal bus IB by a block 618, and after a check of -_{BSY} in the _{D1} frame by a decision block d605, the D₂ frame is placed on the internal bus IB by a block 620. The TDRE (TRANSMIT DATA REGISTER EMPTY) flag is then set by a block 622 so that the registers of the transmitter means I_{TXA} can receive another message from the microprocessor, not shown in FIGURE 3A. The state machine for ITX_{A} then returns to the state [0]. In all communication situations, the TO and F frames are placed on the internal bus IB as just described, but different paths are followed for different outputs of decision block d603.

The way in which the levels of -ACK and -BSY are determined so that decision block d603 of FIGURE 6A may make its decision is as follows. In the flow chart of FIGURE 7A for an internal data transfer means such as IDT_{A}, a decision block d702 determines that IDT_{A} is a section of an internal chip, and in situations (1) and (2) it will indicate by the state of RDRF (READ DATA REGISTER FULL) that the registers of IDT_{A} are empty. The TO address is loaded into a register RTO (see FIGURES 9 and ¹⁰) of ^{IDT}A by a block 710, and a check is made by a decision block d706 during the F frame to see if the TO address is the address of the station in which IDT_{A} is located. This is done by comparing the address in the RTO register with the address in the MFA register. In situations (1) and (2), the address will be the same so that -ACK is asserted by a block 712.

A decision block d708 checks during the F frame to see if the microprocessor has set the SAME SEND flag of the control registers shown in FIGURE 10B. 'If it has, it means that the data transfer means IDT_{A} is to load a message on the internal bus IB into its registers only if it comes from the same station as the last message it received. The address SSA for the station from which the last message was received is in the RFA (RECEIVED FROM ADDRESS) register of the internal chip in which ITX_{A} and IDT_{A} are located. If the decision block d708 outputs "1,1" the SAME SEND bit has been set; but the FROM address of the message on the internal bus IB is not the same as that in RFA, in which event the state machine moves to a state [15] during the D₁ frame and a block 714 asserts -BSY as noted in FIGURE 3A₂. This is the communication situation (2).

If, however, the decision block d708 indicates that the SAME SEND bit is not set or.that it is set and the addresses are the same, the F frame is loaded into its register by a block 716 and a new state [9] is entered at the start of the D₁ frame. If decision block d709 indicates that -BSY and -ACK are not asserted during the D₁ frame, the D₁ frame is loaded into the register DTD₁ of FIGURE 10A by a block 717 and a new state [14] is entered during the D₂ frame in which _{D2} is loaded by a block 718. This is communication situation (1) of FIGURE 3A₁. The CMD flag in the status register of FIGURE 10A is set by a block 720, and the RDRF flag is set by a block 722 before the machine goes to the state [0].

At this point, it should be noted that the BW bit, which is the ninth bit in the TO frame, is set to "1" whenever the microprocessor writes data into the TD₂ register without first writing data into the TD₁ register; but it is set to "0" if data is in both registers. The BW bit and the RDRF flag bit can be used to indicate where the valid data is in the registers of the internal chip as indicated below.

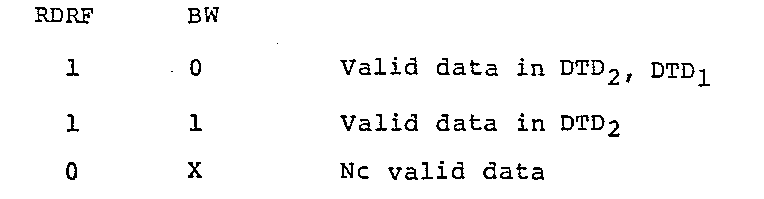

Although the external data transfer means XDT_{A} of the external chip has no apparent part to play, it is on the internal bus IB and will accept data so that all the frames thereon could be stored in it. It operates when the MF/-M bit is set high, a fact that is detected by decision block d702 in the TO frame. A decision block d710 monitors the -CTS line to the transmitter means XTX_{A} of its own external chip. In the situations (1) and (2), -CTS will be high because ITX_{A} has received a -CTS (CLEAR TO SEND) signal and is therefore on the internal bus IB. The data transfer means such as XDT_{A} of an external chip makes its BUF FUL signal high during the TO frame when its registers are full and low if they are empty. A decision block d711 monitors BUF FUL. If it is high, the machine advances to a state [11] during the F frame and decision block d712 monitors -BSY and -ACK. If -BSY is not asserted and -ACK is, it means that the system is in the situation (1). The state machine for XDT_{A} then enters a state [5] during which, as shown below decision block d704 of FIGURE 7A, the machine will wait for -BSY to be asserted and then go to the state [0]. The assertion of -ACK means that the message is for a station in the mainframe and that it is not to go external. This procedure occurs in situations (1) and (2).

It is quite possible, however, that the registers of the external data transfer means _{XDTA} will be empty, in which event blocks 724 and 726 will respectively load the TO and F frames into registers of XDT_{A}; but when decision block d713 checks -BSY and -ACK during the F frame, the machine again goes to the state [5] to await the assertion of -BSY before returning to the state [0].

### Communication Situation (3)

This situation is one where the message cannot be delivered to the internal data transfer means IDT_{A} because its receiving registers are full. The same situation can exist in FIGURE 2 in communicating between the transmitter means TX_{A1} and the data transfer means DT_{A3}. This fact is indicated by decision block d702 of FIGURE 7A when RDRF=1. Since -M is asserted, a decision block d703 indicates during the F frame whether or not the message on the internal bus IB is for it. If so, a block 702 asserts -ACK and a block 74 asserts -BSY as is required in this situation before the state machine returns to the state [0].

As in the situations (1) and (2) just discussed, the external data transfer means XDT_{A} plays no part in situation (3) but it is on the bus. In the situation (3), however, both -BSY and -ACK are asserted in the F frame so that the state machine is returned to the state [0] by decision block d712 of FIGURE 7B if the registers of XDT_{A} are full, and by decision block d713, after loading the TO and F frames with blocks 724 and 726, if the registers are empty.

### Communication Situations (4),(5)

In the type of communication involved in these situations, the message is to go from an internal transmitter means ITX_{B} to an external data transfer means XDT_{B}, which is the same as the message going from the transmitter means TX_{Al} to the data transfer means DT_{A} in FIGURE 2. The TO and F frames of a message are placed on the internal bus IB by ITX_{B} in the same way as described above in connection with ITX_{A} of FIGURE 3A, i.e., by blocks 604 and 608 of FIGURE 6A. Since the data transfer means XDT_{B} is in an external chip, the decision block d702 of FIGURE 7A .will indicate that MF/-M is high so that the state machine of FIGURE 7B for the data transfer means of an external chip goes into operation. It first monitors the -CTS line from the arbitrator (not shown) to the transmitter means XTX_{B} in the same external chip to see whether it is on the internal bus IB or whether an internal transmitter means such as ITX_{B} is. In situations (4) and (5), -CTS will be high because XTX_{B} is not on the internal bus IB.

A decision block d711 monitors the BUF FUL line that indicates in the TO frame whether the data registers of the data transfer means XDT_{B} for the external'chip are full. If they are, the transmission cannot be completed. The decision block d712 in FIGURE 7B tests -ACK and -BSY. Since no data transfer means of an internal chip has been addressed, neither -BSY nor -ACK are asserted during the F frame. The machine goes into a state [15] where, as shown in connection with d708 of FIGURE 7A, -BSY is asserted to abort the transfer during the Dₗ frame as can be seen in FIGURE 3_{B2}, which is the situation (5).

Because no internal station is addressed, neither -BSY nor -ACK are asserted during the F frame. Therefore, decision block d603 of the state machine of FIGURE 6A for an internal transmitter means such as I_{TXB} causes the machine to go to a state [5] in which the D₁ and D₂ frames are put on the internal bus IB by blocks 624 and 626 respectively. Thus, if decision block d711 of FIGURE 7B indicates that the registers of the external data transfer means X_{DTB} are empty, i.e., BUF FUL=0, the transmission can be completed, as in the situation (4) of FIGURE 3B₁. Blocks 724 and 726 of FIGURE 7B respectively load the TO and F frames into the registers, and decision block d7l3 checks during the E frame for -ACK and -BSY. As noted above, they are not asserted. The state machine then goes to a state [9] which, as shown in connection with decision block d709 of FIGURE 7A, completes the communication.

### Communication Situations (6),(7)

The communication type in which these situations occur is illustrated in FIGURE 3C. The message is to go from the transmitter means XTX_{C} in an external chip to the'data transfer means XDT_{C} of the same chip. This is the same way that the message went in FIGURE 2 from the transmitter means TX_{B} of the external chip XC_{B} to its data transfer means DT_{B}.

After receiving the signal -CTS from the arbitrator, the transmitter means XTX_{C} of the external chip successively places the TO and F frames on the internal-bus IB with the blocks 604 and 608 of FIGURE 6A in the same way as an internal transmitter means previously described, but decision block d602 will now have a high output for MF/-M so that the state machine for the transmitter means of an external chip will be in operation from. this point on. The functions of this state machine are illustrated in FIGURE 6B. In FIGURE 6B, a decision block d612 tests -BSY and -ACK during the F frame. Neither will be asserted in the F frame because the message is not for a station in this mainframe. The state machine for the external transmitter means XTX_{C} then goes to a state [7] and places the D₁ frame on the internal bus IB with the block 638. A decision block d613 tests -BSY and -ACK in the D₁ frame.

The assertion or non-assertion of these signals is determined by the state machine of FIGURE 7B for the data transfer means of an external chip such as XDT_{C}. The decision block d710 will have a low output because -CTS has been asserted by the arbitrator on the line going to the external transmitter means XTX_{C}. During the TO frame, a decision block d714 of FIGURE 7B tests BUF FUL, which, as previously explained, indicates to the arbitrator whether or not the registers in XDT_{C} are full or empty.

In the completely successful communication situation (6) of FIGURE 3C, the registers of the external data transfer means ^{X}DT_{C} will be empty so that the output of the decision block d7l4 is low. The state machine of the external data transfer means XDT_{C} then loads the TO frame into its register as indicated at block 728. It then enters a state [8] during the F frame and loads it into its register as indicated by a block 730. During the F frame, a decision block d716 tests -BSY and -ACK. As noted above, the TO address is not in the mainframe so that -ACK and -BSY are not asserted. The machine then goes to a state [9] of FIGURE 7A but because the functions performed during this state are shown in connection with a decision block d709, they are not shown again in FIGURE 7B. In state [9], a check of -BSY and -ACK is made during the D₁ frame by the decision block d709. As neither is asserted, the Dₗ frame is loaded into a register of the external data transfer means X_{DTC} by a block 717. The non-assertion of -BSY and -ACK is also noted by a decision block d613 in the flow chart of FIGURE 6B for the external transmitter means XTX_{C} so that it goes to the state [15] in which, as shown in connection with decision block d605 of FIGURE 6A, the D₂ frame is placed on the internal bus IB. During the D₂ frame, the state machine for XDT_{C} then enters a state [14] in which the D₂ frame is loaded into the D₂ register of _{XDTC} by a block 718 and the CMD and RDRF bits are respectively set by blocks 720 and 722 before .the machine returns to the state [0]. This is the completed communication (6).

In communication situation (7), however, the registers of the external data transfer means _{X}D_{TC} are full so that BUF FUL is asserted in the TO frame and the output of decision block d7l4 of FIGURE 7B is high. The machine then enters a state [1] during the F frame and checks -BSY in decision block d7l5. Because the TO address is not in.the mainframe, -BSY is not asserted in the F frame so that the output of d715 is high. This causes the machine to go to state [15], which is illustrated in connection with decision block d708 of FIGURE 7A, wherein -BSY is asserted in the _{Dl} frame as required and this, in turn, causes decision block d613 of the state machine for the external transmitter means _{XTXC} shown in FIGURE 6B to set -RTS by a block 640 before it returns to the state [0].

### Communication Situations (8),(9),(10),(11),(12)

The communication type in which the situations (8) through (12) occur is illustrated in FIGURE 3D. For a completely successful communication, as illustrated by communication situation (8) of FIGURE 3D₁, the message has to go from the transmitter means XTX_{D} of an external chip to the data transfer means XDT_{D} of the same external chip and to the data transfer means IDT_{D} of an internal chip in the same mainframe. This is the same as the communication in FIGURE 2 from TX_{C} to DT_{C} and to DT_{C2} of the mainframe MF_{C}.

### Communication Situation (8)

In the successful communication situation (8) of FIGURE ^{3D}ₗ, a message is completely delivered from the external transmitter means XTX_{D} to the external data transfer means XDT_{D} as well as to the internal data transfer means IDT_{D}. This situation may be involved in the communication in FIGURE 2 between TX_{C} to DT_{C} and to DT_{C2}.

The TO and F frames are put on the internal bus IB by the blocks 604 and 608 of FIGURE 6A.

The response of the internal data transfer means IDT_{D} can be seen in FIGURE 7A. During the TO frame, the output of decision block d702 will be low because it is ready to receive a message. The TO frame is loaded into its register by a block 710 and a decision block d706 indicates by a high output that the internal data transfer means _{IDTD} is the addressee. A block 712 then asserts -ACK. Because the SAME SEND bit is not asserted in communication situation (8), the output of decision block d708 is low and the F frame is loaded into its register by the block 716. A test is then made of -BSY and -ACK in the Dₗ frame by decision block d709.

The response of the external data transfer means XDT_{D} can be seen in FIGURE 7B. During the TO frame, the output of a decision block d710 that tests whether -CTS has been sent to the external transmitter means XTX_{D} is low because the latter is on the internal bus IB. In this situation, decision block d714 will show that the registers of the external data transfer means XDT_{D} are empty. The TO frame is then loaded into its register by a block 728, and the F frame is loaded into its register by the block 730. A test is then made of -BSY and -ACK in the F frame by the decision block d716. It will find that -ACK is asserted by the block 712 of FIGURE 7A as just described and that -BSY was not asserted during the F frame so that the machine goes to a state [13].

As seen in FIGURE 6B for the external transmitter means XTX_{D}, -BSY and -ACK are tested in the F frame by the decision block d612. With -BSY not asserted and -ACK asserted, the D₁ frame is put on the internal bus IB by a block 650 and a test is made of BUF FUL and -BSY by decision block d615 in the D₁ frame. Since -BSY is not asserted and the registers of the external data transfer means XDT_{D} are empty, the machine proceeds to a state [15] which, as can be seen in FIGURE 6A, places the _{D2} frame on the internal bus IB with a block 620 and sets the TDRE flag with a block 622 so as to permit the external transmitter means XTX_{D} to receive a new message.

Return now to FIGURE 7A for the internal data transfer means ID_{TD}. Neither -BSY nor -ACK have been asserted during the D₁ frame so that decision block d709 directs the machine to complete loading the message. Block 717 loads the frame Dₗ into its register, block 720 loads the CMD bit, and block 722 sets the RDRF flag in the status register

At last mention, the state machine (FIGURE 7B) for the external data transfer means _{XDTD} had just entered the state [13]. In this state, the D₁ frame is loaded into its register by a block 740, EA is set to "1" by a block 742, and a check of -BSY during the D₁ frame is made by decision block d7l7. Since -BSY is not asserted, the machine goes to a state [14] which, as can be seen from FIGURE 7A, loads the D₂ frame into its register and completes the transmission. Thus, in the communication situation (8), the message is delivered to XDT_{D} and IDT_{D} as required.

### Communication Situation (9)

In the communication situation (9) of FIGURE 3D₂, the registers of the external data transfer means XDT_{D} are full, the registers of the internal data transfer means I_{DTD} are empty, and ^{IDT}_{D} has not been instructed to receive only from the same station as last time. The message cannot be put onto the external bus XB and therefore should not be delivered to the internal data transfer means IDT_{D}, even though it is ready to receive a message. Therefore, the message must stay in XTX_{D} until its next turn on the internal bus IB. This situation may be involved in the communication in FIGURE 2 from TX_{C} to DT_{C} and to DT_{C2} of the mainframe MF_{C}.

After the TO and F frames have been placed on the internal bus IB, the procedure in the state machine of FIGURE 7B for the external data transfer means XDT_{D} is as follows. The output of decision block d710 is low as it was in communication situation (8), but the output of decision block d714 is high because XDT_{D}'s registers are full in this situation. The machine enters a state [1] where decision block d715 checks for -BSY during the F frame. Even though BUF FUL is asserted before the TO frame, it does not cause -BSY to be asserted in the F frame so that the output of decision block d715 is high and causes the machine to go to the state [15]. In this state, as shown in FIGURE 7A, -BSY is asserted during the D₁ frame as shown in FIGURE 3_{D2}. The machine of FIGURE 7A then returns to the state [0].

After the TO and F frames have been placed on the internal bus IB, the procedure for the state machine of FIGURE 7A for the internal data transfer means IDT_{D} is as follows. The TO frame is loaded into its register by the block 710, decision block d706 indicates that IDT_{D} is the addressee and -ACK is asserted by the block 712 during the F frame as shown in FIGURE 3^{D}₂. Since the SAME SEND bit is not set, a block 716 loads the F frame and decision block d709 checks -BSY and -ACK in the Dₗ frame.

In the meantime, decision block d612 of the state machine of FIGURE 6B for the external transmitter means XTX_{D} checks -BSY and -ACK in the F frame. Since -ACK was asserted by block 712 of the state machine of FIGURE 7A for the internal data transfer means IDT_{D} and -BSY has not been asserted, the output of decision block d612 leads to a block 650 where the D₁ frame is put on the internal bus IB. During the Dₗ frame, decision block d615 checks -BSY and BUF FUL. As stated, the assertion of BUF FUL caused -_{B}SY to be asserted in the Dₗ frame. This causes -RTS to be set for the external transmitter means XTX_{D} by a block 652 so that it will await its next turn on the internal bus IB. The state machine then goes back to state [0].

### Communication Situation (10)

In the communication situation (10) of FIGURE 3D₃, the registers of XDT_{D} and ID_{TD} are both full so that the message cannot be delivered to either and cannot go around the external loop. This situation may be involved in the communication in FIGURE 2 between TX_{C} to DT_{C} and to DT_{C2}.

After the TO and F frames have been placed on the internal bus IB by the external transmitter means XTX_{D}, decision block d702 of FIGURE 7A in the state machine for the internal data transfer means ID_{TD} indicates that RDRF=1 during the TO frame. The TO address is latched and checked during the F frame to see if IDT_{D} is the addressee. Since it is, -BSY and -ACK are asserted during the F frame by blocks 702 and 704 respectively as shown in FIGURE 3D₃ and the machine returns to the state [0].

The assertion of -BSY and -ACK in this manner causes decision block d612 in the state machine of FIGURE 6B for the external transmitter means XTX_{D} to direct the procedure to a decision block d614 that checks BUF FUL. Because the registers of the external data transfer means XDT_{D} are full, the message cannot be sent around the external loop and a block 644 sets -RTS before the transmitter state machine returns to the state [0]. Therefore, the message remains in X_{T}X_{D} to await another turn on the internal bus IB.

In the state machine of FIGURE 7B for the external data transfer means XDT_{D}, -CTS is asserted so that BUF FUL is checked by the decision block d714. BUF FUL is high because XDT_{D}'s registers are full and -BSY is checked during the F frame by decision block d7l5. Because -BSY has been asserted in the F frame by the block 702 of FIGURE 7A, the state machine returns to the state [0].

### Communication Situation (11)

In the communication situation (11) of FIGURE 3D₄, the registers of the internal data transfer means IDT_{D} are full but - the registers of the external data transfer means XDT_{D} are empty, so that the message should not be delivered to IDT_{D} but put on the external bus XB for circulation. This situation may be involved in the communication in FIGURE 2 between TX_{C} to DT_{C} and to DT_{C2}.

The TO and F frames are put on the internal bus IB by the external transmitter means XTX_{D}.

The reaction of the state machine of FIGURE 7B for the external data transfer means XDT_{D} is as follows. Since XTX_{D} is on the internal bus IB, the output of decision block d710 is low and the decision block d714 checks BUF FUL. In this situation, decision block d714 will indicate that the registers of XDT_{D} are empty, and the TO and F frames are loaded into the registers by the blocks 728 and 730 respectively.

Since MF/-M and RDRF are asserted in the decision block d702 of the flow chart of FIGURE 7A for the state machine of the internal data transfer means I_{DTD}, the decision block d703 checks to see if I_{DTD} is the addressee. Since it is and cannot receive data, it asserts -ACK and -BSY with blocks 702 and 704 respectively during the F frame before returning to the state [0].

The state machine of FIGURE 6B for the external transmitter means X_{TXD} monitors -BSY and -ACK during the F frame with decision block d612. Since they are asserted by the blocks 702 and 704 of the state machine of FIGURE 7B for the internal data transfer means IDT_{D}, the state machine of FIGURE 6B checks BUF FUL in a decision block d6l4. Since the registers of the external data transfer means XDT_{D} are empty, a state [2] is entered during which -BSY is asserted by a block 646 to prevent a return to the state [0], and the Dₗ frame is placed on the internal bus IB by a block 648. The machine then enters the state [15] wherein, as seen in FIGURE 6A, the D₂ frame is placed on the internal bus IB before the machine returns to the state [0].

The state machine of FIGURE 7_{B} for the external data transfer means XDT_{D} also checks -BSY and -ACK during the F frame in decision block d716. Since both are asserted, it proceeds to a state [12] in the D₁ frame during which it asserts -BSY to keep other transmitter means off the internal bus IB, loads the Dᵢ frame into its register with block 734, sets NA=l in a block 736 to indicate that the addressee IDT_{D} is busy, and sets EA=1 in a block 738 to indicate that the addressee IDT_{D} is in the mainframe. The machine then proceeds to a state [14] in which, as shown in FIGURE 7A, it loads the D₂ frame into its register with a block 718, loads CMD with a block 720, and sets RDRF with a block 722 before returning to the state [oj.·····When the D₂ frame is loaded, -DOCLK is asserted.

### Communication Situation (12)

In the communication situation (12) of FIGURE 3D_{S}, the internal data transfer means IDT_{D} has been instructed by its microprocessor to receive only from the same station that sent the last previous message by the assertion of the SAME SEND bit in the control register, and the registers of the external data transfer means XDT_{D} are empty so that the message can be placed on the external bus XB for circulation. This situation may be involved in the communication in FIGURE 2 between TX_{C} to DT_{C} and to DT_{C2}.

The state machine of FIGURE 6B for the external transmitter means _{XTXD} places the TO and F frames on the internal bus IB in the usual way.

The reaction of the state machine of FIGURE 7B for the external data transfer means XDT_{D} is as follows. Since XTX_{D} is on the internal bus IB, the output of decision block d710 is low and decision block d7l4 checks BUF FUL. In this situation, decision block d7l4 will indicate that the registers of XDT_{D} are empty and the TO and F frames are loaded into their registers by the blocks 728 and 730 respectively.

The reaction of the state machine of FIGURE 7A for the internal data transfer means IDT_{D} is as follows. Since MF/-M is asserted and RDRF is not asserted in decision block d702 of the state machine of FIGURE 7A for IDT_{D}, the TO frame is loaded onto the internal bus IB by the block 710 and the decision block d706 checks to see if IDT_{D} is the aodressee in the F frame. Since it is, -ACK is asserted by a block 712 and the decision block d708 checks to see if the SAME SEND bit has been asserted and if the FROM address in the message is the SSA (SAME SENDER ADDRESS) desired. In this situation, the SAME SEND bit is asserted but SSA is not correct so that the machine goes to a state [15] in which it asserts -BSY during the Dₗ frame before returning to the state [0]. This maintains synchronization in other transmitter means and data transfer means.

The state machine of FIGURE 6B for the external transmitter means XTX_{D} monitors -BSY and -ACK during the F frame in decision block d612. Although, as just described, -BSY is asserted in the _{Dl} frame in the state [15], it is not asserted in the F frame; but -ACK is asserted in the F frame by the block 702 of the state machine of FIGURE 7A for ID_{TD} so that the output of the decision block d612 of FIGURE 6B leads to a state [6] at the start of the D₁ frame. A block ₆₅₀ places the _{Dl} frame on the internal bus IB and a check is made of -BSY and BUF FUL by the decision block d615. The signal -BSY is asserted during the D₁ frame and BUF FUL is not, so that the machine proceeds to a state [15] in which, as shown in FIGURE 6A, the _{D2} frame is put on the internal bus IB. After setting TDRE, the transmitter state machine of FIGURE 6B goes to the state [0].

Return now to the state machine of FIGURE 7B that as last mentioned had just loaded the F frame into its registers with the block 730. When it checks -ACK and -BSY in the decision block d716 during the F frame, -ACK is asserted but -BSY is not so that the machine proceeds to a state [13] in which the Dₗ frame is loaded by a block 740, _{EA} is set to "1" by a block 742, and decision block d717 checks -BSY. Since -BSY is asserted during D₁ by IDT_{D}, NA is set to "1" by a block 743. Since both EA and NA are "1", it means that the addresssee is present but busy. The machine goes to a state [14] to finish-loading the register of the external data transfer section XDT_{D} so that the message can be forwarded on the external bus XB. This is initiated by asserting -DOCLK as previously described.

### Communication Situation (13)

In the communication type shown in FIGURE 3E, the only situation encountered is (13), which is illustrated in FIGURE 3E₂. In this situation, the message has gone around the loop formed by the external bus and has returned to the station that originated it. If the message has been successfully delivered to a station in another mainframe, the TDRE flag is set in the transmitter means so that a new message can be written into its registers. If the addressee is present in another mainframe but busy, the message stays in the registers of the original transmitter means unless it is aborted by the associated microprocessor. If the addressee is not in any mainframe, the message is aborted. Communication situation (13) was involved in FIGURE 2 when the message went from the data transfer means DT_{C} of the mainframe ^{MF}_{C} to the transmitter means TXA of the mainframe MF_{A} via the external bus X_{B}.

In FIGURE 3E, the message on the external bus XB is placed in the fifo (not shown) of the external transmitter means XTX_{E}. As each successive frame emerges from the fifo, it is written into the register of FTGURE 9 that is selected by the code state machine. FIGURE 3_{E} differs from FIGURES 3A through _{3D} in that the internal data transfer means I_{DTE}' is in the same internal chip as the internal transmitter means ITX_{E}. This could be the case in FIGURES 3A through 3D as a message can be sent from the transmitter means of an internal chip to its own data transfer means.

First, the external transmitter means XTX_{E} obtains access to the internal bus IB and places the TO and F frames on it as shown by the blocks 604 and 608 of FIGURE 6A.

The reaction of the internal data transfer means IDT_{E}' of the sending station can be seen from FIGURE 7A to be as follows. The decision block d702 determines whether the registers of IDT_{E}' are full. If they are, the machine enters a state [14] in which the decision block d703 determines in the F frame whether the message is for IDT_{E}'. In communication situation (13), IDT_{E}' is in the sending station and not in the addressed station so that decision block d703 will have a low output. During the F frame, a decision block d704 checks -BSY and -MFA (MY FROM ADDRESS). Since the addressee is not in the mainframe, -BSY is not asserted; but if the FROM address in the message is the address of the station in which IDT_{E}' resides, -MFA is asserted. The machine advances to a state [7] and asserts -BSY during the Dₗ frame with a block 706 and -ACK with a block 708 before returning to the state [0]. This affirms the fact that communication situation (13) prevails because it is the only one in which -BSY and -ACK are asserted during the Dₗ frame.

The external transmitter means XTX_{E} having a state machine that operates as in FIGURE 65 examines -BSY and -ACK in the F frame with the decision block d612. Since neither one is asserted because the TO address is not in the mainframe, the machine goes to a state [7] (not to be confused with the state [7] of FIGURE 7B) in which the D₁ frame is put on the internal bus I_{B} by a block 638 and a test is made of -BSY and -ACK during the _{Dl} frame by a decision block d6l3. Since -BSY and -ACK are asserted during the Dₗ frame by blocks 706 and 708 of FIGURE 7A for the internal data transfer means IDT_{E}', the external transmitter means XTX_{E} will load _{T}DRE with a block 642 and return to the state [0].

We now come to the internal transmitter means ITX_{E} which originated the message that has just been put on the internal bus IB by XTX_{E}. The flow chart for the state machine for the internal transmitter means ITX_{E} is shown in FIGURE 6A. After the ^{D}₂ frame of the message is placed on the internal bus IB by block 626, the message stays in the registers of the transmitter means until it is aborted by its associated microprocessor or until it has been successfully delivered to the station having the TO address.

After placing D₂ on the internal bus IB, the internal transmitter means ITX_{E} gets off IB so that another transmitter means may get on it, and ITX_{E} enters a state [13] in which a decision block d607 checks to see if the TDRE flag has been set. This may be done by its associated microprocessor. A decision block d608 then checks -BSY. During the _{D2} frame, the arbitrator (not shown) asserts -BSY in a manner to be explained and -BSY will remain asserted until a new communication begins, at which point the arbitrator unasserts -BSY. Thus, when the decision block d608 indicates that -BSY is unasserted, the TO frame of another transmission is on the internal bus IB. It could be there because of the external transmitter means XTX_{E} being on the internal bus IB to bring back the message ITX_{E} sent as in situation (13), or it could be any other transmitter means of the same mainframe. As long as -BSY is asserted, no message is on the internal bus I_{B} and the state machine of FIGURE 6A keeps looping back to the start of the state [13].

As soon as decision block d608 indicates that -BSY is unasserted, it means that a TO frame is on the internal bus IB and the machine then enters a state [8] while the F frame is present. The signal -BSY is checked by a decision block d609. If it indicates that -BSY is asserted during the F frame, it means that the message is for a station in the mainframe and is not a message returning to the station that originated it, and the machine loops back to the start of state [13].

But if the decision block d609 indicates that -BSY is unasserted during the F frame, it is possible that the external transmitter means XTX_{E} is on the internal bus IB. To find out, decision block d610 checks -MFA during the F frame. If -MFA is asserted, it means that the message on the internal bus IB is returning to the station that sent it. The decision block d610 also checks EA. If -MFA and EA are asserted, the machine enters a state [11] in which a decision block d611 examines NA. If NA=0, the message has been successfully delivered to the TO address station and the flag TDRE is set so that the internal transmitter means ITX_{A} may receive another message to send. If N_{A}=1, the TO address exists but is busy in which event the state machine either sets the TDRE flag if its microprocessor has set the STOP XMIT flag or reasserts -RTS so as to request another turn on the internal bus IB.

Should -MFA be asserted and EA not asserted, it means that there is no station having the TO address. The machine enters a state [10] during the D₁ frame and loads the flags NMAA (NO MODULE AT TO ADDRESS), LTL (LAST TRANSMISSION LOST), and TDRE with the blocks 628, 630 and 632 respectively. The internal transmitter means ITX_{D} is now ready to receive another message.

All of the stations in the same mainframe observe what is on the internal bus IB. For those that did not originate the message coming from the external transmitter means XTX_{E}, their decision blocks d610 will indicate that -MFA is not asserted, in which event they go into a dummy state [9] before looping back to the start of state [13]. In other words, all of the internal transmitter means check out every message on the internal bus IB to see if it is the one they sent.

Although the external data transfer means XDT_{E} plays no role in the situation (13), it functions as follows. The external data transfer means XDT_{E}, which functions as shown in FIGURE 7B, determines in the TO frame by decision block d710 that the external transmitter means XTX_{E} of the same chip is on the internal bus IB, and the decision block d714 checks BUF FUL. If the registers of XDT_{E} are full, decision block d715 will check -BSY in the F frame. In communication situation (13), -BSY is not asserted in the F frame so that the machine goes to state [15] in which, as can be seen from FIGURE 7A, -BSY is asserted during the D₁ frame. If the registers of XDI_{E} are empty, the TO frame is loaded by block 728 and the F frame is loaded by the block 730. A check is made by decision block d7l6 of -BSY and -ACK in the F frame. Since neither are asserted in situation (13), the machine goes to state [9] shown in FIGURE 7A wherein a check is made of -BSY and -ACK during the D₁ frame by decision block d709. Since -BSY is asserted, the machine returns to the state [0] and the loaded words are not put on the external bus XB.

### Arbitrator

The arbitrator performs three functions: (1) it determines the sequence with which the transmitter means of a mainframe are given access to the internal bus; (2) it provides synchronization of the state machines; and (3) it enables the clock only when a frame is being transmitted so as to reduce noise.

If the transmitter means including the transmitter means for the external chip are given access to the internal bus IB in a repeated sequence, whether or not.they have a message to send, much time is wasted and the messages would proceed slowly around the loop formed by the external bus XB. In accordance with an aspect of this invention, the arbitrator checks each of the transmitter means for an assertion or non-assertion of a request-to-send signal -RTS in a sequence X, Tₗ, X, T₂, X, T₃ ... X, Tₙ, ^{X,} Tₗ, etc. wherein X indicates a check of the transmitter means of the external chip and T indicates a check of the transmitter means of an internal chip. Only those transmitter means asserting -RTS are given access to the internal bus TB so that the transmitter means of the external chip can have up to 50% of the time on IB. The percentage could be increased or decreased by the frequency with which X appears in the sequence. Thus no time is wasted and message can proceed around the loop formed by the external bus XB at a satisfactory rate.

In the particular embodiment of the invention described herein, a complete message includes four frames: TO, F, Dₗ and _{D2}; but as noted, there are some communication situations in which the message is terminated at the end of the F frame and some when the message is terminated at the end of the Dₗ frame. In each of these situations, the state machines for the stations of the mainframe assert -BSY in the last frame. In communication situations having four frames, the arbitrator asserts -BSY in the last frame. When -BSY is asserted, the state machines return to their starting states so that they are synchronized.

The arbitrator maintains synchronization by keeping -BSY asserted after the last frame of each message until a transmitter means is given access to the'internal bus IB. The unassertion of -BSY at this time permits all state machines to start their procedures at the same time.

Observation of the thirteen communication situations illustrated in FIGURES 3A₁-3A₃; 3B₁-3B₂; 3C₁-3C₂; 3D₁-3D₅; and 3E₂ shows that each has a unique combination of the frames TO, F, _{DI} and _{D2} in which the control signals -BSY, -ACK and BUF FUL are aserted so that it would be possible to perform all the functions of the arbitrator state machine described above by providing thirteen different logic circuits for each mainframe, but it is far simpler and less expensive to provide an arbitrator that functions as illustrated by FIGURE 4. FIGURE 4 is for the arbitrator A_{A} of FIGURE 2, but the other arbitrators A_{B} and A_{C} would operate in the same way.

As will be seen from the following description of the flow chart of FIGURE 4, the clock is enabled for each frame of a message that is transmitted. At various points in the flow chart, there are boxes containing an indicated assertion of each of two bits FRO and FR1. These bits indicate the frame in which the state machine is and are only used for servicing, so that there is no need for mentioning them again. The discussion related to each decision block is headed by the designation of that block, the numbers of the state referred to are in respective brackets [], and the numbers of the communication situations referred to are in respective parentheses ().

When the arbitrator is powered up, it is in a state [0] and a block 401 asserts -BSY so as to place the transmitter and data transfer state machines of both the internal and external chips in their starting states [0].

### -CTS, Decision Block d40l State [0]

A test is made by a decision block d40l to see whether or not a -CTS signal has been asserted by the transmitter means of any chip and therefore whether a -CTS is pending. If not, -BSY is still asserted by the block 401; but if so, the machine enters a state [8] in which -CTS is conveyed to the chip selected by the logic circuits in a block 404 formed by dashed lines and a clock is enabled for one cycle for the TO frame by a block 406. When the state [8] is entered and -BSY is unasserted, it signifies the start of a new transmission and thereby synchronizes the operation of all the state machines.

Included in the block 404 are a series of decision blocks d402 through d407 that respectively check each of the transmitter means of the mainframe _{MFA} of FIGURE 2 in the following repeated sequence -- ^{TX}_{A}, TX_{A1}, TX_{A}, TX_{A2}, TX_{A} and TX_{A3} -- to see whether or not it has asserted -RTS. If it has, the arbitrator asserts -CTS on the control line to that transmitter means as respectively indicated by the blocks 408, 410, 412, 414, 416 and 418 so as to connect it to the internal bus IB.

### BUF FUL/EXTCTS, Decision Block d408 State [8] , TO Frame

A decision block d408 tests the state of BUF FUL in the TO frame to determine whether the data transfer registers of the external chip are full and tests -EXTCTS to see whether -CTS has been granted to the external chip.

If BUF FUL is a logic low, indicating that the data transfer registers of the external chip are empty, and if -EXTCTS for the external chip is a logic high, indicating that the external chip is not requesting access to the internal bus, or if BUF FUL is a logic high, indicating that the data transfer registers of the external chip are full, the machine proceeds to a state [4] to begin processing communication situations (1) through (5),(7),(9),(10) and (13). In the state [4], the clock is enabled for one cycle for the F frame by a block 420, and a test is made for -BSY by a decision block d409.

### -BSY, Decision Block d409 State [4], F Frame Situations (1) through (13)

If decision block d409 indicates that -BSY is asserted during the F frame, situations (3) and (10) are involved. The state machine proceeds to a point A in the diagram where a test is made by a decision block d410 as to whether a signal -CTS is pending.

### -CTS, Decision Block d410 State [4], F Frame Situations (3), (10)

If decision block d410 indicates that -CTS is not pending, the machine reverts to the state [0] and the block 401 asserts -BSY as just described. If decision block d410 indicates that -CTS is pending, the machine enters the state [8] again.

### Return to Decision Block d409

If the decision block d409 indicates that -BSY is not asserted during the F frame, the state machine enters a state [5] in which the clock is enabled for the _{Dl} frame by a block 421, and another test is made for -BSY by a decision block d411.

### -BSY, Decision Block d411 State [5], D₁ Frame Situations (1) , (2), (4), (5), (7), (9), (13)

If decision block d411 indicates that -BSY is asserted during the D₁ frame, situations (2), (5), (7), (9) and (13) are involved and the machine goes to point A. Although -BSY is also asserted during the Dₗ frame in situations (11) and (12), the data transfer registers of the external chip are not full and -CTS is granted to the external chip in these situations so that the conditions at the right side of the decision block d408 are not met.

If the decision block d411 indicates that -BSY is not asserted, the successful communication situations (1) and (4) are involved. The state machine enters a state [1] during which -BSY is asserted by a block 426 and the clock is enabled for the D₂ frame by a block 428. The state machine then goes to the point A.

### Return to Decision Block d408

If the decision block d408 produces logic lows, it means that the data transfer register of the external chip is empty and that its transmitter means is on the internal bus IB, a condition that can only exist for situations (6), (8),(11),(12) and (13). The state machine enters a state [7] during which the clock is enabled for the F frame by a block 430 and a decision block d412 checks -BSY. This is the F frame.

### -BSY, Decision Block d412 State [7] , F Frame Situations (6), (8), (12), (13)

If decision block d412 indicates that -BSY is not asserted, situation (11) is ruled out, and situations (6),(8), (12) and (13) are involved. The machine enters a state [3] during which the clock is enabled by a block 431 for the D₁ frame and a check is made for -ACK by a decision block d413.

### -ACK, Decision Block d413 State [8], D₁ Frame Situations (6), (8) , (12), (13)

If decision block d4l3 indicates that -ACK is asserted during the Dₗ frame, the machine reverts to point A because, as illustrated by situation (13), -ACK is only asserted at this time when a message is returning to the station that originally sent it.

If decision block d413 indicates that -ACK is not asserted during the Dₗ frame, the machine enters the state [1] in which the D₂ frame is placed on the internal bus IB as illustrated by the situations (6),(8) and (12).

### Return to Decision Block d412

If decision block d412 indicates that -BSY is asserted during the F frame, situation (11) is involved and the machine enters a state [6]. The signal -BSY is asserted by a block 422, and the clock is enabled for the D₁ frame by a block 424. In situation (11), the message cannot be delivered to the receiver in the TO station because it has data in it, and the message is sent around the external bus XB to avoid lock-up. The machine then enters the state [1] in which the D₂ frame is placed on the internal loop and reaches the data transfer means of the external chip from which it goes around the external bus XB.

Note that the assertion of -BSY in the D₁ frame by the block 422 is followed by the assertion of -BSY by the block 426 in the D₂ frame so that -BSY is asserted in the F, D₁ and D₂ frames as required in situation (11). As soon as there is a -CTS pending, the state [8] is entered.

### Arbitrator Block Diagram

The operation of the arbitrator has been explained with the aid of FIGURE 4, but the major components, their interconnections and the figures of the drawings respectively -illustrating the schematic circuit diagrams therefor are indicated in FIGURE 5. As in FIGURE 1, FIGURE 5 specifically illustrates an arbitrator for a mainframe having three stations; but the schematic circuit diagrams in FIGURES 29, 30, 31, 32 and 33 are for an arbitrator in a mainframe having eight stations.

Three request-to-send lines, one from each station, are designated -^{RTS}₁. -RTS₂ and -RTS₃ and are respectively connected to three registers (not individually shown) in a block 502. At each cycle of a system clock 504, the request-to-send lines are updated so that those lines on which an -RTS is asserted at that clock cycle are low. The registers are respectively connected to inputs iₗ, i₂ and i3 of a barrel shifter 506 which, at the particular instant illustrated, respectively connects i₁, i₂ and i3 to inputs A, B and C of an -RTS priority encoder 508. The encoder determines the priority of the inputs A, B and C and informs the CTS decoder 510 of its decision. If the station has asserted -RTS so that the input A is in a low state, the decoder 510 asserts -CTS on the line to that station so as to put the transmitter on the internal bus; but, if the station is not asserting -RTS, no -CTS is granted. In either case, the decoder 510 places a bit on a line 511 to the barrel shifter 506 that causes it to effectively rotate the connections between its inputs iₗ, i₂ and i3 and the inputs A, B and C of the priority encoder 508. Thus, i₁ is connected to C, i₂ is connected to A and i3 is connected to B. If it is low, the decoder 510 will assert -CTS on the line to the station from which -RTS₂ comes.

As previously described, the transmitter means of the external chip, herein designated by XC₄, of the mainframe is given a chance on every other clock cycle to gain access to the internal bus. The request-to-send line -RTS₄ from the external chip is applied to a register 512 that is connected to a block 514 containing the state logic for asserting or not asserting -CTS on the line to XC₄. The register 512 is also connected to a -CTS PENDING block 516 and when any of the stations are asserting an -RTS, a low state is supplied on a line 518 to the block 516. Note also that the line 511 having a bit indicating that one of the stations has been given a chance to get on the internal bus is connected to the block 514. Thus, if the line 511 indicates that a station has just been given a chance to have access to the internal bus and XC₄ is asserting -R_{T}S, the logic in the block 514 will assert -CTS on the line to _{XC4} so that its transmitter is connected to the internal bus.

The state machine for the arbitrator is contained in a block 520 and, as can be seen from the flow chart of FIGURE 4, it is connected to the control lines -BSY and -ACK, the BUF FUL signal of the data transfer means of the external chip the system clock 504, the output of the block 514 on which -CTS is asserted for the external chip XC₄, and to the output of the block 516 indicating whether any -CTS is pending, i.e., whether any of the stations or the external chip are aserting -RTS. As described in connection with the flow chart of FIGURE 4, the state machine of the block 520 asserts -BSY in the D₂ frame, enables the clock when required, and provides signals FRO and FR1 identifying the current frame. The state machine of the block 520 also supplies a signal 522 to the CTS decoder 510 so as to indicate that the transmitter means of the external chip XC₄ has been given its chance to get on the internal bus and that one of the stations may have its chance.

### Transmitter State Machine

Reference is made to the flow charts.of FIGURES 6A and 6B for an explanation of the operation of the state machines of the transmitters in the internal and external chips respectively. Although the operations performed by these transmitters are quite different, they use the same hardware except for the fact that a signal MF/-M is set at a logic low for an internal chip and at a logic high for an external chip.

As previously noted, there are only thirteen communication situations. Situations (1) through (5) involve the transmitter means of an internal chip, and situations (6) through (13) involve the transmitter means of an external chip. In each chip, the logic states of one or more of -BSY, -ACK and BUF FUL are examined during certain of the TO, _{F} and D₁ frames so as to progressively eliminate certain communication situations and either prematurely terminate a communication before all frames are placed on the internal bus, or place all frames on the bus. At the end of any communication, the signal -BSY is asserted and at the beginning of the next communication, it is unasserted by the arbitrator. For brevity, communication situations are indicated by a number in parentheses (), machine states are indicated by a number in brackets [], and the frames during which a decision block operates are indicated by TO, F, Dₗ and D₂.

### Functions Common to Transmitter State Machines of Internal and External Chips

Initially, the machines are in a state [0]. If a transmitter means has a message to send, it will automatically assert -RTS on the unique line between it and the arbitrator for the mainframe in which it resides when the D₂ frame is loaded into its register. It tests to see if it is granted time on the internal bus by checking the state of its unique -CTS line to the arbitrator, decision block d601. As long as the logic state is high, -CTS is not asserted and it stays in the state [0]; but if -CTS is asserted, the TO address is placed on the internal bus by a block 604, and the -RTS signal is cleared by a block 606. All of this is in the state [0].

The machine then enters a state [1] during which a block 608 places the F frame on the internal bus and a decision block d602 tests the logic state of MF/-M to see whether it is an internal or an external chip.

### Internal Chip Transmitter Operation

In the transmitter means of an internal chip, the output of the decision block d602 will be a logic low, and the communication situations in which the transmitter means of an internal chip may be involved are (1) through (5). A test is made of -BSY and -ACK by a decision block d603.

### -BSY, -ACK, Decision Block d603 State [1], F Frame Situations (1) through (5)

If the decision block d603 indicates that -BSY is asserted, only the unsuccessful communication situation (3) is involved, whether or not -ACK is asserted. Before -RTS is reasserted, however, a test is made by a decision block d604 to see if the microprocessor for the internal chip has commanded it to cease further attempts to transmit by setting a STOP XMIT flag.

### STOP XMIT, Decision Block d604 State [I] , F Frame Situation (3)

If the output of decision block d604 is a logic low, -RTS is asserted by a block 610 before the machine returns to the state [0]. The message stays in the transmitter registers.

If the output of decision block d604 is a logic high, further attempts to send the message are to be abandoned and -RTS is not reasserted. The LTL flag is set by a block 612 and the TDRE flag is set by a block 614 before the machine returns to the state [0]. Although the message remains in the transmitter registers, the setting of TDRE will permit a new message to be written in place of it. Instead of showing the blocks d604, 61₀, 612 and 614 each time the combination is used, reference will be made to a dashed-line rectangle 616 that surrounds them.

### Return to Decision Block d603

If decision block d603 indicates that -BSY is not asserted and that -ACK is asserted during the F frame, only the communication situations (1) and (2) can be involved because the assertion of -ACK indicates that the station having the TO address is present in the mainframe, a condition that does not exist in situations (4) and (5).

In order to handle situations (1) and (2), the machine enters a state [3] during which the Dₗ frame is placed on the internal bus by a block 618 and a test is made of -BSY by a decision block d605.

### -BSY, Decision Block d605 State [3], D Frame Situations (1),(2)

If decision block d605 indicates that -BSY is asserted during the D₁ frame, only unsuccessful communication situation (₂) is involved. The assertion of -_{BSY} during _{D1} means that the station having the TO address has been instructed by its microprocessor to receive from the same sender as before and that this message is not from that sender. In this situation, it is necessary to wait until the F frame in order to determine if the message is from the same sender. The assertion of -BSY during the D₁ frame is effected by the blocks 706 and 714 of FIGURE 7A, which illustrates the operation of a state machine of an internal data transfer means and which will be discussed below. The machine then carries out the function of the blocks contained within the dashed rectangle 616.

If decision block d605 indicates that -BSY is not asserted during the D₁ frame, only the successful communication situation (1) is involved. The machine then enters a state [15] during which a block 620 places the D₂ frame on the internal bus and a block 622 sets the TDRE flag indicating that another message can be written into the transmitter registers. The machine then returns to the state [0].

### Return to Decision Block d603

If decision block d603 .indicates that neither -BSY nor -ACK are asserted in the F frame, situations (4) and (5) are involved because the station having the TO address must be in another mainframe. The machine enters a state [5] during which a block 624 places the _{D1} frame on the internal bus and a test is made of -BSY by a decision block d606.

### -BSY, Decision Block d606 State [5], D₁ Frame Situations (4) , (5) , (13)

If decision block d606 indicates that -BSY is asserted during the Dₗ frame, the unsuccessful communication situation (5) is involved. Because the data transfer registers of the external chip have data in them, i.e., the buffor is full the state machine of the external data transfer means asserts -BSY during the D₁ frame, see block 732 in FIGURE 7B. It could not do this earlier because it is the lack of the assertion of -ACK in the F frame that informs the data transfer means of the external chip that it is to receive a message. With -BSY asserted in the D₁ frame, a successful transmission cannot be made and the internal transmitter state machine goes back to the state [0] by following procedure indicated by blocks contained within the dashed rectangle 616.

If decision block d606 indicates that -BSY is not asserted in the D₁ frame, the successful communication situation (4) is involved. The data transfer registers of the external chip do not have data in them so that -BSY is not asserted by the data transfer state machine for the external chip. State [12] is entered during which the _{D2} frame is placed on the bus by a block 626 in accordance with situation (4). The four frames of the message are now in the data transfer registers of the external chip and ready for transmission around the external loop. As previously explained, the arbitrator state machine asserts -BSY during the D₂ frame for the purpose of synchronization.

### What Happened to the Message Just Sent to the Data Transfer Section of an External Chip in the Communication Type (4) Just Described?

During the D₂ frame, the arbitrator for the mainframe asserts -BSY for synchronization. After the four frames of a message are loaded into appropriate registers in the data transfer means of the external chip, they are passed around the external loop until they return to the transmitter means of the same external chip. What follows is a description of what occurs from the point of view of the originating transmitter means. Until it is known that either the message was delivered to the station in another mainframe having the TO address or the message has been aborted, the TDRE flag will not be set and no new message can be placed in the originating transmitter means. When the D₂ frame has been placed on the internal bus by the block 626, the machine enters a state [13] wherein a decision block d607 tests to see if the flag TDRE has been set and the message aborted by an instruction from the microprocessor of the station in which the originating transmitter means resides.

### TDRE, Decision Block d607 State (13]

If decision block d607 indicates that the flag TDRE has been set for any reason, a new message may be written into the transmitter registers of the originating station and the message just sent may be destroyed. The machine then goes back to the state [0].

If decision block d607 indicates that the flag TDRE is not set, a test is made by a decision block d608 to see if -BSY is asserted.

### -BSY, Decision Block d608 State [13]" . Situation (13)

If decision block d608 indicates that -_{B}SY is still asserted, it means that no other transmitter means has been granted access to the internal bus, and the machine loops back to the beginning of the state [13].

If decision block d608 indicates that -BSY is unasserted, it means that a new transmission is started (see decision block d601) and that a new TO frame is on the internal bus. This TO frame could be from the transmitter means in the external chip or from another transmitter means in the same mainframe. The machine then enters a state [8] during which the F frame is on the internal bus and a new test is made of -BSY by a decision block d609.

### -BSY, Decision Block d609 State [8], F Frame Situation (13)

If decision block d609 indicates that -BSY is asserted during the F frame, it means that the TO address is in the mainframe so that the message on the internal bus is not returning to the station that originated it, in which event the machine loops back to the beginning of state [13].

If, however, decision block d609 indicates that -BSY is not asserted, it means that some transmitter means is on the internal bus and the state machine proceeds to a decision block d610 where the FROM address on the internal bus is compared with the address of the station in which the internal transmitter means retaining the original message resides, and a check is made of EA, which is the ninth bit of the F frame.

### -MFA, EA, Decision Block d610 State [8], F Frame Situation (13),(5)

If decision block d610 indicates that the FROM address in the F frame on the internal bus is not the address of the station that originally sent the message in accordance with the situation (4), the level of EA does not matter and the state machine for any transmitter means which has transmitted a message and for which this occurs goes into a "dummy" state [9] for timing and synchronization before returning to the beginning of state [13]. This can occur if a message is sent from one station in the mainframe to another in the same mainframe or if a message is sent external by another station in the mainframe. Thus, the transmitter means of the originating station will go back to the beginning of the state [13] and keep looping through it until the flag TDRE is set, at which point it will return to the state [0], or until -BSY is unasserted.

If decision block d610 indicates that the FROM address on the internal bus is the same as the address of the station that originally sent the message in accordance with the situation (4) and if EA is a low state so that there is no TO address in the system, the machine proceeds to a state [10] during which a block 628 sets the NMAA flag; a block 630 sets the LTL flag; and a block 632 sets the TDRE flag so that the station that originated the message can receive a new one.

If decision block d610 indicates that the FROM address on the internal bus is the same as the address of the station that originally sent the message in accordance with the situation (4) and if the station to which that message was sent is in the system, the ninth bit EA of the F frame will have a logic high and the machine enters a state [11] during which the logic state of NA, the ninth bit of the _{Dl} frame, is checked by a decision block d611.

### NA, Decision Block d611 State [11], D₁ Frame Situation (13)

If decision block d611 indicates that NA is a logic high so that the TO station was there but was busy, the procedure goes to the dashed rectangle 616 so that -RTS is reasserted or the message is aborted.

If decision block d611 indicates that NA is a logic low, the message has been delivered to the station having the TO address so that the TDRE flag can be set by a block 634 which makes the transmitter means that originated the message capable of accepting a new message. The machine then returns to the state [0].

### External Chip Transmitter Operation

When the transmitter means of the external chip requests and receives access to the internal bus, only situations (6) through (13) are possibly involved. The functions of the blocks d601, 604, 606 and 608 are carried out in the same manner that they were by the transmitter means of an internal chip so as to arrive at decision block d602 with the FROM address on the bus. But the signal MF/-M of the decision block d602 is now a logic high so that the procedure follows a path 636 to a decision block d6l2 shown in FIGURE 6B that examines whether or not -ACK and -BSY are asserted during the F frame.

### -_{B}SY, -ACK, Decision Block d6l2 State [1], F Frame Situations (6) through (9), (12), (13)

If decision block d612 indicates that neither -BSY nor -ACK are asserted during the F frame, the possible situations are seen to be (6), (7) and (13), i.e., either the the message is from a station in a previous mainframe in the external loop and for a station in a subsequent mainframe, in which event the transmitter of the external chip tries to pass the message via the internal bus to its own data transfer means; or the station that originally launched the message is in the same mainframe as the external chip, in which event communication situation (13) is carried out, as has just been explained from the point of view of the transmitter of that station. If the registers of the external data transfer means are not full, the successful communication situation (6) is carried out; but if these registers are full, situation (7) prevails in which event the message stays in the external transmitter means until a subsequent turn on the internal bus permits a situation (6) or the message is aborted.

In order to determine which of the communication situations (6), (7) or (13) is involved the machine enters a state [7] during which a block 638 in the transmitter means of the external chip places the D₁ frame on the internal bus, and another test is made of the states of -BSY and -ACK by a decision block d613.

### -BSY, -ACK, Decision Block d613 State [7], D₁ Frame Situations (6), (7), (13)

If decision block d613 indicates that neither -BSY nor -ACK are asserted during the D₁ frame, the successful communi- cation situation (6) is carried out. The TO address station is not in this mainframe and the data transfer registers of the external chip are ready to accept data. The state [15] is then entered during which, as explained in connection with decision block d605 of FIGURE 6A, the D₂ frame is placed on the internal bus and the TDRE flag is set. Examination of FIGURE 4 shows that the arbitrator asserts -BSY during the D₂ frame.

If decision block d613 indicates that -BSY is asserted but that -ACK is not asserted during the D₁ frame, it means that the TO address station is not in this mainframe and that the date transfer registers of the external chip cannot accept data. The -RTS signal for the external chip is set by a block 640 to await the next turn on the internal bus, and the machine returns to the state [0]. This is situation (7).

If decision block d613 indicates that -ACK is asserted during the D₁ frame, situation (13) is involved. The data transfer means of the internal chip has determined by means of a decision block d704 or a decision block d707 (FIGURE 7A) in the data transfer state machine for an internal chip to be described below that the FROM address on the internal bus is the same as the address of the station in which the data transfer state machine resides and further that the internal bus is not busy. When these conditions exist, the data transfer state machine asserts -BSY and -ACK during the D₁ frame. Therefore when the state machine for the transmitter means of the external chip finds by decision block d613 that -ACK is asserted during the D₁ frame, it can set its TDRE flag with a block 642 so that the transmitter means can receive a new message. The machine then returns to the state [0].

### Return to Decision Block d612 Situations (10),(11)

If decision block d612 .indicates that -BSY and -ACK are asserted during the F frame, situations (10) and (11) may be involved. The TO station is in the mainframe but is busy. A test is made by decision block d6l4 as to whether BUF FUL is asserted, i.e., are the data transfer registers of the external chip full?

### BUF FUL, Decision Block d614 State [1], F Frame Situations (10),(11)

In the situation (10), the decision block d614 indicates that the buffer is full, -RTS is reasserted by a block 644, and the machine returns to the state [0]. The message stays in the registers of the external transmitter means until its next turn on the internal bus or until the message is aberted.

In the situation (11), the decision block d6l4 indicates by a low logic value that the buffer is empty, the machine enters a state [2]. The signal -BSY is asserted by a block 646 during the D₁ frame to keep other transmitter means and data transfer means synchronized and the D₁ frame is placed on the internal bus by a block 648. Although the message cannot be sent to the TO station because decision block d612 has indicated that it is busy, it can be sent around the external loop because the buffer is empty. The machine then enters the state [15] wherein, as previously explained, the _{D2} frame is placed on the internal bus and the TDRE flag is set so that the external transmitter means is free to handle another message before the machine returns to the state [0].

### Return to Decision Block d612 Situations (8), (9), (12)

If decision block d612 indicates that -BSY is not asserted and that -ACK is asserted during the F frame, the TO station is in the same mainframe as the external chip and is not busy, so that situations (8), (9) and (12) are potentially possible. To determine which situation is to be carried out, the machine enters a state [6] during which the D₁ frame is placed on the internal bus by a block 650 and a test is made at the end of the TO frame by a decision block d6l5 of the logic state of -BSY and BUF FUL of the external data transfer means. BUF FUL is low when the data transfer registers of the external chip are empty.

### -BSY, BUF FUL, Decision Block d615 State [6], D₁ Frame Situations (8), (9), (12)

If decision block d615 indicates that -BSY is not asserted during the D₁ frame and that BUF FUL is low, situation (8) is involved. Since decision block d612 has already indicated that the data transfer means of the TO station is ready to receive data, the message can be conveyed to the external data transfer means for introduction to the external loop and to the TO station at the same time, as is required. The state machine then goes into the state [15] which, as previously explained in connection with the decision block d605 of FIGURE 6A, places the ^{D}₂ frame on the internal bus and sets the TDRE flag of the external transmitter state machine so that it is ready to receive a new message before going back to the state [0].

If decision block d615 indicates that -BSY is asserted during the Dₗ frame, situation (9) is involved. The signal -BSY is asserted during the _{Dl} frame by the data transfer means of the external chip if its registers are full at the end of the TO frame. Although the message could be received by the TO station, it cannot be passed around the external bus so that it must remain in the registers of the external transmitter means until it is given another turn on the internal bus. Unless the message is aborted, -R_{T}S is reasserted by a block 652 before the machine returns to the state [0].

If decision block d615 indicates that -BSY is asserted during the D_{I} frame and that _{B}UF FUL is low so that the registers of the external data transfer means are empty, situation (12) will be involved. Under this condition, the TO station has been instructed to receive its message from the same sender as before,, so that the message must be passed around the external bus until it again arrives at the transmitter means of the same external chip. The machine then goes into the state [15] during which it places the D₂ frame on the internal bus and sets the TDRE flag so that the external transmitter means may receive a new message.

### Data Transfer State Machine

In FIGURES 7A and 7B that respectively illustrate the operation of a state machine for the data transfer means or means of an internal chip such as IC_{A} of FIGURE 2 and the operation of a state machine for the data transfer means or means of an external chip such as XC_{A}, the numbers enclosed in brackets [] indicate a state that is entered at a solid dot, the numbers in parentheses () indicate the communication situations involved, and TO, F, D₁ and D₂ respectively indicate the frame occurring at the time.

### State Machine for an Internal Chip Situations (1) through (3), (8) through (13)

Before going into a detailed description of FIGURE 7A, it should be noted that the right half of the drawing relates to the operation occurring when the registers of the data transfer means of an internal chip are full, and the left half relates to the operations occurring when the registers of the data transfer means are empty.

From an examination of FIGURES 3A through 3E, it can be seen that an internal data transfer means is involved in the communication situations noted above. Although it may not be readily apparent, an internal data transfer means plays a role in situation (13) by supplying signals that are used in that situation.

### -BSY, Decision Block d701 State [0]

While in the state [0], a decision block d701 indicates by a logic high when -BSY is unasserted by the arbitrator for the mainframe in which the data transfer means resides. This means that a new message is starting and that the TO frame is on the internal bus. When this occurs, the procedure goes to a decision block d702.

### DATA TRANSFER REGISTERS FULL

### MF/-M, RDRF, Decision Block d702 State [0] , TO Frame Situations (3), (10), (11), (13)

If decision block d702 indicates that the data transfer registers are full, i.e., RDRF=1, and that MF/-M has been preset to a low logic level, the data transfer means is in an internal chip and the procedure goes to a decision block d703.

### MTOA, Decision Block d703 State [4], F Frame Situations (3) (10), (11), (13)

The decision block d703 determines whether the TO address on the internal bus is the same as the address of the station in which the data transfer means resides. Although this function would seem to more properly belong in' the state [0], when the TO address is on the internal bus, timing considerations require that this function be done in the state [4]. In order to do this, the TO address is latched.

If the decision block d703 indicates by a logic high that the TO address on the internal bus is the same as the address of the station in which the data transfer means resides, a block 702 asserts -ACK in the F frame to indicate that it is in the mainframe; and since decision block d702 has already determined that the registers of the data transfer means are full, -BSY is asserted by a block 704, a combination that occurs only in communication situations (3),(10), and (11). The machine then returns to the state [0].

If decision block d703 indicates that the TO address on the internal bus is not the same as that of the station in which the data transfer means resides, the procedure goes to a decision block d704.

### -BSY,-MFA, Decision Block d704 State [4], F Frame Situation (13)

The decision block d704 determines whether or not -BSY and -MFA (MY FROM ADDRESS) are asserted during the F frame.

If the decision block d704 indicates that -BSY is not asserted and that -MFA is, the machine enters a state [7] during the _{D1} frame. This means that the data transfer means is in the station that originally sent the message but, although it has nothing to do with setting the TDRE flag indicating that new data can be written into the registers of the transmitter means in its station, it asserts -_{BS}Y by a block ₇₀₆ and -ACK by a block ₇08 as is required by the situation (13), and then returns to the state [0] so as to be synchronized. The assertion of -BSY and -ACK during the Dₗ frame is used at the bottom output of decision block d610 of the internal transmitter means of FIGURE 6A to set TDRE and prepare the transmitter means for the reception of a new message for transmission.

If the decision block d704 indicates that -BSY is asserted during the F frame, nothing can be done regardless of the level of -MFA so that the machine returns to the state [0]. The signal -BSY may be asserted by another station or by the data transfer means of the external chip.

### -BSY, Decision Block d705 State [5], F Frame

If decision block d704 .indicates that neither -BSY nor -MFA are asserted, the machine enters a state [5] during which decision block d705 waits for -BSY to be asserted for synchronization purposes. When -BSY is asserted, the machine goes to state [0].

### DATA TRANSFER REGISTERS EMPTY

### Decision Block d702 State [0], TO Frame Situations (1), (2), (8), (9), (12)

If decision block d702 indicates that the data transfer registers are empty and that MF/-M has been preset to a low logic level, the data transfer means is in an internal chip and the procedure goes to a block 710 that loads the TO frame into the RTO register. The machine then enters a state [6] dusang which the F frame is on the internal bus and the procedure goes to a decision block d706.

### MTOA, Decision Block d706 State [6], F Frame Situations (1) , (2) , (8) , (8) , (9) , (12) , (13)

The decision block d706 determines whether the TO address on the internal bus is the same as the address of the station in which the data transfer means resides.

### -_{B}SY,-MFA, Decision Block d707 State [7], D₁ Frame Situation (13)

If decision block d706 indicates that the addresses are not the same, a decision block d707 checks -BSY and -MFA and the ensuing operations are the same as previously described in connection with the decision block d704. When -BSY is not asserted and -MFA is asserted, the machine goes to the state [7] during which, as previously explained, -ACK and -BSY are asserted during the Dₗ frame as is required in situation (13). Thus, whether its registers are full or not, an internal data transfer means can assert the signals -ACK and -BSY during the D₁ frame that its associated transmitter means requires to set TDRE and be ready to receive a new message.

### Return to Decision Block d706

If decision block d706 indicates that the TO address on the internal bus and the addresss of the station in which the internal data transfer means resides are the same, -ACK is asserted during the F frame by a block 712 and the procedure then goes to a decision block d708.

### SAME,-SSA, Decision Block d708 State [6], F frame Situations (1) , (2) , (8) , (9) , (12)

The decision block d708 examines whether or not the seventh bit (SAME SEND) in the control register has been set and whether or not -SSA has a logic level indicating that the FROM address now on the internal bus is the same as the address in the RTO register, which is the address of the station from which the previous message was received.

In situations (2) and (12), the decision block d708 indicates that SAME SEND flag has been set so that the data transfer means is to only receive from the same sender as before and SSA is not asserted, showing that the message currently on the internal bus is not from that same sender. The machine enters a state [15] in which -BSY is asserted by a block 714 during the _{Dl} frame so as to terminate the transmission, and the machine returns to the state [0]. The assertion of -BSY in the Dₗ frame is used by the decision block d605 of an internal transmitter means shown in FIGURE 6A to terminate the transmission in situation (2) and by the decision block d6l5 of an external transmitter means shown in FIGURE 6B to terminate the transmission in situation (12).

In situations (1), (8) and (9), the SAME SEND flag is low so that this restriction is not in effect; thus it does not matter what the logic level of -SSA is in decision block d708. The F frame is loaded into the register of the internal data transfer means by a block 716.

### -BSY, -ACK, Decision Block d709 State [9], D₁ Frame . Situation (9)

If -BSY is asserted during the Dₗ frame in the state [15] associated with a decision block d715 of FIGURE 7B, it means that the registers of the external data transfer means are full so that the message must stay in its associated external transmitter means as required in communication situation (9).

### Situations (1),(8)

If neither -BSY nor -ACK are asserted during the Dₗ frame, but remembering that -ACK was asserted during the F frame by the block 712, it can be seen that the conditions for the successful communication situations (1) and (8) have been met so that frames D₁ and D₂ are respectively loaded into the registers of the internal data transfer means by blocks 717 and 718, the command bit CMD is set by a block 720, and the RDRF bit is set by a block 722 before the machine returns to the state [0].

### Return to Decision Block d708 Situations (1) (8) , (9)

After running at least one message through the system without setting the SAME SEND flag, an indication by decision block d708 to the effect that the SAME SEND flag is set and that the current message is from the same station as last time causes the procedure to bypass the block 716 that loaded the F frame and follow the procedure of the state [9]. This prevents writing the same F frame into the register a second time.

### State Machine for an External Chip

Before going into a detailed description of FIGURE 7B which illustrates the operation of a state machine for an external data transfer means, it should be noted that the right half of the drawing is for a situation in which the message on the internal bus is from an internal transmitter means and the left half of the drawing is for the situation where the message on the internal bus is from the external transmitter means of the same chip. Although it would seem from FIGURES 3A through 3E that the external data transfer means plays no active role in the situation associated therewith, it still has some function to perform.

### -BSY, Decision Block d70l State [0]

The decision block d701 is the same for the data transfer state machines of internal and external chips. It waits for the arbitrator of the mainframe in which the external data transfer means resides to unassert -BSY, thus indicating that a new transmission is beginning and that the TO frame is on the internal bus.

### MF/-M, RDRF, Decision Block d702 State [0], TO Frame

In the data transfer state machine for an external chip, the signal MF/-M is preset to the high logic level. Regardless of the logic state of RDRF, the machine proceeds to a decision block d710.

### -CTS, Decision Block d710 State [0], F Frame Situations (1) through (5)

If the output of the decision block d710 is high, it means that the message on the internal bus is from an internal transmitter means, so that situations (1) through (5) are involved. In situations (4) and (5), the message is to go to the data transfer means of the external chip. The procedure then goes to a decision block d711.

Transmitter Means of External Chip not on Internal Bus

### BUF FUL, Decision Block d711 State [0], TO Frame Situations (1) through (5)

The decision block d711 checks BUF FUL to see if the registers of the external data transfer means are full. If they are, the machine proceeds to a state [11] in which a decision block d712 tests -BSY and -ACK during the F frame.

### -BSY, -ACK, Decision Block d712 State [11], F Frame Situations (1) through (3),(5)

In the successful internal communication situation (1), -ACK is asserted during the F frame by the block 712 of FIGURE 7A; but because the registers of the internal data transfer means for whom the message is intended are empty and ready to receive data, -BSY is not asserted. The machine proceeds to the state [5] for synchronization, as previously explained in the discussion of decision block d705 of FIGURE 7A. When -BSY is asserted by the arbitrator in the D₂ frame, the state machine returns to the state [0].

In the internal communication situation (2) which is unsuccessful because the SAME SEND flag is set and the particular message is not from that sender, the output of decision block d712 of FIGURE 7B is the same so that the state [5] is entered. The only difference is that _{-BSY} is asserted during the Dₗ frame by the block 714 of FIGURE 7A so that the state machine for the data transfer means of an external chip returns to the state [0] at this time rather than during the ^{D2} frame.

In situation (3), -ACK and -BSY are respectfully asserted in the F frame by the blocks 702 and 704 so that the state machine returns to the state [0] at this time.

### Return to Decision Block d711 Situations (1) through (4)

If decision block d711 indicates that the data transfer registers of the external chip are empty, the TO frame is loaded into them by a block 724 and a state [10] is entered during which the F frame is loaded into the data transfer registers of the external chip by a block 726 and the assertion or non-assertion of -BSY and -ACK are tested during the F frame by a decision block d713.

### -BSY, -ACK, Decision Block d7l3 State [10], F Frame Situations (1) through (4)

In situations (1) and (2), the decision block d713 indicates that -BSY is not asserted and that -ACK is. The machine proceeds to the state [5] during which, as previously explained in connection with decision block d705 of FIGURE 7A, it awaits the assertion of -BSY in the D₁ or D₂ frames before returning to the state [0]. The signal -BSY can be asserted in the D₂ frame during a successful communication situation (1) or it can occur during the _{D1} frame, as in the unsuccessful communication situation (2), when the station with the TO address is instructed by its microprocessor to receive only from the same sender as previously and the FROM address on the bus is for a different station.

In situation (3), the decision block d7l3 indicates that -BSY and -ACK are asserted during the F frame. It is not a situation such as (10) because decision block d710 has indicated that the transmitter means of the external chip has not been given access to the internal bus. Situation (3) is terminated at the end of the F frame so that the state machine for the data transfer means of the external chip goes to the state [0] at the end of the F frame in order to stay in sync.

If decision block d7l3 indicates that neither -BSY nor -ACK are asserted during the F frame, communication situation (4) is involved in which the message is being sent from a station in the mainframe where the external chip resides to a station in another mainframe. Because decision block d711 has already indicated that the data transfer registers of the external chip are empty, the transmission can be completed by proceeding to the state [9] during which, as described in connection with decision block d709 of FIGURE 7A, the message is delivered to the data transfer means of the external chip.

### Transmitter Means of External Chip on Internal Bus

### Return to Decision Block d710 Situations (6) through (13)

If decision block d710 indicates that -C_{TS} is asserted, it means that the transmitter means of the external chip is on the internal bus so that situations (6) through (13) can be involved.

### BUF FUL, Decision Block d714 State [0], TO Frame Situations (6) through (13)

If decision block d7l4 indicates by the high logic level of BUF FUL that the data transfer registers of the external chip are full during the TO frame, i.e., the RDRF flag is set, situations (7),(9) and (13) are involved. The machine proceeds to a state [1] and decision block d715.

### -BSY, Decision Block d715 State [1], F Frame Situations (7) (9), (10), (13)

In situation (10), the decision block d7l5 indicates by a logic low that -BSY is asserted during the F frame. It is asserted by the block 704 of FIGURE 7A because the TO address station is busy. The decision block d714 has already indicated that the registers of the data transfer means of the external chip are full. The message is terminated in the F frame so that the state machine returns to the state [0].

If, however, decision block d715 idicates by a logic high that -BSY is not asserted during the F frame, the situations (7) and (9) are involved because they require the external data transfer registers to be full during the TO frame as decision block d714 has already indicated; but the situation (13) could also be involved because, in this situation, it does not matter whether the data transfer registers of the external chip are full or not. Because the transmission of (7), (9) and (13) are to be aborted at the end of the D₁ frame, the machine enters the state [15] during which, as has been explained in connection with decision block d708 of FIGURE 7A for the internal data transfer means, -BSY is asserted during the Dₗ frame.

### Return to Decision Block d714 Situations (6),(8),(11),(12),(13)

If decision block d714 indicates by a logic low that the data transfer registers of the external chip are empty, a block 728 loads the TO frame into the registers and the machine enters a state [8] where a block 730 loads the F frame into the registers and the assertion or non-assertion of -BSY and -ACK is determined by a decision block d716.

### -BSY, -ACK, Decision Block d716 State [8], F Frame Situations (6),(8),(11),(12),(13)

In situation (11), the decision block d716 indicates that both -BSY and -ACK are asserted during the F frame. The assertion of -BSY and -ACK means that the TO address of the message in the transmitter registers of the external chip is in the same mainframe but that it is busy. In order to avoid lockup of the external bus, the message is passed from the transmitter means of the external chip to its data transfer means via the internal bus. From there, it goes on arouna cne external loop until it arrives once more at the transmitter means of the same external chip in the mainframe which initiated the message. The transmission is tried again unless the associated microprocessor has aborted it.

In order to carry out situation (11), the machine enters a state [12] during which a block 732 asserts -BSY during the D₁ frame to keep other transmitter means and data transfer means synchronized, a block 734 loads the D₁ frame from the internal bus, and blocks 736 and 738 respectively set NA (which is the ninth bit of the F frame) and EA (which is the ninth bit of the ^{D}ₗ frame) to logic highs so as to indicate to the original sending station when the message reaches it in situation (13) that the station with the TO address was there but was busy.

The machine then enters the state [14] during which the message is loaded into the registers of the data transfer means of the external chip, as indicated by the blocks 718, 720 and 722 that were associated with one of the outputs of decision block d709 of FIGURE 7A.

In situations (8) and (12), the decision block d716 indicates that -BSY is not asserted and that -ACK is. This means that the station having the TO address is in the mainframe. The machine enters a state [13] during which the _{Dl} frame is loaded into a register of the data transfer means by a block 740 of the external chip, and EA is set to "1" by a block 742 so as to indicate that the TO address data transfer means can receive data. At this point, a decision block d717 checks -BSY during the Dₗ frame. If it is not asserted, the successful communication situation (8) is carried out by entering a state [14] during which, as shown in FIGURE 7A, the D₂ frame is loaded into the register of the data transfer means of the external chip. The CMD flag is set as is the RDRF flag. The message can now go around the external loop. The delivery of the D₂ frame to the register of the data transfer means of the internal chip was explained in the discussion of FIGURE 7A.

In situation (12), however, decision block d717 indicates that -BSY is asserted during D₁ by the block 714 of FIGURE 7A because the SAME SEND flag is set. The message is not loaded into the register of the data transfer means of the internal chip, but is loaded into the data transfer means of the external chip so that it can go around the external loop by proceeding to the state [14] after setting NA=1 by a block 743 to indicate that the message was not delivered to the TO address.

In situation (6), the decision block d716 indicates that neither -BSY nor -ACK are asserted during the F frame which means that the TO address is not in the mainframe. The state machine then proceeds to the state [9] illustrated in FIGURE 7A in which -BSY and -ACK are checked in the _{Dl} frame by.decision block d709. Since neither -BSY nor -ACK are asserted, the D₂ frame is loaded into a register of the data transfer means of the external chip.

In situation (13), the same procedure is followed except that -BSY is asserted during the _{Dl} frame so that decision block d709 causes the machine to go to the state [0].

### Code State Machine Flow Chart

In an internal chip,: the microprocessor selects the registers to be read from or written into, but in an external, chip, there is no microprocessor and these functions are performed by the code state machine. When the MF/-M bit is high, as it is on an external chip, the outputs of the two-bit code state machine are respectively connected to the RAl and RAO inputs of the data transfer means to select the register to be read and to the D09 and DO10 output pins that are respectively connected to the WA1 and WAO inputs of the transmitter means for the next external chip along the external bus XB in order to select a register to be written into that corresponds to the one being read from.

An additional task of the code state machine is performance of a handshake operation for each word of a message that is sent from the data transfer means of one external chip to the transmitter means of the next external chip along the external bus XB.

The manner in which these functions are performed will now be explained by reference to the flow chart of FIGURE 8. A state register 802 in FIGURE 8A contains the two bits for each of the states [01], [00], [10] and [11] as they occur. These bits are respectively applied to the inputs RAl and RAO of the data transfer means so as to select the register to be read from and via D09 and DO10 and the external bus X_{B} to WAl and WAO of the transmitter for the next mainframe so as to select a corresponding register to be written into.

Whenever the D₂ register is empty, an RDRF register flag is set low, a READY flag is set by a block 804 and the machine is placed in the state [01] so as to address the RFA (see FIGURE 9). While in this state, the logic state of RDRF is monitored by a decision block d801. The various signals referred to below are illustrated in FIGURE 8B. When data is written into the D₂ register, the output of decision block d801 goes high and a signal -DOCLK is sent via the external bus XB to the -WR input of the transmitter for the next mainframe along XB. If the fifo is ready to receive data, it asserts -FIORDY, and it is conveyed via the external bus XB to the -RD input of the data transfer means. This unasserts -DOCLK and causes the RFA frame to be written into the transmitter means via the external bus XB. The transmitter means responds by unasserting -FIORDY, thus indicating to the data transfer means that the MFA frame has been received, and clocks the state machine to its next state [00]. A block 806 indicates this interaction between -DOCLK and -FIORDY, but the interaction is more clearly shown by FIGURE 8B. In the state [00], a decision block d802 and a block 808 respectively carry out functions corresponding to those of the blocks d801 and 806, and place the TO frame on the external bus XB. The machine advances to the state [10] in which a decision block d803 and a block 810 respectively carry out functions corresponding to those of the blocks d801 and 806 so as to place the D1 frame on the external bus XB and advance the machine to the state [11]. In the state [11], a decision block d804 checks the logic states of RDRF and READY. The RDRF flag will be high because the D₂ frame is still in the DTD₂ register of the data transfer means and the READY flag will be high because it has not been cleared. In this circumstance, the previously, described interaction between -DOCLK and -FIORDY takes place as indicated by a block 812, the D₂ fram is placed on the external bus XB, and both -_{DO}C_{LK} and -FIORDY are unasserted. If the READY flag were not used so that the machine reverted to its initial state [01] at any time when R_{DR}F is low, the unassertion of -FIORDY could cause the machine to revert to its initial state [01] before RDRF becomes low, in which event the frame RFA could be sent a second time. To prevent this from occurring, the flag READY is cleared by a block 814 and the machine returns 'to the beginning of the state [11]. If RDRF is still high, decision block d804 causes a return to the beginning of the state [11]; but as soon as RDRF goes low, READY is set by the block 804 and the machine returns to the state [01].

### Details of Mainframe Connections

Reference is made to FIGURE 9 for a description of details of the mainframe MF_{A} that are not shown in FIGURE 2. Only the station S_{Al} will be described, but all other stations of FIGURE 2 are the same. Although not shown, the mainframes MF_{B} and _{MFC} of FIGURE 2 are assumed to be present.

As shown in FIGURE 2, the eight-bit wide I/O line is internally connected to the inputs DIO-DI7 of the external transmitter means TX_{Al} and to the outputs DO0-DO7 of the external data transfer means DT_{Al}. The latter are tri-stated when the microprocessor MP_{Al} is sending data to TX_{Al}.

The pins A2, Al and AO through which MP_{Al} selects the registers of the external transmitter means TX_{Al} to be written into or the registers of the external data transfer means DT_{Al} to be read are respectively internally connected to RA2 and WA2, RAl and WA1, and RAO and WAO. When the -WR pin is low, MP_{Al} writes into the registers of TX_{Al} selected by A2, Al and A0; and when the -RD pin is low, MP_{Al} reads from the registers of DT_{Al} selected by A2, Al and A0.

Both the external data transfer means DT_{Al} and the external transmitter means _{TXA1} communicate with the internal bus IB via pins DIBO-DIB8, the ninth bit DIB8 being for BW, EA, NA and CMD occurring during the frames TO, F, D₁ and D₂ respectively. As in FIGURE 2, the external data transfer means DT_{A1} is always connected to the internal bus IB so as to transfer any data thereon to the microprocessor MP_{A2} via its registers; but the external transmitter means TX_{Al} is only connected to the internal bus IB via a switch s_{Al} when it receives a -CTS command to send from the arbitrator _{AA} in response to its assertion of -RTS.

At the external chip XC_{A}, the nine lines of the internal bus IB are respectively connected to the pins DIBO-DIB8 that are connected to the data transfer means DT_{A} and the transmitter means _{TXA} in the same way as the pins of the same designation in the internal chip IC_{Al} are connected to DT_{Al} and TX_{Al}, i.e., ^{DT}A is always connected to I_{B} and _{TXA} is only connected to the internal bus IB via a switch s_{A} when _{TXA} receives a -CTS command to send from the arbitrator A_{A}·

An essential difference between the internal chip IC_{Al} and the external chip XC_{A} is the fact that the inputs DIO-DI7 to the external transmitter means TX_{A} and the outputs DOO-D07 of the external data transfer means: DT_{A} are respectively connected to separate pins as are WA2, WA1 and WA0 of TX_{A} and RA2, RA1 and RA0 of DT_{A}.

The external data transfer means DT_{A} transfers data from the internal bus IB to the external bus XB via pins DO0-DO7 and D08 and, as noted in FIGURE 2, the code bits supplied by the code state machine for the different registers of _{DTA} being read from appear at pins D09 and D010. Selection of the register is attained by connecting D09 and DO10 to the pins RA0 and RA1. As in FIGURE 2, the signal -DOCLK supplied by DT_{A} when data is written into its DTD₂ register goes to the next mainframe MF_{B} via the differential driver DFD_{A}; and the signal -FIORDY on the pin -RD as made in response to a signal -DOCLK from the previous mainframe MF_{C} also passes through the differential driver DFD_{A}. At this point, -FIORDY goes via a conductor of the external bus XB to the previous mainframe MF_{C}.

The manner in which these pins and signals are connected to the next external chip along the external bus XB (which would be XC_{B} in the system of FIGURE 2) is the same as the illustrated connections of XC_{C} to _{X}C_{A} that are shown in FIGURE 2. After passing through the differential receiver DFR_{A}, the leads from the pins DO0-DO7 of DT_{C} are respectively connected to the pins DIO-DI7 of the transmitter means _{TXA}; the lead from the pin DO8 of the data transfer means DT_{C} is connected to WA2; the code bits from pins D09 and DO10 of DT_{C} are respectively connected to WAO and WAl of TX_{A}; -DOCLK from DT_{C} is connected to the -WR pin of TX_{A}; and -FIORDY from DT_{B} is connected to the -RD pin of DT_{A}.

In order to enable a fifo in either of the transmitter means TX_{Al} or TX_{A}, a low logic level is applied to a pin labelled ENFIFO; and in order to clean the fifo, a low level is applied to a pin RSTFIO. In the internal transmitter means TX_{Al}, the enabling and clearing of the fifo is under the control of the microprocessor MP_{Al}; but in the external transmitter means TX_{A}, the fifo is always enabled in response to the low logic level that is applied to the ENFIFO pin. Clearing the fifo of the external transmitter means TX_{A} is effected whenever power is not applied to the mainframe on either side of MF_{A}, i.e., MF_{C} and MF_{B} in FIGURE 2. Each mainframe is provided with a power input such as indicated by the block 902 in FIGURE 9. The power input 902 provides a signal having a low logic level when power is not supplied to it and a high logic level when power is supplied to it. Thus, logic levels are conducted via the differential driver _{DFDA} to a conductor of the external bus XB that goes to the ^{RSTFIO} pin on the external transmitter means ^{TX}_{B}, in which event the signal is called IMFRDY, and to the RSTFIO pin of the external transmitter means TX_{C}, in which event the signal is called OMFRDY. Thus, the pin RS_{T}FIO of _{TXA} receives a signal IMFRDY from the power input (not shown) of MF_{C} and a signal OMFRDY from the power input (not shown) of _{MFB}. If either signal has a low logic level, indicating a lack of power, the fifo of TX_{A} is cleared.

When using the fifo of an internal transmitter means such as TX_{Al}, there are situations where the fifo must be bypassed. For example, if messages are stacked up in the fifo and the message currently in the registers of TX_{Al} is not being delivered for some reason, the microprocessor may wish to abort the message by setting a stop-transmit command XMIT in a control register in a manner to be described. In this situation, the command XMIT would be stacked up behind the other data in the fifo so as to have no effect and the station would be locked up because it can't transmit the current message. A similar situaion is encountered when the microprocessor MP_{A1} wishes to make a software reset by setting a SOFT RESET command in its control register because this does not clear the fifo. In either situation, the fifo must be disabled so that the command can bypass it and go directly to the command register.

Only one pin VDD is shown on each chip for the application of an operating potential, and only one pin GND is shown for connection to ground, but more may be used.

The power input 902 resets all of the chips when power comes on so as to set all the state machines to their starting state and perform the following functions that will subsequently be described. All interrupts of an interrupt register are disabled and a software reset bit in a control register and a TDRE bit indicating that the registers are empty are set in a status register. All other control register bits are made to have a logic low. In addition, the reset bit of each internal chip can be set by its microprocessor.

### Single Mainframe Operation

If neither the cable to the input of a transmitter means of a chip nor the cable to the output. of a data transfer means are connected, a signal ONEMF is asserted that connects internal conduction between the input and output; but if only one of the cables is connected, a warning signal IOERR is generated that turns on a warning light.

### Setting of the Ninth Bit D8

The BW bit of the TO frame is automatically set to unity when data is written into the TD₂ register of a transmitter means without data having been written into the TD₁ register. BW is set when TDRE is set and cleared when TD₁ is written into.

The EA bit is low when the F frame is first placed on the internal bus IB but is set high by the state machine of the data transfer means of the station in another mainframe to which the message is sent whether it is busy or not. This means that the TO address is present.

The NA bit is low when the Dₗ frame is first placed on the internal bus IB but is set high by the state machine of the data transfer means of the station in another mainframe if it is the station to which the message is sent and is busy.

The CMD bit is set by setting the SEND CMD bit of the control register.

### Registers

Reference is now made to FIGURES 10, 10A, 10B and 10C for a detailed description of the registers of an internal chip such as IC_{Al}. Also shown are the pins. Arrows on each pin show the direction of flow of data. The pins on the left side of FIGURE 10 are for communication with the associated microprocessor; the pins DIB are to be connected to the internal bus IB; and the pins -RTS, -CTS, -ACK, -BSY and CLK are to be connected as shown in FIGURES 2 ano 9. Each register has eight bits, and the logic levels of A2, Al and AO that are used to address it are indicated to the right of the register name. The associated microprocessor can only write into the registers in the column at the right that are in the transmitter means and read from the registers in the column at the left that are in the data transfer means, but the various state machines can read any of the registers as required.

When a microprocessor has a message to send, it asserts -WR, sets A2, Al and AO to "0", "0" and "0" respectively and loads the TO address of the station to which the message is to go into the TTO register. At a previous time, the microprocessor asserted -RST, set A2, Al and AO to "0", "0" and "1" respectively and loaded the address for the station in which the internal chip resides into the MFA register. Two words of the message may then be loaded into the TD₁ and _{TD2} registers. If there is only one word of data in the message, it is loaded into the TD₂ register.

The bits of the status register are as follows. The interrupt bit INT and the command bit CMD will be explained later. At any time when the DTD₂ register of a data transfer means has data in it, a RDRF bit is set. When the message has been delivered to the TO address and has returned along the external bus XB to the mainframe that originally sent it, a TDRE bit is set so as to permit a new message to be written into the registers TTO, MFA, TD₁ and _{TD2} of the transmitter means. If no station having the TO address is found, an NMAA bit is set; and if a message is aborted, an LTL bit will be set. The setting of LTL also sets TDRE.

The control register of FIGURE 10B that is in a transmitter means performs the following functions. If it is desired that a station only receive a message from the same station that it just received a message from, its microprocessor sets the SAME SEND bit in the control register. In performing this function, a state machine for the data transfer means of the station to which the message is being sent will compare the address in its RFA register that came with the last message received with the address in the F frame of the message currently on the internal bus IB. If they are not the same, the station will assert -BSY. If it is desired to put a certain command into effect, the microprocessor sets the SEND CMD bit. This will cause the CMD bit in the status register to be set and will set the CMD bit in the _{D2} frame high. Although this serves no function at the present time, it is available if needed. Should the microprocessor decide to abort a message, it sets the STOP XMIT bit; and if software reset is desired, the SOFT RESET bit is set. This prevents the internal chip from communicating with the internal bus IB and sets the TDRE bit in the status register at "1" so that the transmitter means may receive a new message. When a new message is received, TDRE goes to "0". No other bits in the various registers are affected. During a software reset, all registers can be changed in the normal fashion. It is the only condition in which the MFA register may be loaded. A software reset also disables a request IREQ that the microprocessor interrupt whatever else it is doing and proceed with functions related to the internal chip. Although a hardware reset effected by the power input 902 sets the SOFT RESET, it also forces all of the state machines to their initial states.

The purpose of the interrupt mask register is to determine those conditions under which the IREQ pin is to be made low so as to interrupt whatever the associated microprocessor is doing and cause it to perform functions for the chip. A logic low will appear on the IREQ pin whenever the interrupt bit INT of. the status register is set, and it will be set when any of the other bits of the status register equal "1" and the corresponding bit in the interrupt mask equals "1". The microprocessor can set any of the bits D6-DO to either a "1" or a "0" in the following manner. If the bit D7 equals "1", all of the bits D6-DO that have a "1" will be set; but if D7 equals "0", all of the bits D6-DO that have a "1" will be cleared. Therefore, if it is desired that IREQ have a low value so that the microprocessor is interrupted whenever either CMD or BW in the status register equals "1", the microprocessor writes the following bits into the interrupt mask register: 11001000. The bit D7 equals "1" so that D6 and D3 are set at "I". The bit D6 is the same bit that BW is on in the status register and D3 is the same bit that CMD is on in the status register. The bits with the "0"'s are not affected so that if they were previously set, they will remain so. If all bits in the interrupt mask register are to be cleared, the microprocessor writes the bits 01111111. A bit in the status register is masked or prevented from asserting a low on IREQ when the corresponding bit in the interrupt mask equals "0".

Because any bit in the interrupt mask register can be made equal to "0" or "1" without affecting the other bits, it is not necessary for the microprocessor to read this register or to keep it in memory so that the bits that are not to be affected can remain at their original values.

It should be noted that the data transfer means of an internal chip does not require a register for the TO address on the internal bus IB because the latter can be compared with the station address in the MFA register.- In an external chip, however, an additional register RTO shown in dashed lines in FIGURE 10 is required so that the TO address can be placed on the external bus XB. But inasmuch as an external chip is not associated with a microprocessor, it does not require an interrupt mask or a control register.

### Internal Chip Block Diagram

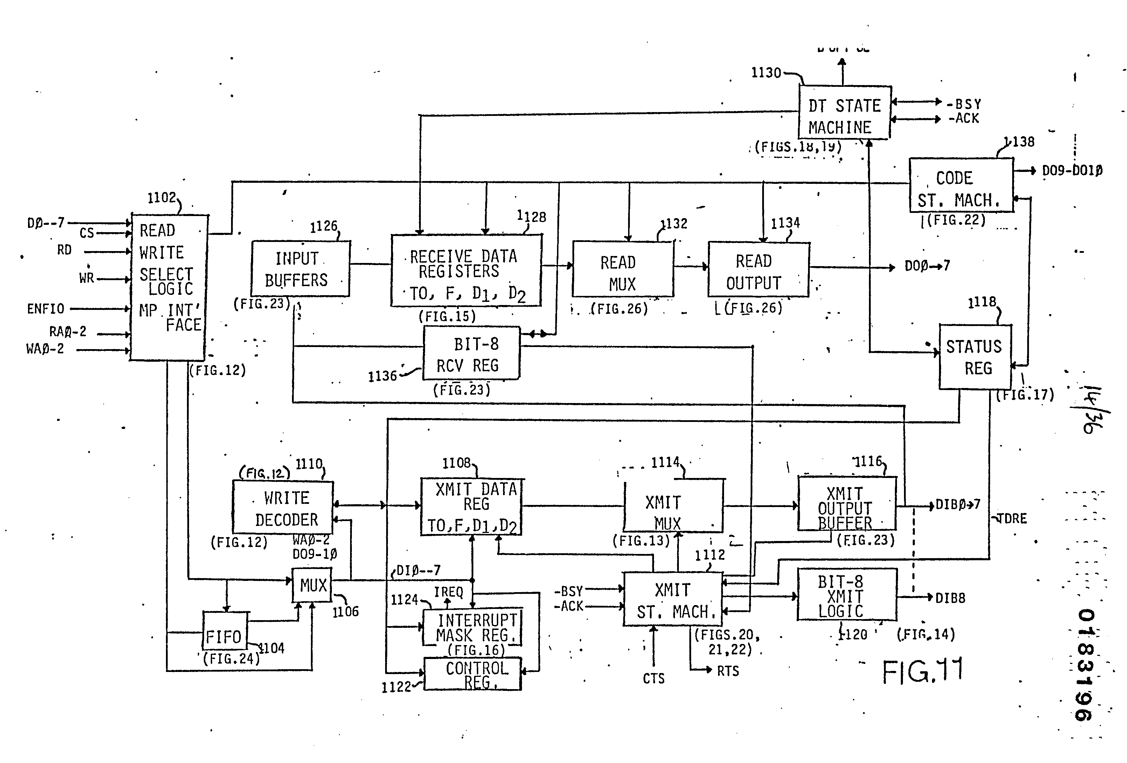

In view of the fact that the internal and external chips have so much in common; both are illustrated by the block diagram of FIGURE 11. The internal chip will be described first, and then the differences of the external chip wil be described. The purpose of FIGURE 11 is to identify the major components of the chips, to show in a general way the communications between them, and to identify the subsequent figures of the drawings that relate to each component. The operation of the chips is explained with the aid of the flow charts for the various state machines.

In an internal chip, the interface with its microprocessor is provided by a block 1102 containing the read-write select-logic circuits shown in FIGURE 12. The microprocessor provides the data inputs DO-D7 and inputs CS for indicating that the chip is selected for operation, -RD to indicate that the microprocessor is to read from its registers, and RAO-RA2 to indicate the registers to be read from.

Part of the block diagram relates to the transmitter means of a chip and part to the data transfer means. The transmitter means is considered first. When a station has a message to send or has instructions to give on the eight input lines DIO-DI7, it asserts -WR and a combination of WAO-WA2 (as shown in FIGURE 9) to select the register to be written into. The bits DIO-DI7 and WAO-WA2 may go directly to the registers or indirectly via a fifo 1104 that is illustrated in FIGURE 24. If the fifo 1104 is to be used, the microprocessor asserts -ENFIFO. Application of this signal to the fifo 1104 and a multiplexer 1106 having the circuits illustrated in FIGURE 25 causes the fifo 1104 to accept the information and the multiplexer 1106 to connect its input to the output of the fifo. If -ENFIFO is not asserted, the input of the multiplexer 1106 is directly connected to receive DIO-DI7 and WAO-WA2 so that the fifo 1104 is bypassed.

When a message is being sent, the bits DIO-DI7 at the output of the multiplexer 1106 successively represent the TO address, the FROM address and data words D₁ and _{D2}. The lines DIO-DI7 are connected to the input of a block 1108 containing the transmitter registers illustrated in FIGURE 13 and are written into the appropriate register under the control of a write decoder 1110 illustrated in FIGURE 12 that deciphers the WAO-WA2 bits appearing at the output of the multiplexer 1106. When the _{TD2} register is written into, a transmitter state machine 1112 (illustrated by the flow charts of FIGURES 6A and 6B and the schematic circuit diagrams of FIGURES 20, 21 and 22) asserts an -RTS signal on its individual line to the arbitrator of the mainframe in wnich the chip resides; and when the arbitrator asserts -CTS on the individual line to the state machine asserting the -RTS, the state machine 1112 causes a multiplexer 1114 having the circuits illustrated in FIGURE 13 to transmit the TO, F, D₁ and D₂ frames in sequence to an electrical output buffer 1116 having the circuits shown in FIGURE 23. The output of the buffer 1116 is connected to the internal bus IB of the mainframe. The bits DIO-DI7 are now termed DIBO-DIB7. As can be seen from the flow chart of FIGURE 6A, the transmitter state machine 1112 requires information as to the assertion or non-assertion of -BSY and -ACK on the control lines for the mainframe.

Whenever the sending station has received information returned to it around the external bus XB to the effect that the message has been successfully delivered; the message could not be delivered and is lost; or there has been a software reset, the state machine 1112 sets a TDRE bit in a status register 1118 having the circuits illustrated in FIGURE 17. Conversely, when the empty transmitter data register receives data, the TDRE bit in the status register 1118 is cleared.

It will be recalled that a ninth bit is added to the eight bits from the microprocessor to form the TO, F, Dₗ and D₂ frames before they are put on the internal bus IB. The ninth bit is actually output to the internal bus IB by a bit-8 transmit logic contained in a block 1120 and having circuits shown in FIGURE 14. If the chip is the one that originated the message, the ninth bit for the TO frame is referred to as BW and is set by the transmitter state machine 1112 to a high or low level depending on whether the message received from the microprocessor had a D₁ word or not; and the setting of the ninth bit for the D₂ frame depends on whether the SEND CMD bit has been set in a control register 1122 to be described. The ninth bits for the F and _{Dl} frames, which are respectively called EA and NA, are at a low level. The bits for EA and NA are controlled by the state machine for the data transfer means of an external chip, as shown in FIGURE 7B, and will be discussed below.

In order that a microprocessor may send instructions, e.g., stop transmit or set the conditions for its interruption by the assertion of a signal IREQ, the DIO-DI7 lines from the multiplexer 1106 are respectively connected to the inputs of a control register 1122 and an interrupt mask register 1124, the circuits for both of which are shown in FIGURE 16. These registers can be written into whenever the write decoder 1110 receives the proper values of WAO-WA2.

The components of the block diagram of FIGURE 11 that are involved with the data transfer means of an internal chip are as follows. As previously noted, the data transfer means are always connected to the internal bus IB. Electrical isolation buffers 1126 having the circuits shown in FIGURE 23 are connected between the internal bus IB and the receive-data registers shown in a block 1128. The circuits for the latter are shown in FIGURE 15. As the frames TO, ^{F, D}ₗ and D₂ succcessively come along the internal bus IB, they are stored in appropriate registers of the block 1128 under the control of a state machine 1130, the function of which is explained in connection with the flow chart of FIGURE 7A and the circuits for which are shown in FIGURES 18 and 19. If tne registers of the block 1128 are full so that they cannot receive data from the internal bus IB., the register 1128 informs the state machine 1130 of this fact, and it sets the D5 bit (RDRF) in the status register 1118. The D5 bit is cleared when the microprocessor reads data from the registers.

When a microprocessor reads data from the registers 1128, it sends appropriate sequences of RAO-RA2 to a read multiplexer 1132 and removes the tri-state condition of read output 1134. The circuits for both the read multiplexer 1132 and the read output 1134 are shown in FIGURE 26.

The bit D8, which is the ninth bit of a message on the internal bus IB that respectively represents BW, EA, NA and CMD in the TO, F, D₁ and D₂ frames, is applied to a bit-8 data transfer means register 1136 having the circuits shown in FIGURE 23. This bit can be read by the microprocessor and is also supplied to the transmitter state machine 1112 so that it can determine what has happened to the message it sent.

### External Chip Block Diagram

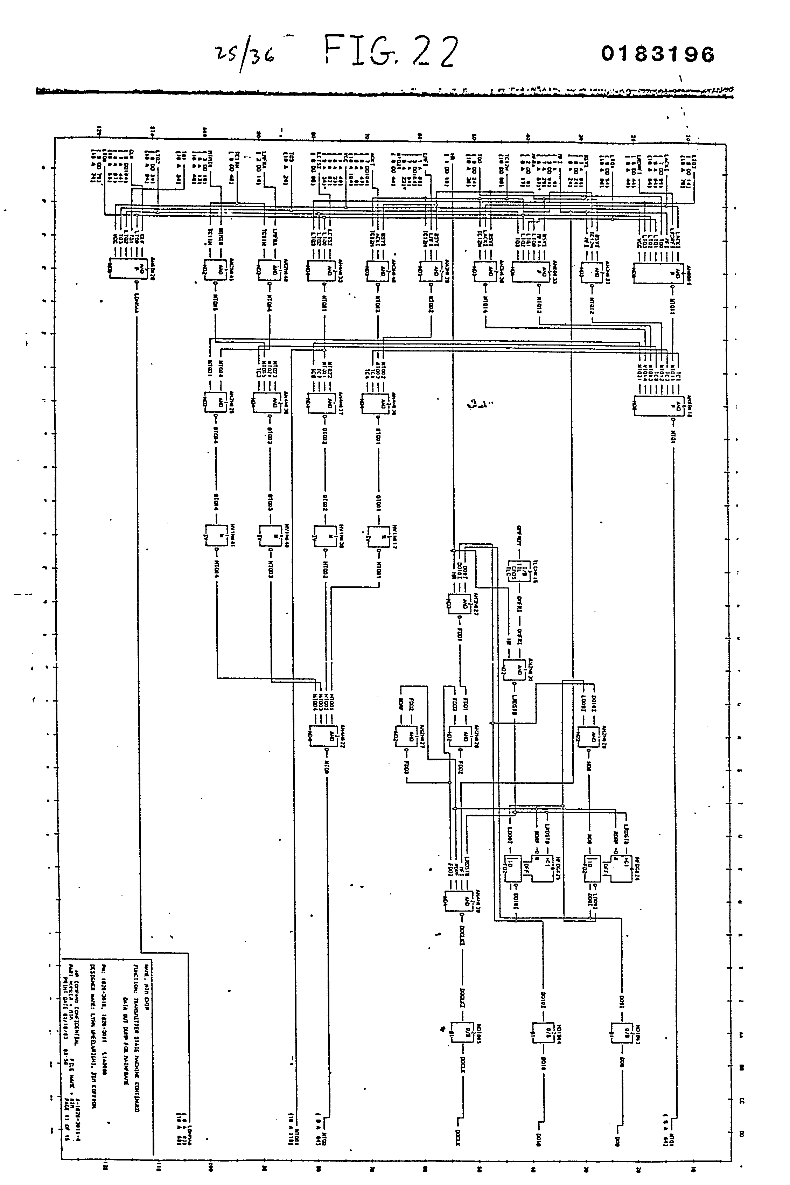

Whereas most of the components of an external chip are the same as those of FIGURE 11, it has a code state machine 1138 having the circuits shown in FIGURE 22 that provides outputs D09 and DO10 that are connected to RAO and RAl respectively for the purpose of identifying the registers of the block 1128 that are being read from so as to place the data stored therein on conductors of the external bus XB. These same conductors are connected to the WAO and WAl inputs of the block 1102 of the next external chip around the loop formed by the external bus XB, and the ninth bit DO8 is connected to WA2. Another difference is that the circuits of the block 1134 are not tri-stated so that data can flow to the external bus X_{B}.

Whereas the stations of the embodiment described have a microprocessor for each station, it is to be understood that any type of controller can be used and that a single controller could provide all the required functions. Furthermore, although a series internal bus could be used in practicing the invention, it would slow down the rate of transmission. In addition, each of the transmitter means and data transfer means, both internal and external, has its own state machine, but a single state machine could be used, if desired. The mainframes described are just one way of assembling a complete group of stations.

## Claims

1. A first group of stations, comprising
a bus to which reception means in each station is connected,
arbitration means for sequentially enabling said stations to place a message having a predetermined maximum number of digital words on said bus,
means for causing a station so enabled to place a digital word on said bus representing the address of the station to which a message it has to transmit is to go,
means for causing a station having the address placed on said bus to assert a first signal,
means for causing a station having the address placed on said bus to assert a second signal if it is unable to receive a message,
means for completing the delivery of the message to the addressed station if the first signal is asserted and the second I is not, and
means for causing the message to remain in the enabled station if the first and second signals are asserted.

2. A group of stations as set forth in Claim 1, further comprising
means for causing said enabled station to place its own address on said bus,
external data transfer means for said group that transfers to an output thereof a message that has been placed on said bus when said data transfer means is operable and is enabled,
means for enabling said data transfer means when operable and when said first signal is not asserted,
means for causing said data transfer means when enabled and operable to provide bits at its output having combinations of logic levels that indicate whether the addressed station is in the group and whether or not it can receive a message,
external transmitter means for placing on said internal bus a message and extra bits that may be applied to its input, said transmitter being enabled to place a message on said bus in said sequence by said arbitration means,
means including an external bus for coupling the output of said data transfer means to the input of said transmitter means, and
means for preparing said enabled station to receive another message when the logic levels of said extra bits indicate that the addressed station is not in said first group.

3. A group of stations as set forth in Claim 2 wherein said means for coupling the output of said data transfer means to the input of said transmitter means includes one or more additional groups of stations like said first group, wherein
the output of the external data transfer means of each group is coupled to the external transmitter means of the next group and the output of the external'data transfer means of the last additional group is coupled to the input of the transmitter means of the first group,
each of said groups of stations having means for preparing an enabled station to receive a new message to send if the extra bits indicate that the message has been delivered and means for causing the enabled station to retain the message if the extra bits indicate that the addressed station exists but cannot receive a mesage.

4. A group of stations as set forth in any of Claims 1, 2 or 3 in which the stations enabled in the sequenc eonly include those having a message to send.

5. A group of stations as set forth in any of Claims 1, 2 or 3 in which a complete message is comprised of a first word representing the address of the station to which the message is to go, a second word representing the address of the enabled station, and at least one word representing data, there being an extra bit associated with the first word indicating by its logic level whether there is one data word or two.

6. A bus system, comprising.
an internal bus,
a plurality of stations, each having an address and each having a transmitter means having registers that are normally not connected to said bus, a data transfer means having registers connected to said bus, a controller, and means for loading a message into the registers of the transmitter means and receiving messages from the data transfer means,
the messages loaded into the registers of a transmitter means having a plurality of digital words TO and FROM that respectively represent the address of the station to which the message is sent and the address of the station in which the transmitter means resides, and data words,
said transmitter means having means for asserting a signal when a message is stored in its registers, and
arbitrating means responsive to the signal asserted by the transmitter means in said stations for connecting only those transmitter means asserting a signal to said bus in sequence.

7. A bus system, comprising
an internal bus,
a plurality of stations, each having an address and each having a transmitter means having registers that are normally not connected to said bus, a data transfer means having registers connected to said bus, a controller, and means for loading a message into the registers of the transmitter means and receiving messages from the data transfer means,
the messages loaded into the registers of a transmitter means having a plurality of digital words TO and FROM that respectively represent the address of the station to which the message is sent and the address of the station in which the transmitter means resides, and data words,
said transmitter means having means for asserting a signal when a message is stored in its registers,
arbitrating means responsive to the signal asserted by. the transmitter means in said stations for connecting only those transmitter means asserting a signal to said internal bus in sequence,
means for causing each transmitter means when it is connected to said bus to place said TO and FROM words on said bus,
a first control line,
means for causing each of said stations to assert a first signal on said first control line if the TO word corresponds to the address of the station,
a second control line, (Continued on Next Page) Claim 7 (Continued)
means for causing the data transfer means in the station asserting the said first signal to assert a second signal on said second control line if its registers are not empty, and
means in the transmitter means connected to said internal bus for causing it to place a first data word on the internal bus if the first signal is asserted and the second is not.

8. A bus system as set forth in Claim 7 wherein
the controller in the station including said data transfer means can instruct said data transfer means to only receive a message from the same station from which it received its last message,
means for comparing the-address of the station in which the data transfer means asserts a signal on said first control line,
means for asserting a signal on said second control line if the addresses are not the same, and
means in said transmitter means for placing a second data word on the internal bus if the addresses are the same and for terminating the transmission if they are not.

9. A bus system as set forth in Claim 8 provided with
an external transmitter means having registers and means for sending a signal to said arbitrator when a message is contained in said registers,
said arbitrating means also being responsive to said latter signal and having means for connecting said external transmitter means to said bus in said sequence,
an external data transfer means having registers connected to said bus, means for asserting a signal on said second control line if its registers are full, means for loading all message words into its registers if they are empty and the external transmitter means has been connected to the bus.

10. A bus system for conveying a message from one station in a first group to another station in the same group, said bus system having
a group of stations, each having a transmitter means and a data transfer means,
a internal bus for said group that is normally connected to each of said data transfer means and normally not connected to said transmitter means,
means for conveying messages to said transmitter means when desired, said messages being comprised of the words TO and FROM that respectively represent the address of the station to which the message is to be delivered and the address of the (Continued on Next Page) Claim 10 (Continued) station transmitting the message, and at least one data word,
means for causing each of said stations to assert a signal when it is ready to transmit a message,
arbitrating means responsive to said signals for _{con}- necting said transmitters to said internal bus in a sequence,
means for causing a transmitter that is connected to said bus to place the TO and FROM words on said bus in the order named,
a first control line,
means for causing the station having the ID address to place a signal on said first control line,
a second control line,
means for causing the station having the ID address to place a signal on said second control line if it cranot receive the message, and
means for causing the transmitter that in commected to said bus to place the data words of the message or said bus if a signal appears on said first control line and no signal appears on said second control line.

11. A bus system as set forth in Claim 10 having the following additional components so as to form a mainframe,
an external data transfer means connected to said internal bus,
means for causing said data transfer means to assert a signal on said second control line if it cannot receive a message
means for causing the transmitter that is connected to said bus to place all data words on the bus if no signal appears on either said first or second control lines,
means for respectively adding first and second bits to two words of the message on said bus,
means for causing said data transfer means to load the message and added bits thus placed on said bus intc registers thereof,
means for causing the first added bit in a register of said external data.transfer means to have one logic level if a signal appears on said first control line so as to indicate that the station having the TO address is in the group and to have the opposite logic level if no signal appears on said first control line so as to indicate that the station having the TO address is not in the group,
means for causing the second added bit in a register of an external data transfer means to have one logic level if a signal appears on said second control line so as to indicate that the station having the TO address cannot receive a message and to have the opposite logic level if no signal appears on said second control line so as to indicate that the station having the TO (Continued on Next Page) Claim 11 (Continued) address can receive the message,
an external transmitter having registers therein,
means including an external bus for conveying the message and added first and second bits from the registers of said data transfer means to the registers of said transmitter,
means for causing said latter transmitter to assert a signal when it is ready to send the message and added bits,
said arbitrating means being responsive to said latter signal to connect said external transmitter to said internal bus in said sequence, and
means for preparing the station that placed the message on the bus for the reception of a new message to send if the logic level of the first added bit indicates that the station having the TO address is present and the logic level of the second added bit indicates that the station having the TO address was ready to receive data.

12. A bus system as set forth in Claim 11 wherein said mainframe includes a fifo buffer connected between the external bus and the input to said external transmitter, and wherein
means are provided for determining whether the said fifo buffer is ready to accept data before the message and external bits in the registers of the said external data transfer means are loaded onto said external bus.

13. A bus system as set forth in Claim 12 wherein a number of mainframes such as described therein are inserted in said external bus with their fifo buffers coupled via the external bus to the external data transfer means of the preceding mainframe and with their external data transfer means coupled via the external bus to the fifa.buffer-of the succeeding mainframe.
